(19) Europäisches Patentamt
European Patent Office
Office européen des brevets

(11) EP 4 762 928 A1

(12) EUROPÄISCHE PATENTANMELDUNG

(43) Veröffentlichungstag:
**24.06.2026 Patentblatt 2026/26**

(21) Anmeldenummer: **24222110.9**

(22) Anmeldetag: **20.12.2024**

(51) Internationale Patentklassifikation (IPC):
***A01N 43/80*** *(2006.01)* ***A01N 47/06*** *(2006.01)*
***A01P 13/00*** *(2006.01)*

(52) Gemeinsame Patentklassifikation (CPC):
(C-Sets verfügbar)
**A01N 43/80; A01P 13/00** (Forts.)

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Bayer Aktiengesellschaft**
**51373 Leverkusen (DE)**

(72) Erfinder: **Die Erfindernennung liegt noch nicht vor**

(74) Vertreter: **BIP Patents**
**c/o Bayer Intellectual Property GmbH**
**Alfred-Nobel-Straße 50**
**40789 Monheim am Rhein (DE)**

(54) **HERBIZIDE ZUSAMMENSETZUNGEN**

(57) Gegenstand der vorliegenden Erfindung sind Zusammensetzungen enthaltend herbizid wirksame Verbindungen (A) und (B), wobei (A) für eine oder mehrere Verbindungen der allgemeinen Formel (1) oder deren agrochemisch verträglichen Salze [Komponente (A)] steht,

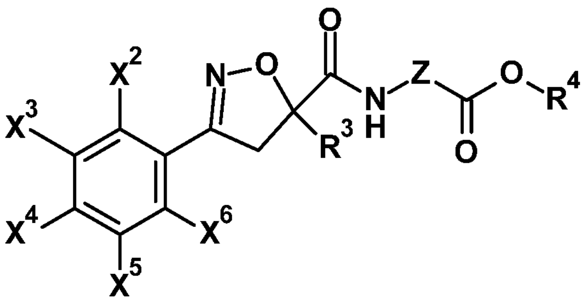

(I)

und (B) für ein oder mehreren Herbizide [Komponente (B)] steht. Die Anmeldung betrifft ferner ein Verfahren sowie die Verwendung der erfindungsgemäßen herbiziden Zusammensetzung zur Bekämpfung von Schadpflanzen oder zur Wachstumsregulierung.

EP 4 762 928 A1

(52) Gemeinsame Patentklassifikation (CPC): (Forts.)

C-Sets
**A01N 43/80, A01N 47/06, A01N 35/06**

## Beschreibung

Die Erfindung liegt auf dem technischen Gebiet der Pflanzenschutzmittel, die gegen unerwünschten Pflanzenwuchs in Nichtkulturland, zur Saatvorbereitung oder in Pflanzenkulturen eingesetzt werden können und als Herbizidwirkstoffe eine Kombination von mindestens zwei Herbiziden enthalten, wobei die Zusammensetzungen herbizid wirksame Verbindungen (A) und (B) enthält, worin (A) eine oder mehrere Verbindungen der allgemeinen Formel (I) oder deren agrochemisch verträglichen Salze [Herbizide (A) bzw. Komponente (A)] und (B) ein oder mehrere Herbizide (Komponente B) bedeutet.

Verbindungen aus der Strukturklasse der 3-Phenylisoxazolin-5-carboxamide sind als Herbizide bekannt (siehe z. B. WO2012/130798 A, WO2018/228985 A1 and WO2019/145245 A1). Die Verbindungen sind gegen ein breites Spektrum von Schadpflanzen im Vorauflauf wie auch im Nachauflaufapplikationsverfahren wirksam, wobei ein nichtselektiver Einsatz zur Bekämpfung von unerwünschtem Pflanzenwuchs oder ein selektiver Einsatz in Pflanzenkulturen möglich ist.

Verbindungen aus der Strukturklasse der substituierten cyclischen Dione sind als Herbizide bekannt (siehe z. B. WO2015/197468). Die Verbindungen sind gegen ein breites Spektrum von Schadpflanzen im Vorauflauf wie auch im Nachauflaufapplikationsverfahren wirksam, wobei ein nichtselektiver Einsatz zur Bekämpfung von unerwünschtem Pflanzenwuchs oder ein selektiver Einsatz in Pflanzenkulturen möglich ist.

Die Wirksamkeit dieser Herbizide gegen Schadpflanzen liegt auf einem hohen Niveau, hängt jedoch im Allgemeinen von der Aufwandmenge, der jeweiligen Zubereitungsform, dem Schadpflanzenspektrum, den jeweils zu bekämpfenden Schadpflanzen, den Klima- und Bodenverhältnissen, etc. ab. Ein weiteres Kriterium ist die Dauer der Wirkung bzw. die Abbaugeschwindigkeit des Herbizids. Zu berücksichtigen sind gegebenenfalls auch Veränderungen in der Empfindlichkeit von Schadpflanzen, die bei längerer Anwendung der Herbizide oder geographisch begrenzt auftreten können. Wirkungsverluste bei einzelnen Pflanzen lassen sich nur bedingt durch höhere Aufwandmengen der Herbizide ausgleichen, z. B. weil damit häufig die Selektivität der Herbizide verschlechtert wird oder eine Wirkungsverbesserung auch bei höherer Aufwandmenge nicht eintritt. Generell besteht Bedarf an Methoden, die Herbizidwirkung mit geringerer Aufwandmenge an Wirkstoffen zu erreichen. Eine geringere Aufwandmenge reduziert nicht nur die für die Applikation erforderliche Menge eines Wirkstoffs, sondern reduziert in der Regel auch die Menge an nötigen Formulierungshilfsmitteln. Beides verringert den wirtschaftlichen Aufwand und verbessert die ökologische Verträglichkeit der Herbizidbehandlung.

Eine Möglichkeit zur Verbesserung des Anwendungsprofils eines Herbizids kann in der Kombination des Wirkstoffs mit einem oder mehreren anderen Wirkstoffen bestehen, welche die gewünschten zusätzlichen Eigenschaften beisteuern. Allerdings treten bei der kombinierten Anwendung mehrerer Wirkstoffe nicht selten Phänomene der physikalischen und biologischen Unverträglichkeit auf, z. B. mangelnde Stabilität in einer Coformulierung, Zersetzung eines Wirkstoffes bzw. Antagonismus der Wirkstoffe. Erwünscht dagegen sind Kombinationen von Wirkstoffen mit günstigem Wirkungsprofil, hoher Stabilität und möglichst unerwartet synergistisch verstärkter Wirkung, welche eine Reduzierung der Aufwandmenge im Vergleich zur Einzelapplikation der zu kombinierende Wirkstoffe erlaubt.

Die Aufgabe der vorliegenden Erfindung besteht in der Bereitstellung alternativer oder vorteilhafter herbizider Zusammensetzungen, welche ein gutes biologisches Anwendungsprofil und möglichst mehrere der oben genannten gewünschten günstigen Eigenschaften aufweisen.

Überraschenderweise wurde nun gefunden, dass diese Aufgabe durch Verwendung einer Zusammensetzung enthaltend herbizid wirksame Verbindungen (A) und (B) gelöst werden kann, wobei (A) eine oder mehrere Verbindungen der allgemeinen Formel (I) oder deren agrochemisch verträglichen Salze [Komponente (A)] bedeutet und (B) eine oder mehrere Verbindungen der allgemeinen Formel (II) oder deren agrochemisch verträglichen Salze [Komponente (B)] bedeutet. Die erfindungsgemäßen Zusammensetzungen wirken in besonders günstiger Weise zusammen, z.B. wenn sie zur Bekämpfung von unerwünschtem Pflanzenwuchs in Kulturpflanzen wie Weizen (Hart- und Weichweizen), Mais, Soja, Zuckerrübe, Zuckerrohr, Baumwolle, Reis, Bohnen (wie beispielsweise Buschbohne und Pferdebohne), Flachs, Gerste, Hafer, Roggen, Triticale, Kartoffel und Hirse (Sorghum), Nichtkulturland Weideland und Grün-/Rasenflächen und Plantagenkulturen eingesetzt werden.

Gegenstand der vorliegenden Erfindung sind somit Zusammensetzungen enthaltend herbizid wirksame Verbindungen (A) und (B), wobei (A) für eine oder mehrere Verbindungen der allgemeinen Formel (I) oder deren agrochemisch verträglichen Salze [Komponente (A)] steht,

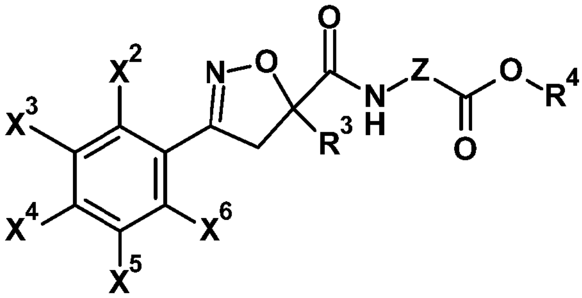

(I)

worin

| | |
|---|---|
| $R^3$ | $(C_1-C_3)$-Alkyl, $(C_1-C_3)$-Alkoxy oder $(C_2-C_3)$-Alkenyl bedeutet; |
| $R^4$ | Wasserstoff oder $(C_1-C_6)$-Alkyl bedeutet; |
| Z | für eine Gruppe Z-1 oder Z-2 steht, wobei Z-1 und Z-2 folgende Bedeutung haben: |

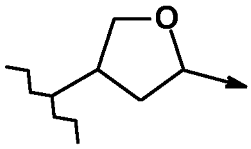

Z-1

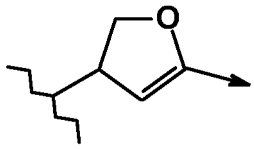

Z-2

worin der Pfeil jeweils für eine Bindung zur Gruppe C=O der Formel (I) steht;

| | |
|---|---|
| $X^2$, $X^4$ und $X^6$ | unabhängig voneinander Wasserstoff oder Fluor bedeuten; |
| $X^3$ und $X^5$ | unabhängig voneinander Wasserstoff, Fluor oder Chlor, bedeuten; |

und

(B) für eine oder mehrere Verbindungen der allgemeinen Formel (II) oder deren agrochemisch verträglichen Salze [Komponente (B)] steht,

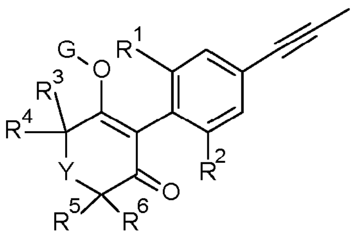

(II),

worin

$R^1$ für $(C_1-C_3)$-Alkoxy, $(C_1-C_2)$-Alkoxy-$(C_1-C_3)$-alkoxy, $(C_1-C_2)$-Fluoralkoxy, Ethyl, n-Propyl, n-Butyl, Cyclopropyl oder Ethinyl steht,

$R^2$ für Wasserstoff, Ethyl, n-Propyl, Cyclopropyl, Vinyl, Ethinyl, $(C_1-C_3)$-Alkoxy, $(C_1-C_3)$-Fluoroalkyl, $(C_1-C_2)$-Fluoralkoxy, $(C_1-C_2)$-Alkoxy-$(C_1-C_3)$-alkoxy- oder $C_1$-Fluoralkoxy-$(C_1-C_3)$-alkoxy-; unter der Maßgabe, dass $R^2$ für Wasserstoff, Ethyl, n-Propyl, Cyclopropyl, Vinyl oder Ethinyl steht, falls $R^1$ für Ethyl, n-Propyl, n-Butyl, Cyclopropyl oder Ethinyl steht,

$R^3$, $R^4$, $R^5$ und $R^6$ unabhängig voneinander für Wasserstoff, $(C_1-C_5)$-Alkyl, $(C_2-C_4)$-Alkenyl, $(C_2-C_4)$-Alkinyl, $(C_1-C_2)$-Fluoralkyl, $(C_1-C_3)$-Alkoxy-$(C_1-C_3)$-alkyl, $(C_1-C_3)$-Alkylthio-$(C_1-C_3)$-alkyl, $(C_1-C_3)$-Alkylsulfinyl-$(C_1-C_3)$-alkyl, $(C_1-C_3)$-Alkylsulfonyl-$(C_1-C_3)$-alkyl, $(C_3-C_4)$-Cycloalkyl stehen oder für einen unsubstituierten 4, 5 oder 6-gliedrigen monocyclischen Heterocyclylring stehen, der ein Ringheteroatom trägt, das aus der Gruppe Sauerstoff, Schwefel oder Stickstoff ausgewählt ist und der innerhalb der Heterocyclylgruppe mit einem Ringkohlenstoffatom angebunden ist (bevorzugt Tetrahydrofuranyl wie z.B. Tetrahydrofuran-3-yl, oder Tetrahydropyranyl wie z.B. Tetrahydropyran-4-yl), unter der Maßgabe, dass nicht mehr als einer der Reste aus der Gruppe $R^3$, R4, $R^5$ and $R^6$ für Alkenyl, Alkinyl, Alkoxyalkyl, Alkylthioalkyl, Alkylsulfinylalkyl, Alkylsulfonylalkyl, Cycloalkyl oder Heterocyclyl steht,

oder $R^3$ und $R^4$ zusammen eine Gruppe $-(CH_2)_{n1}-$ oder $-(CH_2)_{n2}-X^1-(CH_2)_{n3}-$ bilden und $R^5$ und $R^6$ wie oben definiert sind,

oder $R^5$ und $R^6$ zusammen eine Gruppe $-(CH_2)_{n1}-$ oder $-(CH_2)_{n2}-X^1-(CH_2)_{n3}-$ bilden und $R^3$ und $R^4$ wie oben definiert sind,

wobei $X^1$ für O (Sauerstoff), S (Schwefel), S(=O), $S(=O)_2$, NH, N(($C_1$-$C_2$)-Alkyl), N(($C_1$-$C_2$)-Alkoxy), C(H)(($C_1$-$C_2$)-Alkyl), C(($C_1$-$C_2$)-Alkyl)$_2$ oder C(H)(($C_1$-$C_2$)-Alkoxy) steht;

n1 für 2, 3, 4 oder 5 steht,

n2 und n3 unabhängig voneinander für 1, 2 oder 3 stehen unter der Voraussetzung, dass n2 + n3 gleich 2, 3 oder 4 ist,

oder $R^4$ und $R^5$ zusammen eine Gruppe $-(CH_2)_{n4}-$ oder $-(CH_2)_{n5}-C(R^{7a})(R^{7b})-(CH_2)_{n6}-$ oder - $C(R^{7c})=C(R^{7d})$- bilden, worin $R^{7a}$ für ($C_1$-$C_2$)-Alkyl oder ($C_1$-$C_2$)-Alkoxy steht; und $R^{7b}$ für Wasserstoff oder ($C_1$-$C_2$)-Alkyl steht unter der Voraussetzung, dass $R^{7b}$ für Wasserstoff steht, wenn $R^{7a}$ für ($C_1$-$C_2$)-Alkoxy steht und worin n4 für 1, 2 oder 3 steht und n5 und n6 unabhängig voneinander für 0, 1 or 2 stehen unter der Maßgabe, dass n5 + n6 gleich 0, 1 oder 2 ist und worin $R^{7c}$ und $R^{7d}$ unabhängig voneinander für Wasserstoff oder ($C_1$-$C_2$)-Alkyl stehen,

Y für O (Sauerstoff), S (Schwefel), S(=O), $S(=O)_2$, N(($C_1$-$C_2$)-Alkyl), N(($C_1$-$C_2$)-Alkoxy), C(=O), eine Gruppe $CR^8R^9$ oder $-CR^{10}R^{11}CR^{12}R^{13}-$ steht,

$R^8$ und $R^9$ unabhängig voneinander für Wasserstoff, ($C_1$-$C_6$)-Alkyl, ($C_2$-$C_4$)-Alkenyl, ($C_2$-$C_4$)-Alkinyl, ($C_1$-$C_2$)-Fluoralkyl, ($C_1$-$C_3$)-Alkoxy-($C_1$-$C_3$)-alkyl, ($C_1$-$C_3$)-Alkylthio-($C_1$-$C_3$)-alkyl, ($C_1$-$C_3$)Alkylsulfinyl-($C_1$-$C_3$)-alkyl, ($C_1$-$C_3$)-Alkylsulfonyl-($C_1$-$C_3$)-alkyl, für ($C_3$-$C_6$)-Cycloalkyl oder für substituiertes ($C_3$-$C_6$)-Cycloalkyl, das unabhängig voneinander durch ein oder zwei ($C_1$-$C_3$)-Alkyl- oder ($C_1$-$C_2$)-Fluoralkylgruppen substituiert ist oder für ($C_4$-$C_6$)-Cycloalkyl, in dem eine $CH_2$-Gruppe gegebenenfalls durch O (Sauerstoff), S (Schwefel), S(=O), $S(=O)_2$, NH, N(($C_1$-$C_3$)-Alkyl), N(($C_1$-$C_2$)-Alkoxy), N(($C_1$-$C_2$)-Fluoralkyl), N[C(=O)-($C_1$-$C_3$)-Alkyl], N[C(=O)-($C_1$-$C_2$)-Fluoralkyl] substituiert ist oder für ($C_3$-$C_6$)-Cycloalkyl, das durch eine ($C_1$-$C_3$)-Alkoxygruppe substituiert und gegebenenfalls zusätzlich durch eine ($C_1$-$C_2$)-Alkylgruppe substituiert ist; oder für ($C_5$-$C_6$)-Cycloalkenyl oder ($C_5$-$C_6$)-Cycloalkenyl, das ein oder zwei ($C_1$-$C_3$)-Alkylsubstituenten trägt oder für ($C_3$-$C_6$)-Cycloalkyl-($C_1$-$C_2$)-alkyl oder für substituiertes ($C_3$-$C_6$)-Cycloalkyl-($C_1$-$C_2$)-alkyl, das unabhängig voneinander durch ein oder zwei ($C_1$-$C_3$)-Alkyl- oder ($C_1$-$C_2$)-Fluoralkylgruppen substituiert ist oder für ($C_4$-$C_6$)-Cycloalkyl-($C_1$-$C_2$)-alkyl, in dem eine $CH_2$-Gruppe im Ring gegebenenfalls durch O (Sauerstoff), S (Schwefel), S(=O), $S(=O)_2$, NH, N(($C_1$-$C_2$)-Alkyl), N(($C_1$-$C_2$)-Alkoxy), N(($C_1$-$C_2$)-Fluoralkyl), N[C(=O)-($C_1$-$C_3$)-Alkyl], N[C(=O)-($C_1$-$C_2$)-Fluoralkyl] substituiert ist oder für ($C_3$-$C_6$)-Cycloalkyl-($C_1$-$C_2$)-alkyl steht, das am Ring durch eine ($C_1$-$C_3$)-Alkoxygruppe substituiert und gegebenenfalls am Ring zusätzlich durch eine ($C_1$-$C_2$)-Alkylgruppe substituiert ist oder für Heteroaryl, Heteroaryl-$CH_2$-, wobei der Heteroarylring über ein Ringkohlenstoffatom angebunden ist und gegebenenfalls weiter substituiert ist durch 1, 2 oder 3 an Ringkohlenstoffatomen gebundene Substituenten aus der Gruppe Halogen, Cyano, Nitro, Hydroxy, ($C_1$-$C_3$)-Alkyl, ($C_1$-$C_3$)-Alkyl-C(=O)-, ($C_1$-$C_2$)-Fluoralkyl-C(=O)-, ($C_1$-$C_3$)-Alkoxy, ($C_1$-$C_2$)-Fluoralkoxy, ($C_2$-$C_3$)-Alkenyl, ($C_2$-$C_3$)-Alkinyl, ($C_1$-$C_2$)-Fluoralkyl mit der Maßgabe, dass ein Ringkohlenstoffatom nicht durch ein Halogen (außer Fluor), Alkoxy oder Fluoralkoxy substituiert ist, falls dieses Ringkohlenstoffatom direkt an einem Ringstickstoffatom des Heteroarylrings gebunden ist; und im Falle einer 5-gliedrigen Heteroarylgruppe, die mindestens ein Stickstoffatom im Ring trägt und welches nicht Bestandteil einer C=N-Doppelbindung ist, dieses Stickstoffatom gegebenenfalls durch einen Substituenten aus der Gruppe ($C_1$-$C_3$)-Alkyl, ($C_1$-$C_2$)-Fluoralkyl, ($C_1$-$C_3$)-Alkyl-C(=O)-, ($C_1$-$C_2$)-Fluoralkyl-C(=O)-, ($C_1$-$C_2$)-Alkyl-$S(=O)_2$- substituiert ist, stehen,

mit der Maßgabe, dass maximal einer der beiden Substituenten $R^8$ and $R^9$ ein gegebenenfalls substitutiertes Cycloalkyl; ein gegebenenfalls substituiertes Cycloalkyl, in welchem eine Ring-($CH_2$)-Einheit ersetzt ist durch O (Sauerstoff), S (Schwefel), S(=O), $S(=O)_2$, NH, N(($C_1$-$C_3$)-Alkyl), N(($C_1$-$C_2$)-Fluoralkyl), N[C(=O)-($C_1$-$C_3$)-Alkyl], N [C(=O)-($C_1$-$C_2$)-Fluoralkyl] oder N(($C_1$-$C_2$)-Alkoxy); ein gegebenenfalls substituiertes Cycloalkenyl; ein gegebenenfalls substituiertes Cycloalkylalkyl; ein gegebenenfalls substituiertes Cycloalkylalkyl in welchem eine Ring-($CH_2$)-Ein-

heit ersetzt ist durch O (Sauerstoff), S (Schwefel), S(=O), $S(=O)_2$, NH, $N((C_1-C_3)$-Alkyl), $N((C_1-C_2)$-Fluoralkyl), N $[C(=O)-(C_1-C_3)$-Alkyl], $N[C(=O)-(C_1-C_2)$-Fluoralkyl] oder $N((C_1-C_2)$-Alkoxy); oder Heteroaryl oder Heteroaryl-$CH_2$-ist;

oder $R^8$ für Wasserstoff oder $(C_1-C_2)$-Alkyl steht, wenn $R^9$ für $(C_1-C_2)$-Alkoxy steht,

oder $R^8$ und $R^9$ gemeinsam für $-(CH_2)_{n7}-$ oder $-(CH_2)_{n8}-X^2-(CH_2)_{n9}-$ stehen, wobei $X^2$ für S (Schwefel), S(=O), $S(=O)_2$, $C(H)[(C_1-C_3)$-Alkyl], $C[(C_1-C_2)\text{-Alkyl}]_2$, $C(H)[(C_1-C_3)$-Alkoxy] steht und n7 für 2, 3, 4, 5, und 6 steht sowie n8 und n9 unabhängig voneinander für 0, 1, 2, 3 stehen unter der Maßgabe, dass n8 + n9 gleich 2, 3, 4, 5 ist,

$R^{10}$, $R^{11}$, $R^{12}$ und $R^{13}$ stehen unabhängig voneinander für Wasserstoff, $(C_1-C_4)$-Alkyl, unter der Maßgabe, dass nicht mehr als eine Gruppe $R^{10}$, $R^{11}$, $R^{12}$ und $R^{13}$ für $(C_3-C_4)$-Alkyl steht,

G für Wasserstoff, ein agronomisch akzeptables Metall, eine agronomisch akzeptable Sulfoniumgruppe, eine agronomisch akzeptable Ammoniumgruppe, eine Gruppe $C(X^3)-R^{14}$, $-C(X^4)-X^5-R^{15}$, $-C(X^6)-N(R^{16})-R^{17}$, $-SO_2-R^{18}$, $-P(X^7)(R^{19})-R^{20}$, $-CH_2-X^8-R^{21}$, $(C_1-C_6)$-Alkoxy-C(=O)-$CH_2$-, $(C_1-C_6)$-Alkoxy-C(=O)-CH=CH-, $(C_2-C_7)$-Alken-1-yl-$CH_2$-, $(C_2-C_7)$-Alken-l-yl-$CH[(C_1-C_2)$-Alkyl]-, $(C_2-C_4)$-Fluoralken-1-yl-$CH_2$-, $(C_2-C_7)$-Alkin-1-yl-$CH_2$-, $(C_2-C_7)$-Alkin-1-yl-$CH[(C_1-C_2)$-alkyl]-, Heteroaryl-$CH_2$-, Heteroaryl-$CH[(C_1-C_2)$-alkyl]-, Phenyl-$CH_2$-, Phenyl-CH $[(C_1-C_2)$-alkyl]-, Phenyl-C(O)-$CH_2$- steht, wobei die Phenyl- oder Heteroarylgruppe gegebenenfalls weiter unabhänig voneinander durch 1, 2 oder 3 Gruppen ausgewählt aus $(C_1-C_2)$-Alkyl, $C_1$-Fluoralkyl, $(C_1-C_2)$-Alkoxy, $C_1$-Fluoralkoxy, Fluor, Chlor, Brom, Cyano, Nitro substituiert ist,

$X^3$, $X^4$, $X^5$, $X^6$, $X^7$ und $X^8$ unabhängig voneinander für O (Sauerstoff) und S (Schwefel) stehen,

$R^{14}$ für Wasserstoff, $(C_1-C_{21})$-Alkyl, $(C_2-C_{21})$-Alkenyl, $(C_2-C_{18})$-Alkinyl, $(C_1-C_{10})$-Fluoralkyl, $(C_1-C_{10})$-Cyanoalkyl, $(C_1-C_{10})$-Nitroalkyl, $(C_1-C_{10})$-Aminoalkyl, $(C_1-C_5)$-Alkylamino$(C_1-C_5)$-alkyl, $(C_2-C_8)$-Dialkylamino$(C_1-C_5)$-alkyl, $(C_3-C_7)$-Cycloalkyl-$(C_1-C_5)$-alkyl, $(C_1-C_5)$-Alkoxy-$(C_1-C_5)$-alkyl, $(C_3-C_5)$-Alkenyloxy-$(C_1-C_5)$-alkyl, $(C_3-C_5)$-Alkinyloxy-$(C_1-C_5)$-alkyl, $(C_1-C_5)$-Alkylthio-$(C_1-C_5)$-alkyl, $(C_1-C_5)$-Alkylsulfinyl-$(C_1-C_5)$-alkyl, $(C_1-C_5)$-Alkylsulfonyl-$(C_1-C_5)$-alkyl, $(C_2-C_8)$-Alkylidenaminoxy$(C_1-C_5)$-alkyl, $(C_1-C_5)$-Alkylcarbonyl-$(C_1-C_5)$-alkyl, $(C_1-C_5)$-Alkoxycarbonyl$(C_1-C_5)$-alkyl, Aminocarbonyl-$(C_1-C_5)$-alkyl, $(C_1-C_5)$-Alkylaminocarbonyl-$(C_1-C_5)$-alkyl, $(C_2-C_8)$-Dialkylaminocarbonyl-$(C_1-C_5)$-alkyl, $(C_1-C_5)$-Alkylcarbonylamino-$(C_1-C_5)$-alkyl, N-$(C_1-C_5)$-Alkylcarbonyl-N-$(C_1-C_5)$-alkylamino$(C_1-C_5)$-alkyl, $(C_3-C_6)$-Trialkylsilyl-$(C_1-C_5)$-alkyl, Phenyl-$(C_1-C_5)$-alkyl, wobei die Phenylgruppe gegebenenfalls weiter unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, $(C_1-C_3)$-Alkylthio, $(C_1-C_3)$-Alkylsulfinyl, $(C_1-C_3)$-Alkylsulfonyl, Fluor, Chlor, Brom, Cyano, Nitro substituiert ist, Heteroaryl-$(C_1-C_5)$-alkyl, wobei die Heteroarylgruppe gegebenenfalls weiter unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, $(C_1-C_3)$-Alkylthio, $(C_1-C_3)$-Alkylsulfinyl, $(C_1-C_3)$-Alkylsulfonyl, Fluor, Chlor, Brom, Cyano, Nitro substituiert ist, $(C_2-C_5)$-Fluoralkenyl, $(C_3-C_8)$-Cycloalkyl; Phenyl oder Phenyl, das unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, Fluor, Chlor, Brom, Cyano, Nitro substituiert ist, Heteroaryl oder , das unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, Fluor, Chlor, Brom, Cyano, Nitro substituiert ist, steht,

$R^{15}$ für $(C_1-C_{18})$-Alkyl, $(C_3-C_{18})$-Alkenyl, $(C_3-C_{18})$-Alkinyl, $(C_2-C_{10})$-Fluoralkyl, $(C_1-C_{10})$-Cyanoalkyl, $(C_1-C_{10})$-Nitroalkyl, $(C_2-C_{10})$-Aminoalkyl, $(C_1-C_5)$-Alkylamino$(C_1-C_5)$-alkyl, $(C_2-C_8)$-Dialkylamino$(C_1-C_5)$-alkyl, $(C_3-C_7)$-Cycloalkyl-$(C_1-C_5)$-alkyl, $(C_1-C_5)$-Alkoxy-$(C_1-C_5)$-alkyl, $(C_3-C_5)$-Alkenyloxy-$(C_1-C_5)$-alkyl, $(C_3-C_5)$-Alkinyloxy-$(C_1-C_5)$-alkyl, $(C_1-C_5)$-Alkylthio-$(C_1-C_5)$-alkyl, $(C_1-C_5)$-Alkylsulfinyl-$(C_1-C_5)$-alkyl, $(C_1-C_5)$-Alkylsulfonyl-$(C_1-C_5)$-alkyl, $(C_2-C_8)$-Alkylidenaminoxy$(C_1-C_5)$-alkyl, $(C_1-C_5)$-Alkylcarbonyl-$(C_1-C_5)$-alkyl, $(C_1-C_5)$-Alkoxycarbonyl$(C_1-C_5)$-alkyl, Aminocarbonyl-$(C_1-C_5)$-alkyl, $(C_1-C_5)$-Alkylaminocarbonyl-$(C_1-C_5)$-alkyl, $(C_2-C_8)$-Dialkylaminocarbonyl-$(C_1-C_5)$-alkyl, $(C_1-C_5)$-Alkylcarbonylamino-$(C_1-C_5)$-alkyl, N-$(C_1-C_5)$-Alkylcarbonyl-N-$(C_1-C_5)$-alkylamino$(C_1-C_5)$-alkyl, $(C_3-C_6)$-Trialkylsilyl-$(C_1-C_5)$-alkyl, Phenyl-$(C_1-C_5)$-alkyl, wobei die Phenylgruppe gegebenenfalls weiter unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, $(C_1-C_3)$-Alkylthio, $(C_1-C_3)$-Alkylsulfinyl, $(C_1-C_3)$-Alkylsulfonyl, Fluor, Chlor, Brom, Cyano, Nitro substituiert ist, Heteroaryl-$(C_1-C_5)$-alkyl, wobei die Heteroarylgruppe gegebenenfalls weiter unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, $(C_1-C_3)$-Alkylthio, $(C_1-C_3)$-Alkylsulfinyl, $(C_1-C_3)$-Alkylsulfonyl, Fluor, Chlor, Brom, Cyano, Nitro substituiert ist, $(C_2-C_5)$-Fluoralkenyl, $(C_3-C_8)$-Cycloalkyl; Phenyl oder Phenyl, das unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, Fluor, Chlor, Brom, Cyano,

Nitro substituiert ist, Heteroaryl oder Heteroaryl, das unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, Fluor, Chlor, Brom, Cyano, Nitro substituiert ist, steht,

$R^{16}$ und $R^{17}$ unabhängig voneinander für Wasserstoff, $(C_1-C_{10})$-Alkyl, $(C_2-C_{10})$-Alkenyl, $(C_2-C_{10})$-Alkinyl, $(C_2-C_{10})$-Fluoralkyl, $(C_1-C_{10})$-Cyanoalkyl, $(C_1-C_{10})$-Nitroalkyl, $(C_1-C_{10})$-Aminoalkyl, $(C_1-C_5)$-Alkylamino$(C_1-C_5)$-alkyl, $(C_2-C_8)$-Dialkylamino$(C_1-C_5)$-alkyl, $(C_3-C_7)$-Cycloalkyl-$(C_1-C_5)$-alkyl, $(C_1-C_5)$-Alkoxy-$(C_1-C_5)$-alkyl, $(C_3-C_5)$-Alkenyloxy-$(C_1-C_5)$-alkyl, $(C_3-C_5)$-Alkinyloxy-$(C_1-C_5)$-alkyl, $(C_1-C_5)$-Alkylthio-$(C_1-C_5)$-alkyl, $(C_1-C_5)$-Alkylsulfinyl-$(C_1-C_5)$-alkyl, $(C_1-C_5)$-Alkylsulfonyl-$(C_1-C_5)$-alkyl, $(C_2-C_8)$-Alkylidenaminoxy$(C_1-C_5)$-alkyl, $(C_1-C_5)$-Alkylcarbonyl-$(C_1-C_5)$-alkyl, $(C_1-C_5)$-Alkoxycarbonyl$(C_1-C_5)$-alkyl, Aminocarbonyl-$(C_1-C_5)$-alkyl, $(C_1-C_5)$-Alkylaminocarbonyl-$(C_1-C_5)$-alkyl, $(C_2-C_8)$-Dialkylaminocarbonyl-$(C_1-C_5)$-alkyl, $(C_1-C_5)$-Alkylcarbonylamino-$(C_1-C_5)$-alkyl, N-$(C_1-C_5)$-Alkylcarbonyl-N-$(C_1-C_5)$-alkylamino$(C_1-C_5)$-alkyl, $(C_3-C_6)$-Trialkylsilyl-$(C_1-C_5)$-alkyl, Phenyl-$(C_1-C_5)$-alkyl, wobei die Phenylgruppe gegebenenfalls weiter unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, $(C_1-C_3)$-Alkylthio, $(C_1-C_3)$-Alkylsulfinyl, $(C_1-C_3)$-Alkylsulfonyl, Fluor, Chlor, Brom, Cyano, Nitro substituiert ist, Heteroaryl-$(C_1-C_5)$-alkyl, wobei die Heteroarylgruppe gegebenenfalls weiter unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, $(C_1-C_3)$-Alkylthio, $(C_1-C_3)$-Alkylsulfinyl, $(C_1-C_3)$-Alkylsulfonyl, Fluor, Chlor, Brom, Cyano, Nitro substituiert ist, $(C_2-C_5)$-Fluoralkenyl, $(C_3-C_8)$-Cycloalkyl; Phenyl oder Phenyl, das unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, Fluor, Chlor, Brom, Cyano, Nitro substituiert ist, Heteroaryl oder Heteroaryl, das unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, Fluor, Chlor, Brom, Cyano, Nitro substituiert ist, Heteroarylamino oder Heteroarylamino, bei dem die Heteroarylgruppe unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, Fluor, Chlor, Brom, Cyano, Nitro substituiert ist, Diheteroarylamino oder Diheteroarylamino, bei dem die jeweilige Heteroarylgruppe unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, Fluor, Chlor, Brom, Cyano, Nitro substituiert ist, Phenylamino or Phenylamino, bei dem die jeweilige Phenylgruppe unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, Fluor, Chlor, Brom, Cyano, Nitro substituiert ist, Diphenylamino oder Diphenylamino, bei dem die jeweilige Phenylgruppe unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, Fluor, Chlor, Brom, Cyano, Nitro substituiert ist, $(C_3-C_7)$-Cycloalkylamino, Di-[$(C_3-C_7)$-Cycloalkyl]amino, $(C_3-C_7)$-Cycloalkoxy stehen; oder

$R^{16}$ und $R^{17}$, zusammen mit dem Stickstoffatom, an das sie gebunden sind, einen unsubstituierten 4- bis 7-gliedrigen Ring bilden, der gegebenenfalls ein Heteroatom aus der Gruppe O (Sauerstoff) und S (Schwefel) umfasst,

$R^{18}$ für $(C_1-C_{10})$-Alkyl, $(C_2-C_{10})$-Alkenyl, $(C_2-C_{10})$-Alkinyl, $(C_1-C_{10})$-Fluoralkyl, $(C_1-C_{10})$-Cyanoalkyl, $(C_1-C_{10})$-Nitroalkyl, $(C_1-C_{10})$-Aminoalkyl, $(C_1-C_5)$-Alkylamino$(C_1-C_5)$-alkyl, $(C_2-C_8)$-Dialkylamino$(C_1-C_5)$-alkyl, $(C_3-C_7)$-Cycloalkyl-$(C_1-C_5)$-alkyl, $(C_1-C_5)$-Alkoxy-$(C_1-C_5)$-alkyl, $(C_3-C_5)$-Alkenyloxy-$(C_1-C_5)$-alkyl, $(C_3-C_5)$-Alkinyloxy-$(C_1-C_5)$-alkyl, $(C_1-C_5)$-Alkylthio-$(C_1-C_5)$-alkyl, $(C_1-C_5)$-Alkylsulfinyl-$(C_1-C_5)$-alkyl, $(C_1-C_5)$-Alkylsulfonyl-$(C_1-C_5)$-alkyl, $(C_2-C_8)$-Alkylidenaminoxy$(C_1-C_5)$-alkyl, $(C_1-C_5)$-Alkylcarbonyl-$(C_1-C_5)$-alkyl, $(C_1-C_5)$-Alkoxycarbonyl$(C_1-C_5)$-alkyl, Aminocarbonyl-$(C_1-C_5)$-alkyl, $(C_1-C_5)$-Alkylaminocarbonyl-$(C_1-C_5)$-alkyl, $(C_2-C_8)$-Dialkylaminocarbonyl-$(C_1-C_5)$-alkyl, $(C_1-C_5)$-Alkylcarbonylamino-$(C_1-C_5)$-alkyl, N-$(C_1-C_5)$-Alkylcarbonyl-N-$(C_1-C_5)$-alkylamino$(C_1-C_5)$-alkyl, $(C_3-C_6)$-Trialkylsilyl-$(C_1-C_5)$-alkyl, Phenyl-$(C_1-C_5)$-alkyl, wobei die Phenylgruppe gegebenenfalls weiter unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, $(C_1-C_3)$-Alkylthio, $(C_1-C_3)$-Alkylsulfinyl, $(C_1-C_3)$-Alkylsulfonyl, Fluor, Chlor, Brom, Cyano, Nitro substituiert ist, Heteroaryl-$(C_1-C_5)$-alkyl, wobei die Heteroarylgruppe gegebenenfalls weiter unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, $(C_1-C_3)$-Alkylthio, $(C_1-C_3)$-Alkylsulfinyl, $(C_1-C_3)$-Alkylsulfonyl, Fluor, Chlor, Brom, Cyano, Nitro substituiert ist, $(C_2-C_5)$-Fluoralkenyl, $(C_3-C_8)$-Cycloalkyl; Phenyl oder Phenyl, das unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, Fluor, Chlor, Brom, Cyano, Nitro substituiert ist, Heteroaryl oder Heteroaryl, das unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, Fluor, Chlor, Brom, Cyano, Nitro substituiert ist, Heteroarylamino oder Heteroarylamino, bei dem die Heteroarylgruppe unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, Fluor, Chlor, Brom, Cyano, Nitro substituiert ist, Diheteroarylamino oder Diheteroarylamino, bei dem die jeweilige Heteroarylgruppe unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, Fluor, Chlor, Brom, Cyano, Nitro substituiert ist, Phenylamino or Phenylamino,

bei dem die jeweilige Phenylgruppe unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, Fluor, Chlor, Brom, Cyano, Nitro substituiert ist, Diphenylamino oder Diphenylamino, bei dem die jeweilige Phenylgruppe unabhänig voneinander durch 1, 2 oder 3 Gruppen ausgewählt aus $(C_1-C_3)$-Alkyl. $(C_1-C_3)$-Fluoralkyl, $(C_1-C_2)$-Alkoxy, $(C_1-C_3)$-Fluoralkoxy, Fluor, Chlor, Brom, Cyano, Nitro substituiert ist, $(C_3-C_7)$-Cycloalkylamino, Di-[$(C_3-C_7)$-Cycloalkyl]amino, $(C_3-C_7)$-Cycloalkoxy, $(C_1-C_{10})$-Alkoxy, $(C_1-C_{10})$-Fluoralkoxy, $(C_3-C_7)$-Alkylamino, Di-[$(C_3-C_7)$-Alkyl]amino steht;

$R^{19}$ und $R^{20}$ unabhängig voneinander für $(C_1-C_{10})$-Alkyl, $(C_2-C_{10})$-Alkenyl, $(C_2-C_{10})$-Alkinyl, $(C_1-C_{10})$-Fluoralkyl, $(C_1-C_{10})$-Cyanoalkyl, $(C_1-C_{10})$-Nitroalkyl, $(C_1-C_{10})$-Aminoalkyl, $(C_1-C_5)$-Alkylamino$(C_1-C_5)$-alkyl, $(C_2-C_8)$-Dialkylamino$(C_1-C_5)$-alkyl, $(C_3-C_7)$-Cycloalkyl-$(C_1-C_5)$-alkyl, $(C_1-C_5)$-Alkoxy-$(C_1-C_5)$-alkyl, $(C_3-C_5)$-Alkenyloxy-$(C_1-C_5)$-alkyl, $(C_3-C_5)$-Alkinyloxy-$(C_1-C_5)$-alkyl, $(C_1-C_5)$-Alkylthio-$(C_1-C_5)$-alkyl, $(C_1-C_5)$-Alkylsulfinyl-$(C_1-C_5)$-alkyl, $(C_1-C_5)$-Alkylsulfonyl-$(C_1-C_5)$-alkyl, $(C_2-C_8)$-Alkylidenaminoxy$(C_1-C_5)$-alkyl, $(C_1-C_5)$-Alkylcarbonyl-$(C_1-C_5)$-alkyl, $(C_1-C_5)$-Alkoxycarbonyl$(C_1-C_5)$-alkyl, Aminocarbonyl-$(C_1-C_5)$-alkyl, $(C_1-C_5)$-Alkylaminocarbonyl-$(C_1-C_5)$-alkyl, $(C_2-C_8)$-Dialkylaminocarbonyl-$(C_1-C_5)$-alkyl, $(C_1-C_5)$-Alkylcarbonylamino-$(C_1-C_5)$-alkyl, N-$(C_1-C_5)$-Alkylcarbonyl-N-$(C_1-C_5)$-alkylamino$(C_1-C_5)$-alkyl, $(C_3-C_6)$-Trialkylsilyl-$(C_1-C_5)$-alkyl, Phenyl-$(C_1-C_5)$-alkyl, wobei die Phenylgruppe gegebenenfalls weiter unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, $(C_1-C_3)$-Alkylthio, $(C_1-C_3)$-Alkylsulfinyl, $(C_1-C_3)$-Alkylsulfonyl, Fluor, Chlor, Brom, Cyano, Nitro substituiert ist, Heteroaryl-$(C_1-C_5)$-alkyl, wobei die Heteroarylgruppe gegebenenfalls weiter unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, $(C_1-C_3)$-Alkylthio, $(C_1-C_3)$-Alkylsulfinyl, $(C_1-C_3)$-Alkylsulfonyl, Fluor, Chlor, Brom, Cyano, Nitro substituiert ist, $(C_2-C_5)$-Fluoralkenyl, $(C_3-C_8)$-Cycloalkyl; Phenyl oder Phenyl, das unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, Fluor, Chlor, Brom, Cyano, Nitro substituiert ist, Heteroaryl oder Heteroaryl, das unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, Fluor, Chlor, Brom, Cyano, Nitro substituiert ist, Heteroarylamino oder Heteroarylamino, bei dem die Heteroarylgruppe unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, Fluor, Chlor, Brom, Cyano, Nitro substituiert ist, Diheteroarylamino oder Diheteroarylamino, bei dem die jeweilige Heteroarylgruppe unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, Fluor, Chlor, Brom, Cyano, Nitro substituiert ist, Phenylamino or Phenylamino, bei dem die jeweilige Phenylgruppe unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, Fluor, Chlor, Brom, Cyano, Nitro substituiert ist, Diphenylamino oder Diphenylamino, bei dem die jeweilige Phenylgruppe unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, Fluor, Chlor, Brom, Cyano, Nitro substituiert ist, benzyloxy und phenyloxy, wobei die jeweilige Phenylgruppe gegebenenfalls weiter unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, Fluor, Chlor, Brom, Cyano, Nitro substituiert ist, stehen und

$R^{21}$ für $(C_1-C_{10})$-Alkyl, $(C_3-C_{10})$-Alkenyl, $(C_3-C_{10})$-Alkinyl, $(C_1-C_{10})$-Fluoralkyl, $(C_1-C_{10})$-Cyanoalkyl, $(C_1-C_{10})$-Nitroalkyl, $(C_2-C_{10})$-Aminoalkyl, $(C_1-C_5)$-Alkylamino$(C_1-C_5)$-alkyl, $(C_2-C_8)$-Dialkylamino$(C_1-C_5)$-alkyl, $(C_3-C_7)$-Cycloalkyl-$(C_1-C_5)$-alkyl, $(C_1-C_5)$-Alkoxy-$(C_1-C_5)$-alkyl, $(C_3-C_5)$-Alkenyloxy-$(C_1-C_5)$-alkyl, $(C_3-C_5)$-Alkinyloxy-$(C_1-C_5)$-alkyl, $(C_1-C_5)$-Alkylthio-$(C_1-C_5)$-alkyl, $(C_1-C_5)$-Alkylsulfinyl-$(C_1-C_5)$-alkyl, $(C_1-C_5)$-Alkylsulfonyl-$(C_1-C_5)$-alkyl, $(C_2-C_8)$-Alkylidenaminoxy$(C_1-C_5)$-alkyl, $(C_1-C_5)$-Alkylcarbonyl-$(C_1-C_5)$-alkyl, $(C_1-C_5)$-Alkoxycarbonyl$(C_1-C_5)$-alkyl, Aminocarbonyl-$(C_1-C_5)$-alkyl, $(C_1-C_5)$-Alkylaminocarbonyl-$(C_1-C_5)$-alkyl, $(C_2-C_8)$-Dialkylaminocarbonyl-$(C_1-C_5)$-alkyl, $(C_1-C_5)$-Alkylcarbonylamino-$(C_1-C_5)$-alkyl, N-$(C_1-C_5)$-Alkylcarbonyl-N-$(C_1-C_5)$-alkylamino$(C_1-C_5)$-alkyl, $(C_3-C_6)$-Trialkylsilyl-$(C_1-C_5)$-alkyl, Phenyl-$(C_1-C_5)$-alkyl, wobei die Phenylgruppe gegebenenfalls weiter unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, $(C_1-C_3)$-Alkylthio, $(C_1-C_3)$-Alkylsulfinyl, $(C_1-C_3)$-Alkylsulfonyl, Fluor, Chlor, Brom, Cyano, Nitro substituiert ist, Heteroaryl-$(C_1-C_5)$-alkyl, wobei die Heteroarylgruppe gegebenenfalls weiter unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, $(C_1-C_3)$-Alkylthio, $(C_1-C_3)$-Alkylsulfinyl, $(C_1-C_3)$-Alkylsulfonyl, Fluor, Chlor, Brom, Cyano, Nitro substituiert ist, Phenoxy-$(C_1-C_5)$-alkyl, wobei die Phenylgruppe gegebenenfalls weiter unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, $(C_1-C_3)$-Alkylthio, $(C_1-C_3)$-Alkylsulfinyl, $(C_1-C_3)$-Alkylsulfonyl, Fluor, Chlor, Brom, Cyano, Nitro substituiert ist, Heteroaryloxy-$(C_1-C_5)$-alkyl, wobei die Heteroarylgruppe gegebenenfalls weiter unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, $(C_1-C_3)$-Alkylthio, $(C_1-C_3)$-Alkylsulfinyl, $(C_1-C_3)$-Alkylsulfonyl, Fluor, Chlor, Brom, Cyano, Nitro substituiert ist, Phenyl oder Phenyl, das unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, Fluor, Chlor, Brom, Cyano, Nitro substituiert ist, Heteroaryl oder Heteroaryl, das unabhänig

voneinander durch 1, 2 oder 3 Gruppen ausgewählt aus ($C_1$-$C_3$)-Alkyl, ($C_1$-$C_3$)-Fluoralkyl, ($C_1$-$C_2$)-Alkoxy, ($C_1$-$C_3$)-Fluoralkoxy, Fluor, Chlor, Brom, Cyano, Nitro substituiert ist, Phenyl-C(=O), wobei die Phenylgruppe gegebenenfalls weiter unabhänig voneinander durch 1, 2 oder 3 Gruppen ausgewählt aus ($C_1$-$C_3$)-Alkyl, ($C_1$-$C_3$)-Fluoralkyl, ($C_1$-$C_2$)-Alkoxy, ($C_1$-$C_3$)-Fluoralkoxy, Fluor, Chlor, Brom, Cyano, Nitro substituiert ist, steht.

Die Bezeichnungen der oben aufgelisteten Herbizide (Common name) ist durch die in Klammern aufgeführte "CAS RN" (Chemical Abstract Service Registry Number) (kurz "CAS") ergänzt. Die CAS RN ist eine allgemein gebräuchlichen Referenznummer, die eine eindeutige Zuordnung der bezeichneten Substanzen ermöglicht, da die "CAS RN" u.a. zwischen Isomeren, einschließlich Stereoisomeren, sowie Salzen und Estern unterscheidet. Für Wirkstoffe, die in verschiedenen Formen existieren, ist in der obigen Auflistung jeweils der Name der Neutralverbindung angegeben. Die in Klammern angegeben CAS richten auf diese, sowie auf sämtliche, weiteren bekannten Formen des Wirkstoffs. Im Folgenden wird immer nur die Neutralverbindung genannt und umfasst damit sämtliche existieren Formen wie aufgelistet, es sei denn, eine spezifische Form des Wirkstoffs ist in einem bestimmten Zusammenhang relevant, wie z.B. in nachstehenden Tabellenbeispiele für die biologische Wirksamkeit.

Die erfindungsgemäßen Zusammensetzungen können weitere Komponenten enthalten, z. B. andere Wirkstoffe gegen Schadorganismen wie Schadpflanzen, pflanzenschädliche Tiere oder pflanzenschädliche Pilze, insbesondere dabei Wirkstoffe aus der Gruppe der Herbizide, Fungizide, Insektizide, Akarizide, Nematizide und Mitizide und verwandte Stoffe, oder auch Pflanzenschutzmittelwirkstoffe anderer Art (z. B. Resistenzinduktoren), Pflanzenwachstumsregulatoren und/oder im Pflanzenschutz übliche Zusatzstoffe und/oder Formulierungshilfsmittel. Die Komponenten können dabei gemeinsam formuliert (Fertigformulierung) und angewendet werden oder sie können getrennt formuliert und gemeinsam angewendet werden, z. B. im Tank-Mix oder in sequentieller Applikation.

Die als Komponente (A) enthaltenen einzelnen herbiziden Wirkstoffe der allgemeinen Formel (I) werden im Folgenden auch als Verbindungen (A), Wirkstoffe (A), Komponenten (A) oder Herbizide (A) bezeichnet. Entsprechend werden die als Komponente (B) enthaltenen einzelnen herbiziden Wirkstoffe der allgemeinen Formel (II) im Folgenden auch als Verbindungen (B), Wirkstoffe (B), Komponenten (B) oder Herbizide (B) bezeichnet.

Als vorteilhafte Eigenschaft der erfindungsgemäßen Kombination von Herbiziden (A) und (B) zeigt sich, dass Wirkstoffe (A) und (B) miteinander kompatibel sind, d. h. sie lassen sich gemeinsam anwenden, ohne dass wesentliche chemische Unverträglichkeiten der Wirkstoffe (A) und/oder (B) auftreten, die zu einer Zersetzung eines oder mehrerer Wirkstoffe führen. Damit wird eine Reduzierung des Wirkstoffgehalts in Formulierungen oder Spritzbrühen vermieden. Die günstige Kompatibilität erstreckt sich auch auf die biologischen Eigenschaften der Wirkstoffe bei der kombinierten Anwendung. So werden antagonistische Effekte bei der Kontrolle von Schadpflanzen mit den erfindungsgemäßen Wirkstoff-Kombinationen in der Regel nicht beobachtet. Damit sind die Wirkstoffe (A) und (B) besonders geeignet, gemeinsam oder zusätzlich mit weiteren Pflanzenschutzmittelwirkstoffen oder Agrochemikalien angewendet zu werden. Die ermöglichte kombinierte Anwendung erlaubt die Nutzung vorteilhafter Effekte, wie beispielsweise die Ausweitung des Spektrums der zu kontrollierenden oder zu bekämpfenden Schadpflanzen bei einer Anwendung, die Reduzierung der Aufwandmenge der einzelnen Herbizide (A) bzw. (B) im Vergleich zur jeweiligen Aufwandmenge des betreffenden Herbizids bei der Einzelapplikation. Damit kann das Abbauverhalten der Wirkstoffe beeinflusst und günstigere Bedingungen für den Nachbau von Kulturpflanzen erreicht werden. Ein weiterer Vorteil ist darin zu sehen, dass die Entstehung von Resistenzen der Schadpflanzen gegen die Wirkstoffe durch Kombination von Wirkstoffen mit unterschiedlichem Wirkungsmechanismus oft wesentlich verringert werden oder vermieden werden kann.

Insbesondere treten überraschenderweise bei der kombinierten Anwendung der Wirkstoffe (A) und (B) bei einer größeren Zahl wirtschaftlich wichtiger Schadpflanzen überadditive (= synergistische) Effekte auf. Dabei ist die Wirkung in der Kombination stärker als die zu erwartende Summe der Wirkungen der eingesetzten Einzelherbizide. Die synergistischen Effekte erlauben eine weitere Reduzierung der Aufwandmenge, die Bekämpfung eines breiteren Spektrums von Unkräutern und Ungräsern, einen schnelleren Einsatz der herbiziden Wirkung, eine längere Dauerwirkung, eine bessere Kontrolle der Schadpflanzen mit nur einer bzw. wenigen Applikationen sowie eine Ausweitung des möglichen Anwendungszeitraumes. Teilweise wird durch den Einsatz der Mittel auch die Menge an schädlichen Inhaltsstoffen, wie Stickstoff oder Ölsäure, und deren Eintrag in den Boden reduziert.

Die genannten Eigenschaften und Vorteile sind in der praktischen Unkrautbekämpfung gewünscht, um landwirtschaftliche Kulturen von unerwünschten Konkurrenzpflanzen freizuhalten und damit die Erträge qualitativ und quantitativ zu sichern und/oder zu erhöhen. Der technische Standard wird durch die neuen Kombinationen hinsichtlich der beschriebenen Eigenschaften deutlich übertroffen.

Die synergistischen Wirkungen werden bei gemeinsamer Ausbringung der Wirkstoffe (A) und (B) beobachtet, können jedoch auch häufig bei zeitlich versetzter Anwendung (Splitting) auftreten. Möglich ist auch die Anwendung der Herbizide (A) bzw. (B) oder der herbiziden Zusammensetzung (A) und (B) in mehreren Portionen (Sequenzanwendung). Beispielsweise kann nach einer oder mehreren Anwendungen im Vorauflauf eine Nachauflauf-Applikation erfolgen, oder nach einer frühen Nachauflaufanwendung kann eine Applikation im mittleren oder späten Nachauflauf erfolgen. Bevorzugt ist dabei die simultane oder zeitnahe Anwendung der Wirkstoffe der jeweiligen Kombination, gegebenenfalls in

mehreren Portionen. Aber auch die zeitversetzte Anwendung der Einzelwirkstoffe einer Kombination ist möglich und kann im Einzelfall vorteilhaft sein. In das System der Anwendung können auch andere Pflanzenschutzmittel, wie beispielsweise die erwähnten anderen Wirkstoffe (andere Herbizide, Fungizide, Insektizide, Akarizide etc.) und/oder verschiedene Hilfsstoffe, Adjuvantien und/oder Düngergaben, integriert werden.

Unter Anwendung im Vorauflauf- oder Nachauflaufverfahren ist je nach dem Zusammenhang, in dem die Bezeichnungen verwendet werden, die Anwendung der Wirkstoffe vor dem bzw. nach dem obererdig sichtbaren Erscheinen der Schadpflanzen zu verstehen oder die Anwendung der Wirkstoffe gegen die Schadpflanzen vor Auflauf der Kulturpflanzen bzw. nach Auflauf der Kulturpflanzen zu verstehen.

Im Hinblick auf die erfindungsgemäßen Verbindungen werden die vorstehend und weiter unten verwendeten Bezeichnungen erläutert. Diese sind dem Fachmann geläufig und haben insbesondere die im Folgenden erläuterten Bedeutungen:

Sofern nicht anders definiert, gilt generell für die Bezeichnung von chemischen Gruppen, dass die Anbindung an das Gerüst bzw. den Rest des Moleküls über das zuletzt genannte Strukturelement der betreffenden chemischen Gruppe erfolgt, d.h. beispielsweise im Falle von ($C_2$-$C_8$)-Alkenyloxy über das Sauerstoffatom, und im Falle von Heterocyclyl-($C_1$-$C_8$)-alkyl oder ($C_1$-$C_6$)-Alkoxy-($C_1$-$C_6$)-alkoxy-($C_1$-$C_6$)-alkyl jeweils über das C-Atom der Alkylgruppe.

Im Falle von durch "-" gekennzeichneten Anbindungen an den Rest des Moleküls erfolgt die Anbindung nicht über das zuletzt genannte Strukturelement, sondern über dasjenige Strukturmotiv, welches direkt am Bindungssymbol "-" steht. Beispiel: Im Falle von -(CO)($C_1$-$C_6$)-Alkoxy-($C_1$-$C_6$)-alkyl erfolgt die Anbindung über die Carbonylgruppe und nicht über die ($C_1$-$C_6$)-Alkylgruppe, daher der Bindungsstrich "-".

Erfindungsgemäß steht "Alkylthio" - in Alleinstellung oder als Bestandteil einer chemischen Gruppe - für geradkettiges oder verzweigtes S-Alkyl, vorzugsweise mit 1 bis 8, oder mit 1 bis 6 Kohlenstoffatomen, wie ($C_1$-$C_{10}$)-, ($C_1$-$C_6$)- oder ($C_1$-$C_4$)-Alkylthio, z.B. (aber nicht beschränkt auf) ($C_1$-$C_6$)-Alkylthio wie Methylthio, Ethylthio, Propylthio, 1-Methylethylthio, Butylthio, 1-Methylpropylthio, 2-Methylpropylthio, 1,1-Dimethylethylthio, Pentylthio, 1-Methylbutylthio, 2-Methylbutylthio, 3-Methylbutylthio, 1,1-Dimethylpropylthio, 1,2-Dimethylpropylthio, 2,2-Dimethylpropylthio, 1-Ethylpropylthio, Hexylthio, 1-Methylpentylthio, 2-Methylpentylthio, 3-Methylpentylthio, 4-Methylpentylthio, 1,1-Dimethylbutylthio, 1,2-Dimethylbutylthio, 1,3-Dimethylbutylthio, 2,2-Dimethylbutylthio, 2,3-Dimethylbutylthio, 3,3-Dimethylbutylthio, 1-Ethylbutylthio, 2-Ethylbutylthio, 1,1,2-Trimethylpropylthio, 1,2,2-Trimethylpropylthio, 1-Ethyl-1-methylpropylthio und 1-Ethyl-2-methylpropylthio.

"Alkoxy" bedeutet ein über ein Sauerstoffatom gebundenen Alkylrest, z. B. (aber nicht beschränkt auf) ($C_1$-$C_6$)-Alkoxy wie Methoxy, Ethoxy, Propoxy, 1-Methylethoxy, Butoxy, 1-Methylpropoxy, 2-Methylpropoxy, 1,1-Dimethylethoxy, Pentoxy, 1-Methylbutoxy, 2-Methylbutoxy, 3-Methylbutoxy, 1,1-Dimethylpropoxy, 1,2-Dimethylpropoxy, 2,2-Dimethylpropoxy, 1-Ethylpropoxy, Hexoxy, 1-Methylpentoxy, 2-Methylpentoxy, 3-Methylpentoxy, 4-Methylpentoxy, 1,1-Dimethylbutoxy, 1,2-Dimethylbutoxy, 1,3-Dimethylbutoxy, 2,2-Dimethylbutoxy, 2,3-Dimethylbutoxy, 3,3-Dimethylbutoxy, 1-Ethylbutoxy, 2-Ethylbutoxy, 1,1,2-Trimethylpropoxy, 1,2,2-Trimethylpropoxy, 1-Ethyl-1-methylpropoxy und 1-Ethyl-2-methylpropoxy. Alkenyloxy bedeutet ein über ein Sauerstoffatom gebundenen Alkenylrest, Alkinyloxy bedeutet ein über ein Sauerstoffatom gebundenen Alkinylrest wie ($C_2$-$C_{10}$)-, ($C_2$-$C_6$)- oder ($C_2$-$C_4$)-Alkenoxy bzw. ($C_3$-$C_{10}$)-, ($C_3$-$C_6$)- oder ($C_3$-$C_4$)-Alkinoxy.

"Alkylcarbonyl" (Alkyl-C(=O)-), soweit nicht an anderer Stelle anders definiert, steht erfindungsgemäß für Alkylreste, die über -C(=O)- an das Gerüst gebunden sind, wie ($C_1$-$C_{10}$)-, ($C_1$-$C_6$)- oder ($C_1$-$C_4$)-Alkylcarbonyl. Die Anzahl der C-Atome bezieht sich dabei auf den Alkylrest in der Alkylcarbonylgruppe.

"Alkoxycarbonyl (Alkyl-O-C(=O)-)", soweit nicht an anderer Stelle anders definiert: Alkylreste, die über -O-C(=O)- an das Gerüst gebunden sind, wie ($C_1$-$C_{10}$)-, ($C_1$-$C_6$)- oder ($C_1$-$C_4$)-Alkoxycarbonyl. Die Anzahl der C-Atome bezieht sich dabei auf den Alkylrest in der Alkoxycarbonylgruppe. Analog stehen "Alkenyloxycarbonyl" und "Alkinyloxycarbonyl", soweit nicht an anderer Stelle anders definiert, erfindungsgemäß für Alkenyl- bzw. Alkinylreste, die über -O-C(=O)- an das Gerüst gebunden sind, wie ($C_2$-$C_{10}$)-, ($C_2$-$C_6$)- oder ($C_2$-$C_4$)-Alkenyloxycarbonyl bzw. ($C_3$-$C_{10}$)-, ($C_3$-$C_6$)- oder ($C_3$-$C_4$)-Alkinyloxycarbonyl. Die Anzahl der C-Atome bezieht sich dabei auf den Alkenyl- bzw. Alkinylrest in der Alken- bzw. Alkinyloxycarbonylgruppe.

Der Begriff "Alkylcarbonyloxy" (Alkyl-C(=O)-O-) steht erfindungsgemäß, soweit nicht an anderer Stelle anders definiert, für Alkylreste, die über eine Carbonyloxygruppe (-C(=O)-O-) mit dem Sauerstoff an das Gerüst gebunden sind, wie ($C_1$-$C_{10}$)-, ($C_1$-$C_6$)- oder ($C_1$-$C_4$)-Alkylcarbonyloxy. Die Anzahl der C-Atome bezieht sich dabei auf den Alkylrest in der Alkylcarbonyloxygruppe.

In Kurzformen wie z.B. $C(O)R^{13}$, $C(O)OR^{13}$, $OC(O)NR^{11}R^{12}$, oder $C(O)NR^{11}R^{12}$ steht die in Klammern aufgeführte Kurzform O für ein über eine Doppelbindung an das benachbarte Kohlenstoffatom gebundenes Sauerstoffatom.

In Kurzformen wie z.B. $OC(S)OR^{13}$, $OC(S)SR^{14}$, $OC(S)NR^{11}R^{12}$, steht die in Klammern aufgeführte Kurzform S für ein über eine Doppelbindung an das benachbarte Kohlenstoffatom gebundenes Schwefelatom.

Der Begriff "Aryl" bedeutet ein gegebenenfalls substituiertes mono-, bi- oder polycyclisches aromatisches System mit vorzugsweise 6 bis 14, insbesondere 6 bis 10 Ring-C-Atomen, beispielsweise Phenyl, Naphthyl, Anthryl, Phenanthrenyl, und ähnliches, vorzugsweise Phenyl.

Vom Begriff "gegebenenfalls substituiertes Aryl" sind auch mehrcyclische Systeme, wie Tetrahydronaphtyl, Indenyl, Indanyl, Fluorenyl, Biphenylyl, umfasst, wobei die Bindungsstelle am aromatischen System ist. Von der Systematik her ist "Aryl" in der Regel auch von dem Begriff "gegebenenfalls substituiertes Phenyl" umfasst. Bevorzugte Aryl-Substituenten sind hier zum Beispiel Wasserstoff, Halogen, Alkyl, Cycloalkyl, Cycloalkylalkyl, Cycloalkenyl, Halocycloalkyl, Alkenyl, Alkinyl, Aryl, Arylalkyl, Arylalkenyl, Heteroaryl, Heteroarylalkyl, Heterocyclyl, Heterocyclylalkyl, Alkoxyalkyl, Alkylthio, Haloalkylthio, Haloalkyl, Alkoxy, Haloalkoxy, Cycloalkoxy, Cycloalkylalkoxy, Aryloxy, Heteroraryloxy, Alkoxyalkoxy, Alkinylalkoxy, Alkenyloxy, Bis-alkylaminoalkoxy, Tris-[alkyl]silyl, Bis-[alkyl]arylsilyl, Bis-[alkyl]alkylsilyl, Tris-[alkyl]silylalkinyl, Arylalkinyl, Heteroarylalkinyl, Alkylalkinyl, Cycloalkylalkinyl, Haloalkylalkinyl, Heterocyclyl-N-alkoxy, Nitro, Cyano, Amino, Alkylamino, Bis-alkylamino, Alkylcarbonylamino, Cycloalkylcarbonylamino, Arylcarbonylamino, Alkoxycarbonylamino, Alkoxycarbonylalkylamino, Arylalkoxycarbonylalkylamino, Hydroxycarbonyl, Alkoxycarbonyl, Aminocarbonyl, Alkylaminocarbonyl, Cycloalkylaminocarbonyl, Bis-Alkylaminocarbonyl, Heteroarylalkoxy, Arylalkoxy.

Ein heterocyclischer Rest (Heterocyclyl) enthält mindestens einen heterocyclischen Ring (=carbocyclischer Ring, in dem mindestens ein C-Atom durch ein Heteroatom ersetzt ist, vorzugsweise durch ein Heteroatom aus der Gruppe N, O, S, P) der gesättigt, ungesättigt, teilgesättigt oder heteroaromatisch ist und dabei unsubstituiert oder substituiert sein kann, wobei die Bindungsstelle an einem Ringatom lokalisiert ist. Ist der Heterocyclylrest oder der heterocyclische Ring gegebenenfalls substituiert, kann er mit anderen carbocyclischen oder heterocyclischen Ringen annelliert sein. Im Falle von gegebenenfalls substituiertem Heterocyclyl werden auch mehrcyclische Systeme umfasst, wie beispielsweise 8-Aza-bicyclo[3.2.1]octanyl, 8-Aza-bicyclo[2.2.2]octanyl oder 1-Aza-bicyclo[2.2.1]heptyl. Im Falle von gegebenenfalls substituiertem Heterocyclyl werden auch spirocyclische Systeme umfasst, wie beispielsweise 1-Oxa-5-aza-spiro[2.3]hexyl. Wenn nicht anders definiert, enthält der heterocyclische Ring vorzugsweise 3 bis 9 Ringatome, insbesondere 3 bis 6 Ringatome, und ein oder mehrere, vorzugsweise 1 bis 4, insbesondere 1, 2 oder 3 Heteroatome im heterocyclischen Ring, vorzugsweise aus der Gruppe N, O, und S, wobei jedoch nicht zwei Sauerstoffatome direkt benachbart sein sollen, wie beispielsweise mit einem Heteroatom aus der Gruppe N, O und S 1- oder 2- oder 3-Pyrrolidinyl, 3,4-Dihydro-2H-pyrrol-2- oder 3-yl, 2,3-Dihydro-1H-pyrrol-1- oder 2- oder 3- oder 4- oder 5-yl; 2,5-Dihydro-1H-pyrrol-1- oder 2- oder 3-yl, 1- oder 2- oder 3- oder 4-Piperidinyl; 2,3,4,5-Tetrahydropyridin-2- oder 3- oder 4- oder 5-yl oder 6-yl; 1,2,3,6-Tetrahydropyridin-1- oder 2- oder 3- oder 4- oder 5- oder 6-yl; 1,2,3,4-Tetrahydropyridin-1- oder 2- oder 3- oder 4- oder 5- oder 6-yl; 1,4-Dihydropyridin-1- oder 2- oder 3- oder 4-yl; 2,3-Dihydropyridin-2- oder 3- oder 4- oder 5- oder 6-yl; 2,5-Dihydropyridin-2- oder 3- oder 4- oder 5- oder 6-yl, 1- oder 2- oder 3- oder 4-Azepanyl; 2,3,4,5-Tetrahydro-1H-azepin-1- oder 2- oder 3- oder 4- oder 5- oder 6- oder 7-yl; 2,3,4,7-Tetrahydro-1H-azepin-1- oder 2- oder 3- oder 4- oder 5- oder 6- oder 7-yl; 2,3,6,7-Tetrahydro-1H-azepin-1- oder 2- oder 3- oder 4-yl; 3,4,5,6-Tetrahydro-2H-azepin-2- oder 3- oder 4- oder 5- oder 6- oder 7-yl; 4,5-Dihydro-1H-azepin-1- oder 2- oder 3- oder 4-yl; 2,5-Dihydro-1H-azepin-1- oder -2- oder 3- oder 4- oder 5- oder 6- oder 7-yl; 2,7-Dihydro-1H-azepin-1- oder -2- oder 3- oder 4-yl; 2,3-Dihydro-1H-azepin-1- oder -2- oder 3- oder 4- oder 5- oder 6- oder 7-yl; 3,4-Dihydro-2H-azepin-2- oder 3- oder 4- oder 5- oder 6- oder 7-yl; 3,6-Dihydro-2H-azepin-2- oder 3- oder 4- oder 5- oder 6- oder 7-yl; 5,6-Dihydro-2H-azepin-2- oder 3- oder 4- oder 5- oder 6- oder 7-yl; 4,5-Dihydro-3H-azepin-2- oder 3- oder 4- oder 5- oder 6- oder 7-yl; 1H-Azepin-1- oder -2- oder 3- oder 4- oder 5- oder 6- oder 7-yl; 2H-Azepin-2- oder 3- oder 4- oder 5- oder 6- oder 7-yl; 3H-Azepin-2- oder 3- oder 4- oder 5- oder 6- oder 7-yl; 4H-Azepin-2- oder 3- oder 4- oder 5- oder 6- oder 7-yl, 2- oder 3-Oxolanyl (= 2- oder 3-Tetrahydrofuranyl); 2,3-Dihydrofuran-2- oder 3- oder 4- oder 5-yl; 2,5-Dihydrofuran-2- oder 3-yl, 2- oder 3- oder 4-Oxanyl (= 2- oder 3- oder 4-Tetrahydropyranyl); 3,4-Dihydro-2H-pyran-2- oder 3- oder 4- oder 5- oder 6-yl; 3,6-Dihydro-2H-pyran-2- oder 3-oder 4- oder 5- oder 6-yl; 2H-Pyran-2- oder 3- oder 4- oder 5- oder 6-yl; 4H-Pyran-2- oder 3- oder 4-yl, 2- oder 3- oder 4-Oxepanyl; 2,3,4,5-Tetrahydrooxepin-2- oder 3- oder 4- oder 5- oder 6- oder 7-yl; 2,3,4,7-Tetrahydrooxepin-2- oder 3- oder 4- oder 5- oder 6- oder 7-yl; 2,3,6,7-Tetrahydrooxepin-2- oder 3- oder 4-yl; 2,3-Dihydrooxepin-2- oder 3- oder 4- oder 5- oder 6- oder 7-yl; 4,5-Dihydrooxepin-2- oder 3- oder 4-yl; 2,5-Dihydrooxepin-2- oder 3- oder 4- oder 5- oder 6- oder 7-yl; Oxepin-2- oder 3- oder 4- oder 5- oder 6- oder 7-yl; 2- oder 3-Tetrahydrothiophenyl; 2,3-Dihydrothiophen-2- oder 3- oder 4- oder 5-yl; 2,5-Dihydrothiophen-2- oder 3-yl; Tetrahydro-2H-thiopyran-2- oder 3- oder 4-yl; 3,4-Dihydro-2H-thiopyran-2- oder 3- oder 4- oder 5- oder 6-yl; 3,6-Dihydro-2H-thiopyran-2- oder 3- oder 4- oder 5- oder 6-yl; 2H-Thiopyran-2- oder 3- oder 4- oder 5- oder 6-yl; 4H-Thiopyran-2- oder 3- oder 4-yl. Bevorzugte 3-Ring und 4-Ring-Heterocyclen sind beispielsweise 1- oder 2-Aziridinyl, Oxiranyl, Thiiranyl, 1- oder 2- oder 3-Azetidinyl, 2- oder 3-Oxetanyl, 2- oder 3-Thietanyl, 1,3-Dioxetan-2-yl. Weitere Beispiele für "Heterocyclyl" sind ein partiell oder vollständig hydrierter heterocyclischer Rest mit zwei Heteroatomen aus der Gruppe N, O und S, wie beispielsweise 1- oder 2- oder 3- oder 4-Pyrazolidinyl; 4,5-Dihydro-3H-pyrazol- 3- oder 4- oder 5-yl; 4,5-Dihydro-1H-pyrazol-1- oder 3- oder 4- oder 5-yl; 2,3-Dihydro-1H-pyrazol-1- oder 2- oder 3- oder 4- oder 5-yl; 1- oder 2- oder 3- oder 4- Imidazolidinyl; 2,3-Dihydro-1H-imidazol-1- oder 2- oder 3- oder 4-yl; 2,5-Dihydro-1H-imidazol-1- oder 2- oder 4- oder 5-yl; 4,5-Dihydro-1H-imidazol-1- oder 2- oder 4- oder 5-yl; Hexahydropyridazin-1- oder 2- oder 3- oder 4-yl; 1,2,3,4-Tetrahydropyridazin-1- oder 2- oder 3- oder 4- oder 5- oder 6-yl; 1,2,3,6-Tetrahydropyridazin-1- oder 2- oder 3- oder 4- oder 5- oder 6-yl; 1,4,5,6-Tetrahydropyridazin-1- oder 3- oder 4- oder 5- oder 6-yl; 3,4,5,6-Tetrahydropyridazin-3- oder 4- oder 5-yl; 4,5-Dihydropyridazin-3- oder 4-yl; 3,4-Dihydropyridazin-3- oder 4- oder 5- oder 6-yl; 3,6-Dihydropyridazin-3- oder 4-yl; 1,6-Dihydropyriazin-1- oder 3- oder 4- oder 5- oder 6-yl; Hexahydropyrimidin-1- oder 2- oder 3- oder 4-yl; 1,4,5,6-Tetrahydropyrimidin-1- oder 2- oder 4- oder 5- oder 6-yl; 1,2,5,6-Tetrahydropyrimidin-1-

oder 2- oder 4- oder 5- oder 6-yl; 1,2,3,4-Tetrahydropyrimidin-1- oder 2- oder 3- oder 4- oder 5- oder 6-yl; 1,6-Dihydropyrimidin-1- oder 2- oder 4- oder 5- oder 6-yl; 1,2-Dihydropyrimidin-1- oder 2- oder 4- oder 5- oder 6-yl; 2,5-Dihydropyrimidin-2- oder 4- oder 5-yl; 4,5-Dihydropyrimidin- 4- oder 5- oder 6-yl; 1,4-Dihydropyrimidin-1- oder 2- oder 4- oder 5- oder 6-yl; 1- oder 2- oder 3-Piperazinyl; 1,2,3,6-Tetrahydropyrazin-1- oder 2- oder 3- oder 5- oder 6-yl; 1,2,3,4-Tetrahydropyrazin-1- oder 2- oder 3- oder 4- oder 5- oder 6-yl; 1,2-Dihydropyrazin-1- oder 2- oder 3- oder 5- oder 6-yl; 1,4-Dihydropyrazin-1- oder 2- oder 3-yl; 2,3-Dihydropyrazin-2- oder 3- oder 5- oder 6-yl; 2,5-Dihydropyrazin-2- oder 3-yl; 1,3-Dioxolan-2- oder 4- oder 5-yl; 1,3-Dioxol-2- oder 4-yl; 1,3-Dioxan-2- oder 4- oder 5-yl; 4H-1,3-Dioxin-2- oder 4- oder 5- oder 6-yl; 1,4-Dioxan-2- oder 3- oder 5- oder 6-yl; 2,3-Dihydro-1,4-dioxin-2- oder 3- oder 5- oder 6-yl; 1,4-Dioxin-2- oder 3-yl; 1,2-Dithiolan-3- oder 4-yl; 3H-1,2-Dithiol-3- oder 4- oder 5-yl; 1,3-Dithiolan-2- oder 4-yl; 1,3-Dithiol-2- oder 4-yl; 1,2-Dithian-3- oder 4-yl; 3,4-Dihydro-1,2-dithiin-3- oder 4- oder 5- oder 6-yl; 3,6-Dihydro-1,2-dithiin-3- oder 4-yl; 1,2-Dithiin-3- oder 4-yl; 1,3-Dithian-2- oder 4- oder 5-yl; 4H-1,3-Dithiin-2- oder 4- oder 5- oder 6-yl; Isoxazolidin-2- oder 3- oder 4- oder 5-yl; 2,3-Dihydroisoxazol-2- oder 3- oder 4- oder 5-yl; 2,5-Dihydroisoxazol-2- oder 3- oder 4- oder 5-yl; 4,5-Dihydroisoxazol-3- oder 4- oder 5-yl; 1,3-Oxazolidin-2- oder 3- oder 4- oder 5-yl; 2,3-Dihydro-1,3-oxazol-2- oder 3- oder 4- oder 5-yl; 2,5-Dihydro-1,3-oxazol-2- oder 4- oder 5-yl; 4,5-Dihydro-1,3-oxazol-2- oder 4- oder 5-yl; 1,2-Oxazinan-2- oder 3- oder 4- oder 5- oder 6-yl; 3,4-Dihydro-2H-1,2-oxazin-2- oder 3- oder 4- oder 5- oder 6-yl; 3,6-Dihydro-2H-1,2-oxazin-2- oder 3- oder 4- oder 5- oder 6-yl; 5,6-Dihydro-2H-1,2-oxazin-2- oder 3- oder 4- oder 5- oder 6-yl; 5,6-Dihydro-4H-1,2-oxazin-3- oder 4- oder 5- oder 6-yl; 2H-1,2-Oxazin-2- oder 3- oder 4- oder 5- oder 6-yl; 6H-1,2-Oxazin-3- oder 4- oder 5- oder 6-yl; 4H-1,2-Oxazin-3- oder 4- oder 5- oder 6-yl; 1,3-Oxazinan-2- oder 3- oder 4- oder 5- oder 6-yl; 3,4-Dihydro-2H-1,3-oxazin-2- oder 3- oder 4- oder 5- oder 6-yl; 3,6-Dihydro-2H-1,3-oxazin-2- oder 3- oder 4- oder 5- oder 6-yl; 5,6-Dihydro-2H-1,3-oxazin-2- oder 4- oder 5- oder 6-yl; 5,6-Dihydro-4H-1,3-oxazin-2- oder 4- oder 5- oder 6-yl; 2H-1,3-Oxazin-2- oder 4- oder 5- oder 6-yl; 6H-1,3-Oxazin-2- oder 4- oder 5- oder 6-yl; 4H-1,3-Oxazin-2- oder 4- oder 5- oder 6-yl; Morpholin-2- oder 3- oder 4-yl; 3,4-Dihydro-2H-1,4-oxazin-2- oder 3- oder 4- oder 5- oder 6-yl; 3,6-Dihydro-2H-1,4-oxazin-2- oder 3- oder 5- oder 6-yl; 2H-1,4-oxazin-2- oder 3- oder 5- oder 6-yl; 4H-1,4-oxazin-2- oder 3-yl; 1,2-Oxazepan-2- oder 3- oder 4- oder 5- oder 6- oder 7-yl; 2,3,4,5-Tetrahydro-1,2-oxazepin-2- oder 3- oder 4- oder 5- oder 6- oder 7-yl; 2,3,4,7-Tetrahydro-1,2-oxazepin-2- oder 3- oder 4- oder 5- oder 6- oder 7-yl; 2,3,6,7-Tetrahydro-1,2-oxazepin-2- oder 3- oder 4- oder 5- oder 6- oder 7-yl; 2,5,6,7-Tetrahydro-1,2-oxazepin-2- oder 3- oder 4- oder 5- oder 6- oder 7-yl; 4,5,6,7-Tetrahydro-1,2-oxazepin-3- oder 4- oder 5- oder 6- oder 7-yl; 2,3-Dihydro-1,2-oxazepin-2- oder 3- oder 4- oder 5- oder 6- oder 7-yl; 2,5-Dihydro-1,2-oxazepin-2- oder 3- oder 4- oder 5- oder 6- oder 7-yl; 2,7-Dihydro-1,2-oxazepin-2- oder 3- oder 4- oder 5- oder 6- oder 7-yl; 4,5-Dihydro-1,2-oxazepin-3- oder 4- oder 5- oder 6- oder 7-yl; 4,7-Dihydro-1,2-oxazepin-3- oder 4- oder 5- oder 6- oder 7-yl; 6,7-Dihydro-1,2-oxazepin-3- oder 4- oder 5- oder 6- oder 7-yl; 1,2-Oxazepin-3- oder 4- oder 5- oder 6- oder 7-yl; 1,3-Oxazepan-2- oder 3- oder 4- oder 5- oder 6- oder 7-yl; 2,3,4,5-Tetrahydro-1,3-oxazepin-2- oder 3- oder 4- oder 5- oder 6- oder 7-yl; 2,3,4,7-Tetrahydro-1,3-oxazepin-2- oder 3- oder 4- oder 5- oder 6- oder 7-yl; 2,3,6,7-Tetrahydro-1,3-oxazepin-2- oder 3- oder 4- oder 5- oder 6- oder 7-yl; 2,5,6,7-Tetrahydro-1,3-oxazepin-2- oder 4- oder 5- oder 6- oder 7-yl; 4,5,6,7-Tetrahydro-1,3-oxazepin-2- oder 4- oder 5- oder 6- oder 7-yl; 2,3-Dihydro-1,3-oxazepin-2- oder 3- oder 4- oder 5- oder 6- oder 7-yl; 2,5-Dihydro-1,3-oxazepin-2- oder 4- oder 5- oder 6- oder 7-yl; 2,7-Dihydro-1,3-oxazepin-2- oder 4- oder 5- oder 6- oder 7-yl; 4,5-Dihydro-1,3-oxazepin-2- oder 4- oder 5- oder 6- oder 7-yl; 4,7-Dihydro-1,3-oxazepin-2- oder 4- oder 5- oder 6- oder 7-yl; 6,7-Dihydro-1,3-oxazepin-2- oder 4- oder 5- oder 6- oder 7-yl; 1,3-Oxazepin-2- oder 4- oder 5- oder 6- oder 7-yl; 1,4-Oxazepan-2- oder 3- oder 5- oder 6- oder 7-yl; 2,3,4,5-Tetrahydro-1,4-oxazepin-2- oder 3- oder 4- oder 5- oder 6- oder 7-yl; 2,3,4,7-Tetrahydro-1,4-oxazepin-2- oder 3- oder 4- oder 5- oder 6- oder 7-yl; 2,3,6,7-Tetrahydro-1,4-oxazepin-2- oder 3- oder 5- oder 6- oder 7-yl; 2,5,6,7-Tetrahydro-1,4-oxazepin-2- oder 3- oder 5- oder 6- oder 7-yl; 4,5,6,7-Tetrahydro-1,4-oxazepin-2- oder 3- oder 4- oder 5- oder 6- oder 7-yl; 2,3-Dihydro-1,4-oxazepin-2- oder 3- oder 5- oder 6- oder 7-yl; 2,5-Dihydro-1,4-oxazepin-2- oder 3- oder 5- oder 6- oder 7-yl; 2,7-Dihydro-1,4-oxazepin-2- oder 3- oder 5- oder 6- oder 7-yl; 4,5-Dihydro-1,4-oxazepin-2- oder 3- oder 4- oder 5- oder 6- oder 7-yl; 4,7-Dihydro-1,4-oxazepin-2- oder 3- oder 4- oder 5- oder 6- oder 7-yl; 6,7-Dihydro-1,4-oxazepin-2- oder 3- oder 5- oder 6- oder 7-yl; 1,4-Oxazepin-2- oder 3- oder 5- oder 6- oder 7-yl; Isothiazolidin-2- oder 3- oder 4- oder 5-yl; 2,3-Dihydroisothiazol-2- oder 3- oder 4- oder 5-yl; 2,5-Dihydroisothiazol-2- oder 3- oder 4- oder 5-yl; 4,5-Dihydroisothiazol-3- oder 4- oder 5-yl; 1,3-Thiazolidin-2- oder 3- oder 4- oder 5-yl; 2,3-Dihydro-1,3-thiazol-2- oder 3- oder 4- oder 5-yl; 2,5-Dihydro-1,3-thiazol-2- oder 4- oder 5-yl; 4,5-Dihydro-1,3-thiazol-2- oder 4- oder 5-yl; 1,3-Thiazinan-2- oder 3- oder 4- oder 5- oder 6-yl; 3,4-Dihydro-2H-1,3-thiazin-2- oder 3- oder 4- oder 5- oder 6-yl; 3,6-Dihydro-2H-1,3-thiazin-2- oder 3- oder 4- oder 5- oder 6-yl; 5,6-Dihydro-2H-1,3-thiazin-2- oder 4- oder 5- oder 6-yl; 5,6-Dihydro-4H-1,3-thiazin-2- oder 4- oder 5- oder 6-yl; 2H-1,3-Thiazin-2- oder 4- oder 5- oder 6-yl; 6H-1,3-Thiazin-2- oder 4- oder 5- oder 6-yl; 4H-1,3-Thiazin-2- oder 4- oder 5- oder 6-yl.
Weitere Beispiele für "Heterocyclyl" sind ein partiell oder vollständig hydrierter heterocyclischer Rest mit 3 Heteroatomen aus der Gruppe N, O und S, wie beispielsweise 1,4,2-Dioxazolidin-2- oder 3- oder 5-yl; 1,4,2-Dioxazol-3- oder 5-yl; 1,4,2-Dioxazinan-2- oder -3- oder 5- oder 6-yl; 5,6-Dihydro-1,4,2-dioxazin-3- oder 5- oder 6-yl; 1,4,2-Dioxazin-3- oder 5- oder 6-yl; 1,4,2-Dioxazepan-2- oder 3- oder 5- oder 6- oder 7-yl; 6,7-Dihydro-5H-1,4,2-Dioxazepin-3- oder 5- oder 6- oder 7-yl; 2,3-Dihydro-7H-1,4,2-Dioxazepin-2- oder 3- oder 5- oder 6- oder 7-yl; 2,3-Dihydro-5H-1,4,2-Dioxazepin-2- oder 3- oder 5- oder 6- oder 7-yl; 5H-1,4,2-Dioxazepin-3- oder 5- oder 6- oder 7-yl; 7H-1,4,2-Dioxazepin-3- oder 5- oder 6- oder 7-yl.
Strukturbeispiele für gegebenenfalls weiter substituierte Heterocyclen sind auch im Folgenden aufgeführt:

| | | | | |
|---|---|---|---|---|
| 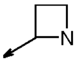 | 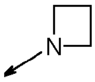 | 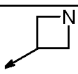 | 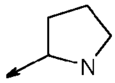 | 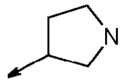 |
| 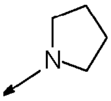 | 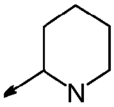 | 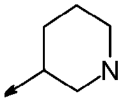 | 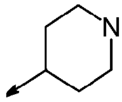 | 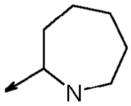 |
| 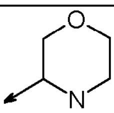 | 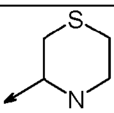 | 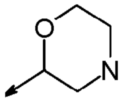 | 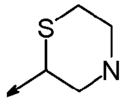 | 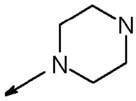 |
| 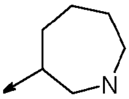 | 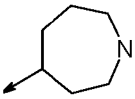 | 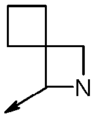 | 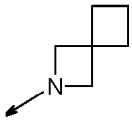 | 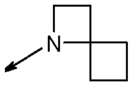 |
| 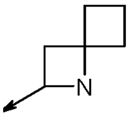 | 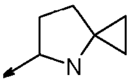 | 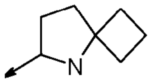 | 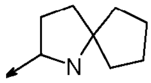 | 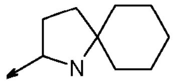 |
| 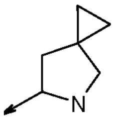 | 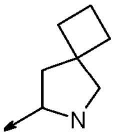 | 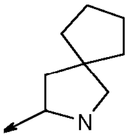 | 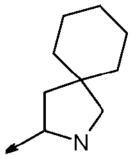 | 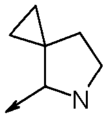 |
| 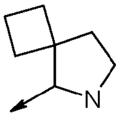 | 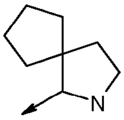 | 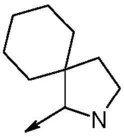 | 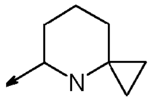 | 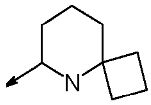 |

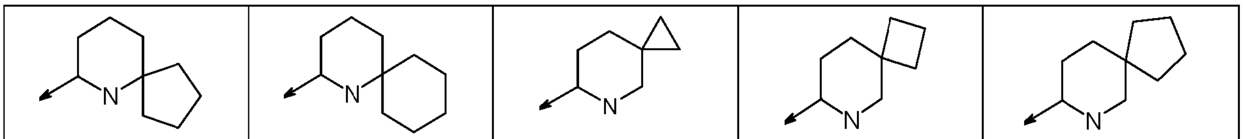

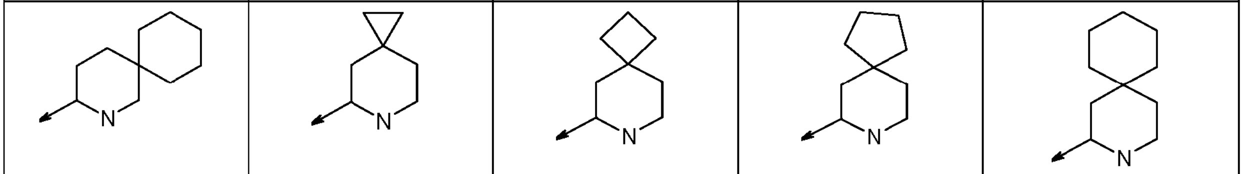

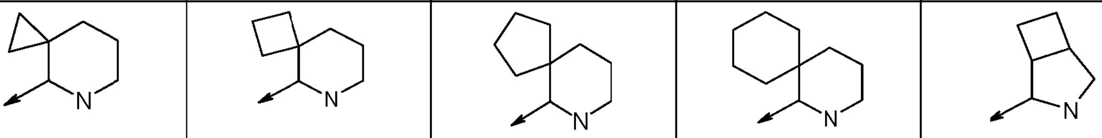

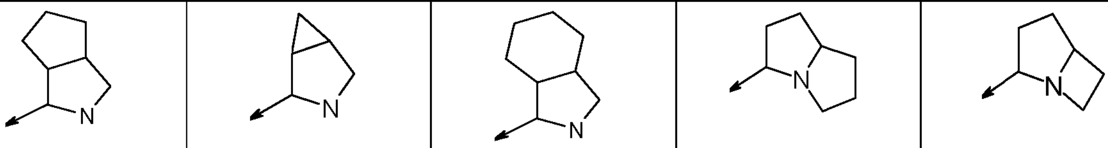

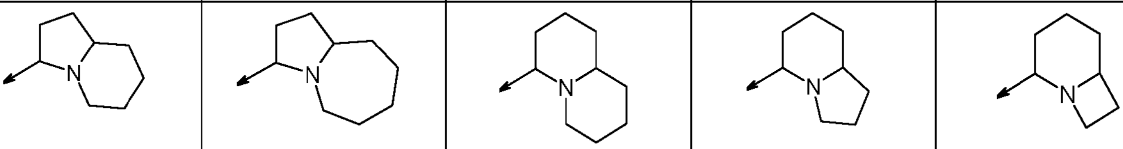

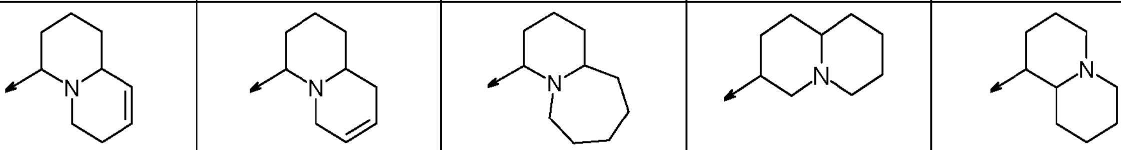

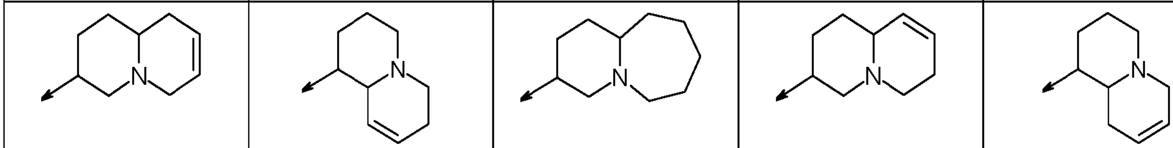

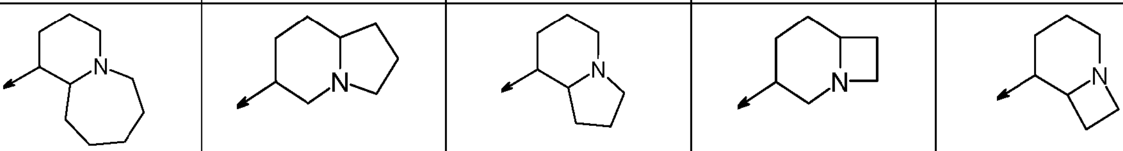

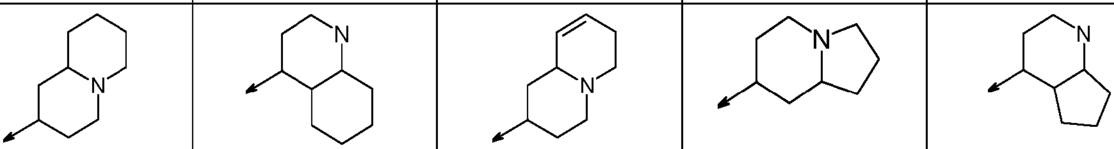

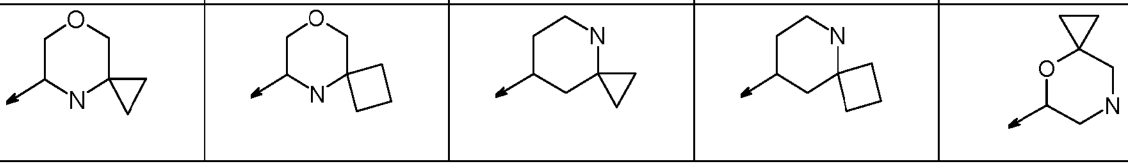

| | | | | |
|---|---|---|---|---|
| 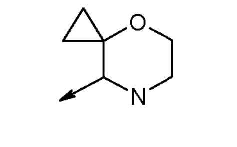 | 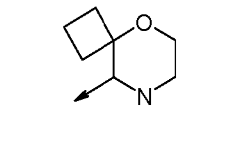 | 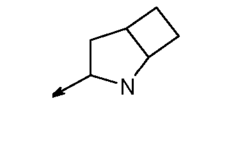 | 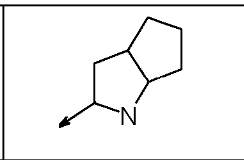 | 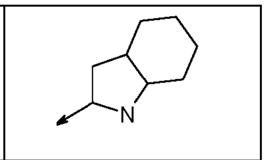 |
| 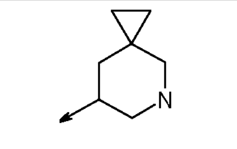 | 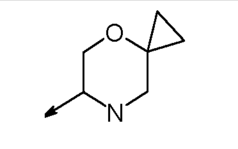 | 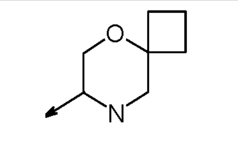 | 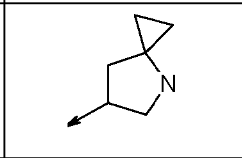 | 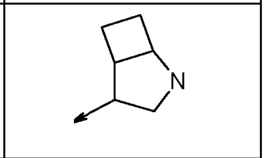 |
| 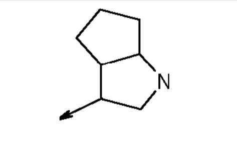 | 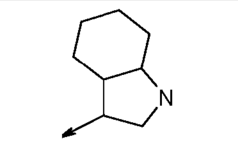 | 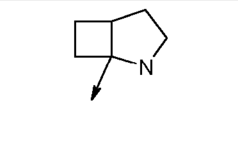 | 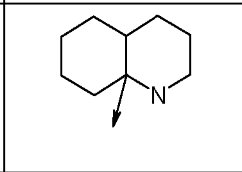 | 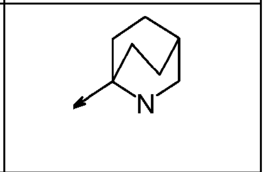 |
| 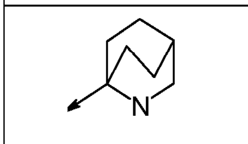 | 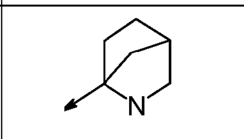 | 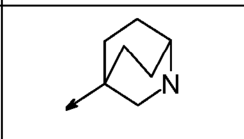 | 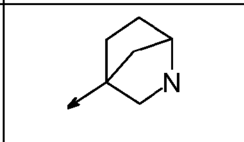 | 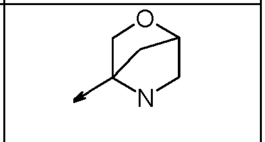 |
| 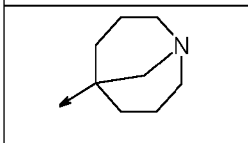 | 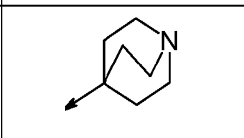 | 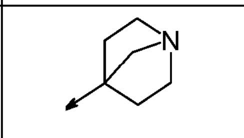 | 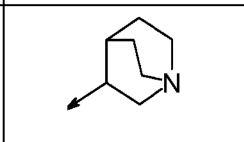 | 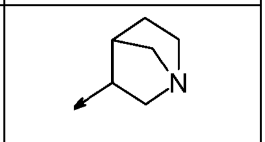 |
| 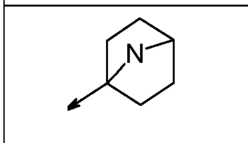 | 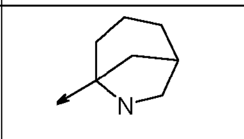 | 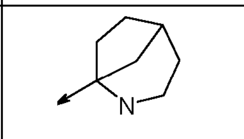 | 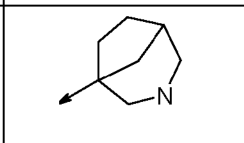 | 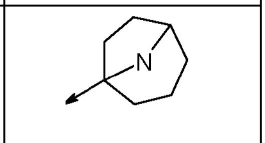 |

| | | | |
|---|---|---|---|
| 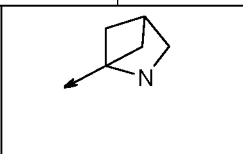 | 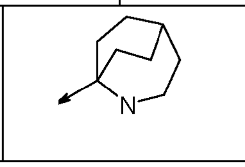 | 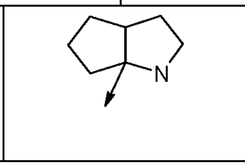 | 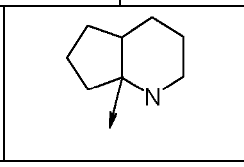 |

Die oben aufgeführten Heterocyclen sind bevorzugt beispielsweise durch Wasserstoff, Halogen, Alkyl, Haloalkyl, Hydroxy, Alkoxy, Cycloalkoxy, Aryloxy, Alkoxyalkyl, Alkoxyalkoxy, Cycloalkyl, Halocycloalkyl, Aryl, Arylalkyl, Heteroaryl, Heterocyclyl, Alkenyl, Alkylcarbonyl, Cycloalkylcarbonyl, Arylcarbonyl, Heteroarylcarbonyl, Alkoxycarbonyl, Hydroxycarbonyl, Cycloalkoxycarbonyl, Cycloalkylalkoxycarbonyl, Alkoxycarbonylalkyl, Arylalkoxycarbonyl, Arylalkoxycarbonylalkyl, Alkinyl, Alkinylalkyl, Alkylalkinyl, Tris-alkylsilylalkinyl, Nitro, Amino, Cyano, Haloalkoxy, Haloalkylthio, Alkylthio, Hydrothio, Hydroxyalkyl, Oxo, Heteroarylalkoxy, Arylalkoxy, Heterocyclylalkoxy, Heterocyclylalkylthio, Heterocyclyloxy, Heterocyclylthio, Heteroaryloxy, Bis-alkylamino, Alkylamino, Cycloalkylamino, Hydroxycarbonylalkylamino, Alkoxycarbonylalkylamino, Arylalkoxycarbonylalkylamino, Alkoxycarbonylalkyl(alkyl)amino, Aminocarbonyl, Alkylaminocarbonyl, Bis-alkylaminocarbonyl, Cycloalkylaminocarbonyl, Hydroxycarbonylalkylaminocarbonyl, Alkoxycarbonylalkylaminocarbonyl, Arylalkoxycarbonylalkylaminocarbonyl substituiert.

Wenn ein Grundkörper "durch einen oder mehrere Reste" aus einer Aufzählung von Resten (= Gruppe) oder einer generisch definierten Gruppe von Resten substituiert ist, so schließt dies jeweils die gleichzeitige Substitution durch mehrere gleiche und/oder strukturell unterschiedliche Reste ein.

Handelt es sich es sich um einen teilweise oder vollständig gesättigten Stickstoff-Heterocyclus, so kann dieser sowohl über Kohlenstoff als auch über den Stickstoff mit dem Rest des Moleküls verknüpft sein.

Als Substituenten für einen substituierten heterocyclischen Rest kommen die weiter unten genannten Substituenten in Frage, zusätzlich auch Oxo und Thioxo. Die Oxogruppe als Substituent an einem Ring-C-Atom bedeutet dann beispielsweise eine Carbonylgruppe im heterocyclischen Ring. Dadurch sind vorzugsweise auch Lactone und Lactame umfasst. Die Oxogruppe kann auch an den Heteroringatomen, die in verschiedenen Oxidationsstufen existieren können, z.B. bei N und S, auftreten und bilden dann beispielsweise die divalenten Gruppen N(O), S(O) (auch kurz SO) und $S(O)_2$ (auch kurz $SO_2$) im heterocyclischen Ring. Im Fall von -N(O)- und -S(O)-Gruppen sind jeweils beide Enantiomere umfasst.

Erfindungsgemäß steht der Ausdruck "Heteroaryl" für heteroaromatische Verbindungen, d. h. vollständig

ungesättigte aromatische heterocyclische Verbindungen, vorzugsweise für 5- bis 7-gliedrige Ringe mit 1 bis 4, vorzugsweise 1 oder 2 gleichen oder verschiedenen Heteroatomen, vorzugsweise O, S oder N. Erfindungsgemäße Heteroaryle sind beispielsweise 1H-Pyrrol-1-yl; 1H-Pyrrol-2-yl; 1H-Pyrrol-3-yl; Furan-2-yl; Furan-3-yl; Thien-2-yl; Thien-3-yl, 1H-Imidazol-1-yl; 1H-Imidazol-2-yl; 1H-Imidazol-4-yl; 1H-Imidazol-5-yl; 1H-Pyrazol-1-yl; 1H-Pyrazol-3-yl; 1H-Pyrazol-4-yl; 1H-Pyrazol-5-yl, 1H-1,2,3-Triazol-1-yl, 1H-1,2,3-Triazol-4-yl, 1H-1,2,3-Triazol-5-yl, 2H-1,2,3-Triazol-2-yl, 2H-1,2,3-Triazol-4-yl, 1H-1,2,4-Triazol-1-yl, 1H-1,2,4-Triazol-3-yl, 4H-1,2,4-Triazol-4-yl, 1,2,4-Oxadiazol-3-yl, 1,2,4-Oxadiazol-5-yl, 1,3,4-Oxadiazol-2-yl, 1,2,3-Oxadiazol-4-yl, 1,2,3-Oxadiazol-5-yl, 1,2,5-Oxadiazol-3-yl, Azepinyl, Pyridin-2-yl, Pyridin-3-yl, Pyridin-4-yl, Pyrazin-2-yl, Pyrazin-3-yl, Pyrimidin-2-yl, Pyrimidin-4-yl, Pyrimidin-5-yl, Pyridazin-3-yl, Pyridazin-4-yl, 1,3,5-Triazin-2-yl, 1,2,4-Triazin-3-yl, 1,2,4-Triazin-5-yl, 1,2,4-Triazin-6-yl, 1,2,3-Triazin-4-yl, 1,2,3-Triazin-5-yl, 1,2,4-, 1,3,2-, 1,3,6- und 1,2,6-Oxazinyl, Isoxazol-3-yl, Isoxazol-4-yl, Isoxazol-5-yl, 1,3-Oxazol-2-yl, 1,3-Oxazol-4-yl, 1,3-Oxazol-5-yl, Isothiazol-3-yl, Isothiazol-4-yl, Isothiazol-5-yl, 1,3-Thiazol-2-yl, 1,3-Thiazol-4-yl, 1,3-Thiazol-5-yl, Oxepinyl, Thiepinyl, 1,2,4-Triazolonyl und 1,2,4-Diazepinyl, 2H-1,2,3,4-Tetrazol-5-yl, 1H-1,2,3,4-Tetrazol-5-yl, 1,2,3,4-Oxatriazol-5-yl, 1,2,3,4-Thiatriazol-5-yl, 1,2,3,5-Oxatriazol-4-yl, 1,2,3,5-Thiatriazol-4-yl. Die erfindungsgemäßen Heteroarylgruppen können ferner mit einem oder mehreren, gleichen oder verschiedenen Resten substituiert sein. Sind zwei benachbarte Kohlenstoffatome Bestandteil eines weiteren aromatischen Rings, so handelt es sich um annellierte heteroaromatische Systeme, wie benzokondensierte oder mehrfach annellierte Heteroaromaten. Bevorzugt sind beispielsweise Chinoline (z. B. Chinolin-2-yl, Chinolin-3-yl, Chinolin-4-yl, Chinolin-5-yl, Chinolin-6-yl, Chinolin-7-yl, Chinolin-8-yl); Isochinoline (z. B. Isochinolin-1-yl, Isochinolin-3-yl, Isochinolin-4-yl, Isochinolin-5-yl, Isochinolin-6-yl, Isochinolin-7-yl, Isochinolin-8-yl); Chinoxalin; Chinazolin; Cinnolin; 1,5-Naphthyridin; 1,6-Naphthyridin; 1,7-Naphthyridin; 1,8-Naphthyridin; 2,6-Naphthyridin; 2,7-Naphthyridin; Phthalazin; Pyridopyrazine; Pyridopyrimidine; Pyridopyridazine; Pteridine; Pyrimidopyrimidine. Beispiele für Heteroaryl sind auch 5- oder 6-gliedrige benzokondensierte Ringe aus der Gruppe 1H-Indol-1-yl, 1H-Indol-2-yl, 1H-Indol-3-yl, 1H-Indol-4-yl, 1H-Indol-5-yl, 1H-Indol-6-yl, 1H-Indol-7-yl, 1-Benzofuran-2-yl, 1-Benzofuran-3-yl, 1-Benzofuran-4-yl, 1-Benzofuran-5-yl, 1-Benzofuran-6-yl, 1-Benzofuran-7-yl, 1-Benzothiophen-2-yl, 1-Benzothiophen-3-yl, 1-Benzo-thiophen-4-yl, 1-Benzothiophen-5-yl, 1-Benzothiophen-6-yl, 1-Benzothiophen-7-yl, 1H-Indazol-1-yl, 1H-Indazol-3-yl, 1H-Indazol-4-yl, 1H-Indazol-5-yl, 1H-Indazol-6-yl, 1H-Indazol-7-yl, 2H-Indazol-2-yl, 2H-Indazol-3-yl, 2H-Indazol-4-yl, 2H-Indazol-5-yl, 2H-Indazol-6-yl, 2H-Indazol-7-yl, 2H-Isoindol-2-yl, 2H-Isoindol-1-yl, 2H-Isoindol-3-yl, 2H-Isoindol-4-yl, 2H-Isoindol-5-yl, 2H-Isoindol-6-yl; 2H-Isoindol-7-yl, 1H-Benzimidazol-1-yl, 1H-Benzimidazol-2-yl, 1H-Benzimidazol-4-yl, 1H-Benzimidazol-5-yl, 1H-Benzimidazol-6-yl, 1H-Benzimidazol-7-yl, 1,3-Benzoxazol-2-yl, 1,3-Benzoxazol-4-yl,

1,3-Benzoxazol-5-yl, 1,3-Benzoxazol-6-yl, 1,3-Benzoxazol-7-yl, 1,3-Benzthiazol-2-yl, 1,3-Benzthiazol-4-yl, 1,3-Benzthiazol-5-yl, 1,3-Benzthiazol-6-yl, 1,3-Benzthiazol-7-yl, 1,2-Benzisoxazol-3-yl, 1,2-Benzisoxazol-4-yl, 1,2-Benzisoxazol-5-yl, 1,2-Benzisoxazol-6-yl, 1,2-Benzisoxazol-7-yl, 1,2-Benziso-thiazol-3-yl, 1,2-Benzisothiazol-4-yl, 1,2-Benzisothiazol-5-yl, 1,2-Benzisothiazol-6-yl, 1,2-Benziso-thiazol-7-yl.

Die Bezeichnung "Halogen" bedeutet beispielsweise Fluor, Chlor, Brom oder Iod. Wird die Bezeichnung für einen Rest verwendet, dann bedeutet "Halogen" beispielsweise ein Fluor-, Chlor-, Brom- oder Iodatom.

Erfindungsgemäß bedeutet "Alkyl" einen geradkettigen oder verzweigten offenkettigen, gesättigten Kohlenwasserstoffrest, der gegebenenfalls ein- oder mehrfach substituiert ist und im letzteren Falle als "substituiertes Alkyl" bezeichnet wird. Bevorzugte Substituenten sind Halogenatome, Alkoxy-, Haloalkoxy-, Cyano-, Alkylthio, Haloalkylthio-, Amino- oder Nitrogruppen, besonders bevorzugt sind Methoxy, Methyl, Fluoralkyl, Cyano, Nitro, Fluor, Chlor, Brom oder Iod. Die Vorsilbe "Bis" schließt auch die Kombination unterschiedlicher Alkylreste ein, z. B. Methyl(Ethyl) oder Ethyl(Methyl).

"Haloalkyl", "-alkenyl" und "-alkinyl" bedeuten durch gleiche oder verschiedene Halogenatome, teilweise oder vollständig substituiertes Alkyl, Alkenyl bzw. Alkinyl, z.B. Monohaloalkyl (= Monohalogenalkyl) wie z. B. $CH_2CH_2Cl$, $CH_2CH_2Br$, $CHClCH_3$, $CH_2Cl$, $CH_2F$; Perhaloalkyl wie z. B. $CCl_3$, $CClF_2$, $CFCl_2$, $CF_2CClF_2$, $CF_2CClFCF_3$; Polyhaloalkyl wie z. B. $CH_2CHFCl$, $CF_2CClFH$, $CF_2CBrFH$, $CH_2CF_3$; Der Begriff "Haloalkyl" umfasst dabei auch den Begriff "Fluoralkyl". Der Begriff "Perhaloalkyl" umfasst dabei auch den Begriff "Perfluoralkyl".

"Haloalkoxy" ist z.B. $OCF_3$, $OCHF_2$, $OCH_2F$, $OCF_2CF_3$, $OCH_2CF_3$ und $OCH_2CH_2Cl$; Entsprechendes gilt für Haloalkenyl und andere durch Halogen substituierten Reste.

Der hier beispielhaft genannte Ausdruck "($C_1$-$C_5$)-Alkyl" bedeutet eine Kurzschreibweise für geradkettiges oder verzweigtes Alkyl mit einem bis 5 Kohlenstoffatomen entsprechend der Bereichsangabe für C-Atome, d. h. umfasst z.B. die Reste Methyl, Ethyl, 1-Propyl, 2-Propyl, 1-Butyl, 2-Butyl, 2-Methylpropyl, tert-Butyl, 1-Pentyl, 2-Methylbut-1-yl, 3-Methylbut-1-yl, 2,2-Dimethyl-prop-1-yl. Allgemeine Alkylreste mit einem größeren angegebenen Bereich von C-Atomen, z. B. "($C_1$-$C_6$)-Alkyl", umfassen entsprechend auch geradkettige oder verzweigte Alkylreste mit einer größeren Zahl von C-Atomen, d. h. gemäß Beispiel auch die Alkylreste mit 5 und 6 C-Atomen.

Wenn nicht speziell angegeben, sind bei den Kohlenwasserstoffresten wie Alkyl-, Alkenyl- und Alkinylresten, auch in zusammengesetzten Resten, die niederen Kohlenstoffgerüste, z.B. mit 1 bis 6 C-Atomen bzw. bei ungesättigten Gruppen mit 2 bis 6 C-Atomen, bevorzugt. Alkylreste, auch in den zusammengesetzten Resten wie Alkoxy, Haloalkyl usw., bedeuten z.B. Methyl, Ethyl, n- oder i-Propyl, n-, i-, t- oder 2-Butyl, Pentyle, Hexyle, wie n-Hexyl, i-Hexyl und 1,3-Dimethylbutyl, Heptyle, wie n-Heptyl, 1-Methylhexyl und 1,4-Dimethylpentyl; Alkenyl- und Alkinylreste haben die Bedeutung der den Alkylresten entsprechenden möglichen ungesättigten Reste, wobei mindestens eine Doppelbindung bzw. Dreifachbindung enthalten ist. Bevorzugt sind Reste mit einer Doppelbindung bzw. Dreifachbindung.

Der Begriff "Alkenyl" schließt insbesondere auch geradkettige oder verzweigte offenkettige Kohlenwasserstoffreste mit mehr als einer Doppelbindung ein, wie 1,3-Butadienyl und 1,4-Pentadienyl, aber auch Allenyl- oder Kumulenyl-reste mit einer bzw. mehreren kumulierten Doppelbindungen, wie beispielsweise Allenyl (1,2-Propadienyl), 1,2-Butadienyl und 1,2,3-Pentatrienyl. Alkenyl bedeutet z.B. Vinyl, welches ggf. durch weitere Alkylreste substituiert sein kann, z B. (aber nicht beschränkt auf) ($C_2$-$C_6$)-Alkenyl wie Ethenyl, 1-Propenyl, 2-Propenyl, 1-Methylethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl.

Der Begriff "Alkinyl" schließt insbesondere auch geradkettige oder verzweigte offenkettige Kohlenwasserstoffreste mit mehr als einer Dreifachbindung oder auch mit einer oder mehreren Dreifachbindungen und einer oder mehreren Doppelbindungen ein, wie beispielsweise 1,3-Butatrienyl bzw. 3-Penten-1-in-1-yl. ($C_2$-$C_6$)-Alkinyl bedeutet z.B. Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-1-pentinyl, 3-Methyl-4-pentinyl, 4-Methyl-1-pentinyl, 4-Methyl-2-pentinyl, 1,1-Di-methyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl,

1-Ethyl-3-butinyl, 2-Ethyl-3-butinyl und 1-Ethyl-1-methyl-2-propinyl.

Der Begriff "Cycloalkyl" bedeutet ein carbocyclisches, gesättigtes Ringsystem mit vorzugsweise 3-8 Ring-C-Atomen, z.B. Cyclopropyl, Cyclobutyl, Cyclopentyl oder Cyclohexyl, das gegebenenfalls weiter substituiert ist, bevorzugt durch Wasserstoff, Alkyl, Alkoxy, Cyano, Nitro, Alkylthio, Haloalkylthio, Halogen, Alkenyl, Alkinyl, Haloalkyl, AMino, Alkylamino, Bisalkylamino, Alkocycarbonyl, Hydroxycarbonyl, Arylalkoxycarbonyl, Aminocarbonyl, Alkylaminocarbonyl, Cycloalkylaminocarbonyl. Im Falle von gegebenenfalls substituiertem Cycloalkyl werden cyclische Systeme mit Substituenten umfasst, wobei auch Substituenten mit einer Doppelbindung am Cycloalkylrest, z. B. eine Alkylidengruppe wie Methyliden, umfasst sind. Im Falle von gegebenenfalls substituiertem Cycloalkyl werden auch mehrcyclische aliphatische Systeme umfasst, wie beispielsweise Bicyclo[1.1.0]butan-1-yl, Bicyclo[1.1.0]butan-2-yl, Bicyclo[2.1.0]pentan-1-yl, Bicyclo[1.1.1]pentan-1-yl, Bicyclo[2.1.0]pentan-2-yl, Bicyclo[2.1.0]pentan-5-yl, Bicyclo[2.1.1]hexyl, Bicyclo[2.2.1]hept-2-yl, Bicyclo[2.2.2]octan-2-yl, Bicyclo[3.2.1]octan-2-yl, Bicyclo[3.2.2]nonan-2-yl, Adamantan-1-yl und Adamantan-2-yl, aber auch Systeme wie z. B. 1,1'-Bi(cyclopropyl)-1-yl, 1,1'-Bi(cyclopropyl)-2-yl. Der Ausdruck "($C_3$-$C_7$)-Cycloalkyl" bedeutet eine Kurzschreibweise für Cycloalkyl mit drei bis sieben Kohlenstoffatomen entsprechend der Bereichsangabe für C-Atome.

"Cycloalkenyl" bedeutet ein carbocyclisches, nicht aromatisches, partiell ungesättigtes Ringsystem mit vorzugsweise 4-8 C-Atomen, z.B. 1-Cyclobutenyl, 2-Cyclobutenyl, 1-Cyclopentenyl, 2-Cyclopentenyl, 3-Cyclopentenyl, oder 1-Cyclohexenyl, 2-Cyclohexenyl, 3-Cyclohexenyl, 1,3-Cyclohexadienyl oder 1,4-Cyclohexadienyl, wobei auch Substituenten mit einer Doppelbindung am Cycloalkenylrest, z. B. eine Alkylidengruppe wie Methyliden, umfasst sind. Im Falle von gegebenenfalls substituiertem Cycloalkenyl gelten die Erläuterungen für substituiertes Cycloalkyl entsprechend.

Der Begriff "Alkyliden", z. B. auch in der Form ($C_1$-$C_{10}$)-Alkyliden, bedeutet den Rest eines geradkettigen oder verzweigten offenkettigen Kohlenwasserstoffrests, der über eine Zweifachbindung gebunden ist. Als Bindungsstelle für Alkyliden kommen naturgemäß nur Positionen am Grundkörper in Frage, an denen zwei H-Atome durch die Doppelbindung ersetzt werden können; Reste sind z. B. $=CH_2$, $=CH-CH_3$, $=C(CH_3)-CH_3$, $=C(CH_3)-C_2H_5$ oder $=C(C_2H_5)-C_2H_5$. Cycloalkyliden bedeutet ein carbocyclischer Rest, der über eine Zweifachbindung gebunden ist.

Der Begriff "Alkylen", z. B. auch in der Form ($C_1$-$C_8$)-Alkylen, bedeutet den Rest eines geradkettigen oder verzweigten offenkettigen Kohlenwasserstoffrests, der an zwei Positionen an weitere Gruppen gebunden ist.

"Alkoxyalkyl" steht für einen über eine Alkylgruppe gebundenen Alkoxyrest und "Alkoxyalkoxy" bedeutet einen über ein Sauerstoffatom gebundenen Alkoxyalkylrest, z.B. (aber nicht beschränkt auf) Methoxymethoxy, Methoxyethoxy, Ethoxyethoxy, Methoxy-n-propyloxy.

"Arylalkyl" steht für einen über eine Alkylgruppe gebundenen Arylrest, "Heteroarylalkyl" bedeutet einen über eine Alkylgruppe gebundenen Heteroarylrest, und "Heterocyclylalkyl" bedeutet einen über eine Alkylgruppe gebundenen Heterocyclylrest.

"Cycloalkylalkyl" steht für einen über eine Alkylgruppe gebundenen Cycloalkylrest, z. B. (aber nicht beschränkt auf) Cyclopropylmethyl, Cyclobutylmethyl, Cyclopentylmethyl, Cyclohexylmethyl,

1-Cyclopropyleth-1-yl, 2-Cyclopropyleth-1-yl, 1-Cyclopropylprop-1-yl, 3-Cyclopropylprop-1-yl.

"Arylalkenyl" steht für einen über eine Alkenylgruppe gebundenen Arylrest, "Heteroarylalkenyl" bedeutet einen über eine Alkenylgruppe gebundenen Heteroarylrest, und "Heterocyclylalkenyl" bedeutet einen über eine Alkenylgruppe gebundenen Heterocyclylrest.

"Arylalkinyl" steht für einen über eine Alkinylgruppe gebundenen Arylrest, "Heteroarylalkinyl" bedeutet einen über eine Alkinylgruppe gebundenen Heteroarylrest, und "Heterocyclylalkinyl" bedeutet einen über eine Alkinylgruppe gebundenen Heterocyclylrest.

Erfindungsgemäß steht "Haloalkylthio" - in Alleinstellung oder als Bestandteil einer chemischen Gruppe - für geradkettiges oder verzweigtes S-Halogenalkyl, vorzugsweise mit 1 bis 8, oder mit 1 bis 6 Kohlenstoffatomen, wie $(C_1\text{-}C_8)$-, $(C_1\text{-}C_6)$- oder $(C_1\text{-}C_4)$-Haloalkylthio, z.B. (aber nicht beschränkt auf) Trifluormethylthio, Pentafluorethylthio, Difluormethyl, 2,2-Difluoreth-1-ylthio, 2,2,2-Difluoreth-1-ylthio, 3,3,3-prop-1-ylthio.

"Halocycloalkyl" und "Halocycloalkenyl" bedeuten durch gleiche oder verschiedene Halogenatome, wie z. B. F, Cl und Br, oder durch Haloalkyl, wie z. B. Trifluormethyl oder Difluormethyl teilweise oder vollständig substituiertes Cycloalkyl oder Cycloalkenyl, z.B. 1-Fluorcycloprop-1-yl, 2-Fluorcycloprop-1-yl, 2,2-Difluorcycloprop-1-yl, 1-Fluorcyclobut-1-yl, 1-Trifluormethylcycloprop-1-yl, 2-Trifluor-methylcycloprop-1-yl, 1-Chlor-cycloprop-1-yl, 2-Chlorcycloprop-1-yl, 2,2-Dichlorcycloprop-1-yl,
3,3-Difluorcyclobutyl.

Die Verbindungen der Formel (I) und (II) können je nach Art und Verknüpfung der Substituenten als Stereoisomere vorliegen. Sind beispielsweise ein oder mehrere asymmetrisch substiuierte Kohlenstoffatome und/oder Sulfoxide vorhanden, so können Enantiomere und Diastereomere auftreten. Stereoisomere lassen sich aus den bei der Herstellung anfallenden Gemischen nach üblichen Trennmethoden, beispielsweise durch chromatographische Trennverfahren, erhalten. Ebenso können Stereoisomere durch Einsatz stereoselektiver Reaktionen unter Verwendung optisch aktiver Ausgangs- und/oder Hilfsstoffe selektiv hergestellt werden.

Die Erfindung betrifft auch alle Stereoisomeren und deren Gemische, die von der Formel (I) und (II) umfaßt, jedoch nicht spezifisch definiert sind. Im Folgenden wird der Einfachheit halber jedoch stets von Verbindungen der Formel (I) und (II) gesprochen, obwohl sowohl die reinen Verbindungen als gegebenenfalls auch Gemische mit unterschiedlichen Anteilen an isomeren Verbindungen gemeint sind.

Je nach Art der oben definierten Substituenten weisen die Verbindungen der Formel (I) und (II) saure Eigenschaften auf und können mit anorganischen oder organischen Basen oder mit Metallionen Salze, gegebenenfalls auch innere Salze oder Addukte bilden. Tragen die Verbindungen der Formel (I) oder (II) Hydroxy, Carboxy oder andere, saure Eigenschaften induzierende Gruppen, so können diese Verbindungen mit Basen zu Salzen umgesetzt werden.Geeignete Basen sind beispielsweise Hydroxide, Carbonate, Hydrogencarbonate der Alkali- und Erdalkalimetalle, insbesondere die von Natrium, Kalium, Magnesium und Calcium, weiterhin Ammoniak, primäre, sekundäre und teritäre Amine mit $(C_1\text{-}C_4\text{-})$-Alkyl-Gruppen, Mono-, Di- und Trialkanolamine von $(C_1\text{-}C_4)$-Alkanolen, Cholin sowie Chlorcholin, sowie organische Amine, wie Trialkylamine, Morpholin, Piperidin oder Pyridin. Diese Salze sind Verbindungen, in denen der acide Wasserstoff durch ein für die Landwirtschaft geeignetes Kation ersetzt wird, beispielsweise Metallsalze, insbesondere Alkalimetallsalze oder Erdalkalimetallsalze, insbesondere Natrium- und Kaliumsalze, oder auch Ammoniumsalze, Salze mit organischen Aminen oder quartäre (quaternäre) Ammoniumsalze, zum Beispiel mit Kationen der Formel $[NRR'R''R''']^+$, worin R bis R‴ jeweils unabhängig voneinander einen organischen Rest, insbesondere Alkyl, Aryl, Aralkyl oder Alkylaryl darstellen. Infrage kommen auch Alkylsulfonium- und Alkylsulfoxoniumsalze, wie $(C_1\text{-}C_4)$-Trialkylsulfonium- und $(C_1\text{-}C_4)$-Trialkylsulfoxoniumsalze.

Die Verbindungen der Formel (I) und (II) können durch Anlagerung einer geeigneten anorganischen oder organischen Säure, wie beispielsweise Mineralsäuren, wie beispielsweise HCl, HBr, $H_2SO_4$, $H_3PO_4$ oder $HNO_3$, oder organische Säuren, z. B. Carbonsäuren, wie Ameisensäure, Essigsäure, Propionsäure, Oxalsäure, Milchsäure oder Salicylsäure oder Sulfonsäuren, wie zum Beispiel p-Toluolsulfonsäure, an eine basische Gruppe, wie z.B. Amino, Alkylamino, Dialkylamino, Piperidino, Morpholino oder Pyridino, Salze bilden. Diese Salze enthalten dann die konjugierte Base der Säure als Anion.

Geeignete Substituenten, die in deprotonierter Form, wie z.B. Sulfonsäuren oder Carbonsäuren, vorliegen, können innere Salze mit ihrerseits protonierbaren Gruppen, wie Aminogruppen bilden.

Ist eine Gruppe mehrfach durch Reste substituiert, so bedeutet dies, dass diese Gruppe durch einen oder mehrere gleiche oder verschiedene der genannten Reste substituiert ist.

In allen nachfolgend genannten Formeln haben die Substituenten und Symbole, sofern nicht anders definiert, dieselbe Bedeutung wie unter der allgemeinen Formel (I) und (II) der Herbizide (A) und (B) beschrieben. Pfeile in einer

chemischen Formel bedeuten die Verknüpfungsorte zum restlichen Molekül.

Im Folgenden werden, jeweils für die einzelnen Substituenten der Herbizide (A) gemäß der allgemeinen Formel (I) wie oben dargestellt, bevorzugte, besonders bevorzugte und ganz besonders bevorzugte Bedeutungen beschrieben. Die übrigen Substituenten der Herbizide (A) gemäß der allgemeinen Formel (I), welche nachfolgend nicht genannt werden, weisen die oben genannte Bedeutung auf.

*In einer ersten Ausführungsform* der vorliegenden Erfindung bedeutet

$R^3$ Methyl, Vinyl oder Methoxy;

$R^4$ Wasserstoff, Methyl, Ethyl oder Isopropyl;

Z Z-1 oder Z-2, wobei Z-1 und Z-2 folgende Bedeutung haben:

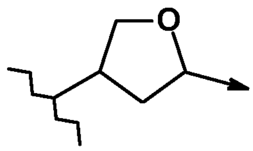

Z-1

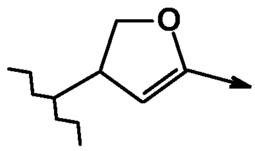

Z-2

worin der Pfeil jeweils für eine Bindung zur Gruppe C=O der Formel (I) steht;

$X^2$, $X^4$ und $X^6$ Wasserstoff;

$X^3$ und $X^5$ unabhängig voneinander Wasserstoff, Fluor oder Chlor.

*In einer zweiten Ausführungsform* der vorliegenden Erfindung bedeutet

$R^3$ Methyl, Vinyl oder Methoxy;
$R^4$ Wasserstoff, Methyl oder Isopropyl;
Z Z-1 oder Z-2, wobei Z-1 und Z-2 folgende Bedeutung haben:

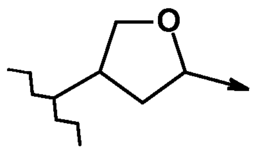

Z-1

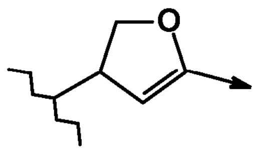

Z-2

worin der Pfeil jeweils für eine Bindung zur Gruppe C=O der Formel (I) steht;
$X^2$, $X^4$ und $X^6$ Wasserstoff;
$X^3$ und $X^5$ unabhängig voneinander Wasserstoff, Fluor oder Chlor.

Bevorzugt bedeutet $R^4$ Methyl.
Bevorzugt bedeutet $R^3$ Vinyl.
Bevorzugt bedeutet Z Z-1.
Bevorzugt bedeuten $X^3$ und $X^5$ Fluor.

*In einer dritten Ausführungsform* der vorliegenden Erfindung enthält die herbizide Zusammensetzung neben mindestens einer Komponente (B) wie oben definiert bevorzugt (A) eine oder mehrere Verbindungen [Komponente (A)] der allgemeinen Formel (I) oder deren agrochemisch verträglichen Salze [Herbizide (A)] gemäß Tabellen 1a und 1b.

Tabelle 1a: Bevorzugte Verbindungen der Formel (I) (Herbizid (A)):

| Verbindungs-Nr. | $X^3$ | $X^5$ | $R^3$ | $R^4$ | Z | Kommentar |
|---|---|---|---|---|---|---|
| A1 | Cl | Cl | $OCH_3$ | $CH_3$ | Z-1 | Z-1 mit Konfiguration 2,4-cis |
| A2 | Cl | Cl | $CH=CH_2$ | $CH_3$ | Z-1 | Z-1 mit Konfiguration 2,4-cis |

(fortgesetzt)

| Verbindungs-Nr. | $X^3$ | $X^5$ | $R^3$ | $R^4$ | Z | Kommentar |
|---|---|---|---|---|---|---|
| A3 | F | F | (S) - $CH=CH_2$ | $CH_3$ | Z-1 | Z-1 mit Konfiguration 2,4-cis; 2 Diastereomere |
| A4 | F | H | $CH_3$ | $CH(CH_3)_2$ | Z-1 | Z-1 mit Konfiguration 2,4-cis |
| A5 | F | F | (S) - $CH=CH_2$ | $CH_3$ | Z-13 | Z-13 mit (3R)-Konfiguration |
| A6 | F | F | (R) - $CH_3$ | $CH_3$ | Z-13 | Z-13 mit (3R)-Konfiguration |

Tabelle 1b: IUPAC Namen sowie die Strukturformeln der bevorzugten Verbindungen der Formel (I) (Herbizid (A))

| Verbindungs-Nr. | IUPAC Name | Strukturformel |
|---|---|---|
| A1 | Methyl rel-(2R,4R)-4-[[3-(3,5-dichlorophenyl)-5-methoxy-4H-isoxazole-5-carbonyl] amino]tetrahydrofuran-2-carboxylate | 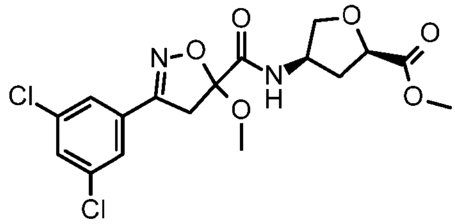 rel-(2R,4R) |
| A2 | Methyl rel-(2R,4R)-4-[[3-(3,5-dichlorophenyl)-5-vinyl-4H-isoxazole-5-carbonyl] amino] tetrahydrofuran-2-carboxylate | 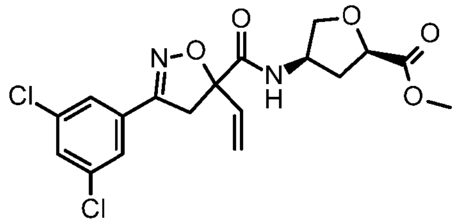 rel-(2R,4R) |
| A3 | Methyl-rel-(2R,4R)-4-[[(5S)-3-(3,5-difluorophenyl)-5-vinyl-4H-isoxazole-5-carbonyl]amino]tetrahydrofuran-2-carboxylate | 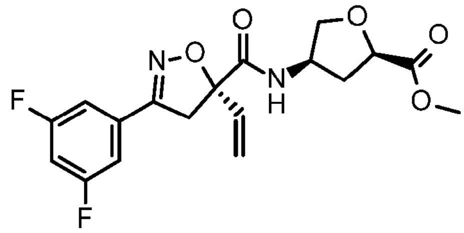 rel-(2R,4R) |
| A4 | Isopropyl rel-(2R,4R)-4-[[3-(3-fluorophenyl)-5-methyl-4H-isoxazole-5-carbonyl]amino]tetrahydrofuran-2-carboxylate | 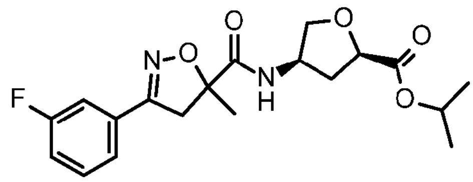 rel-(2R,4R) |
| A5 | Methyl (3R)-3-[[(5S)-3-(3,5-difluorophenyl)-5-vinyl-4H-isoxazole-5-carbonyl]amino]-2,3 - dihydrofuran-5 -carboxylate | 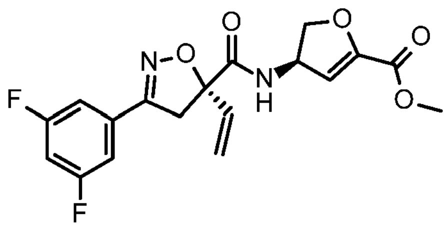 |

(fortgesetzt)

| Verbindungs-Nr. | IUPAC Name | Strukturformel |
|---|---|---|
| A6 | Methyl (3R)-3-[[(5R)-3-(3,5-difluorophenyl)-5-methyl-4H-isoxazole-5-carbonyl]amino]-2,3 -dihydrofuran-5 -carboxylat | 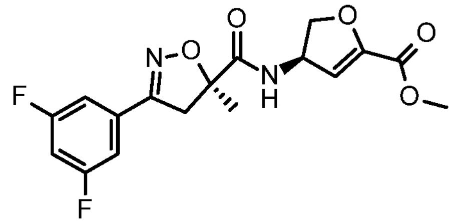 |

Die Bezeichnung rel-(2R,4R) entspricht der IUPAC Nomenklatur und bedeutet, dass beide cis-Konfigurationen der Substituenten in 2- und 4-Position vorliegen

In den Tabellen 1a und 1b sind die Verbindungen durch die chemische Formel der Hauptkomponente bezeichnet, wobei diese Komponente in einer chemischen Reinheit von vorzugsweise mindestens 95 Gewichtsprozent der Verbindung vorliegt. Naturgemäß können die Verbindungen auch mit niedrigeren Reinheiten eingesetzt werden. Insbesondere wenn Nebenkomponenten der Verbindungen überwiegend oder ganz aus Stereoisomeren der jeweiligen Verbindungen (A) bestehen, werden bei der Anwendung Wirksamkeiten erreicht. Bevorzugt sind als Herbizide (A) deshalb auch Mischungen von zwei oder mehreren erfindungsgemäßen Verbindungen (A)

Wenn in den Tabellen 1a und 1b die stereochemische Orientierung an einem C-Atom definiert ist, so handelt es sich bei der Hauptkomponente der Verbindung um ein Stereoisomer oder Stereoisomerengemisch, das an dem bezeichneten C-Atom die R- oder S-Konfiguration aufweist.

Wenn keine Stereochemie definiert ist, so handelt es sich um ein Racemat. Sind mehrere Stereozentren vorhanden und jeweils die Konfiguration mit R oder S bezeichnet, handelt es sich um Verbindungen mit der genannten Stereochemie an den bezeichneten Zentren.

Ist bei mehreren Zentren keine R oder S Konfiguration angegeben, handelt es sich um racemische Gemische, d. h. darin enthaltene spiegelbildliche Stereoisomere (Enantiomere eines Enantiomerenpaars) sind in gleichen Anteilen im Gemisch enthalten. Wenn nicht näher angegeben, sind in den Tabellen 1a und 1b bei racemischen Verbindungen (A) mit mehreren Stereozentren die diastereomeren Komponenten näherungsweise in gleichen Anteilen enthalten. Für die praktische Anwendung kommen aber bei racemischen Verbindungen mit mehreren Stereozentren Gemische von Diastereomeren mit unterschiedlichen Anteilen der diastereomeren Komponenten vor.

Bevorzugt sind dabei auch die jeweils aufgeführten Verbindungen
in einer stereochemischen Reinheit von 60 bis 100 %, vorzugsweise 70-100 %, insbesondere 80 bis 100 %.

Bevorzugt sind auch die aufgeführten Gemische von stereoisomeren Verbindungen (A).

Die Verbindungen der Formel (I) sind aus der Anmeldung WO2018/228985 A1 bekannt und können nach den dort beschriebenen Verfahren hergestellt werden.

Die Aufwandmengen der Herbizide (A) liegen im Bereich von 0,01 bis 2000 g Aktivsubstanz pro Hektar (im folgenden g a.i./ha), vorzugsweise 0,02 bis 1000 g a.i./ha, insbesondere 0,5 bis 750 g a.i./ha). In den erfindungsgemäßen Kombinationen werden im Rahmen der genannten Aufwandmengen im Vergleich zur Einzelapplikation meist niedrigere Aufwandmengen des jeweiligen Wirkstoffs benötigt, vorzugsweise 0,01 bis 1000 g a.i./ha, insbesondere 0,02 bis 500 g a.i./ha, und am meisten bevorzugt 5 bis 250 g a.i./ha.

Einige Herbizide (B) haben sich jedoch überraschenderweise als besonders gute Kombinationspartner erwiesen. Im Folgenden sind die bevorzugten und besonders bevorzugten Herbizide (B) gemäß der allgemeinen Formel (II) wie oben dargestellt als weitere Ausführungsformen der vorliegenden Erfindung aufgelistet.

*In einer vierten Ausführungsform* der vorliegenden Erfindung enthält die herbizide Zusammensetzung bevorzugt Komponente (B) der allgemeinen Formel (II) wie in der untenstehenden Tabelle 2 spezifiziert., Dabei stehen $R^3$ und $R^6$ für Wasserstoff, $R^4$ und $R^5$ bilden eine Gruppe $-CH_2-CH_2-$ und formen mit den Kohlenstoffatomen, an die sie gebunden sind, sowie der Gruppe Y einen Ring. $R^1$, $R^2$, G und Y haben die untenstehenden Bedeutungen:

Tabelle 2:

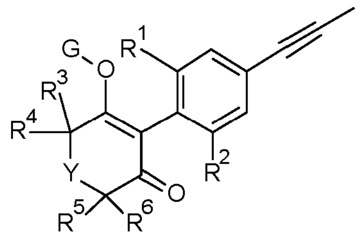

(II),

| Bsp.-Nr. | $R^1$ | $R^2$ | Y | G |
|---|---|---|---|---|
| B1 | $OCH_3$ | H | $-CH_2-$ | H |
| B24 | $OCH_3$ | H | $-CH_2-$ | Na |
| B29 | $OCH_3$ | H | $-CH_2-$ | $-C(=O)OCH_3$ |
| B30 | $OCH_3$ | H | $-CH_2-$ | $-C(=O)OCH_2CH_3$ |

Besonders bevorzugt sind die herbiziden Wirkstoffe

B1, B24 und B29

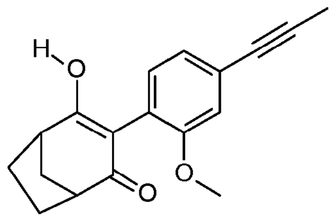

B1: 4-Hydroxy-3-[2-methoxy-4-(prop-1-in-1-yl)phenyl]bicyclo[3.2.1]oct-3-en-2-on

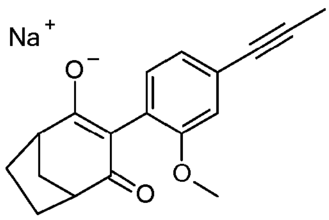

B24: Natrium-3-[2-methoxy-4-(prop-1-in-1-yl)phenyl]-4-oxobicyclo[3.2.1]oct-2-en-2-olat

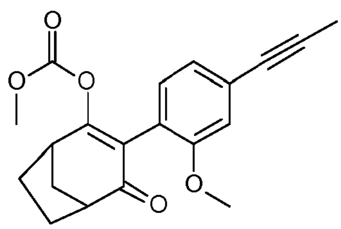

B29: 3-[2-Methoxy-4-(1-propin-1-yl)phenyl]-4-oxobicyclo[3.2.1]oct-2-en-2-yl methylcarbonat.

Im Rahmen der vorliegenden Erfindung ist es möglich, die einzelnen bevorzugten und besonders bevorzugten beliebig miteinander zu kombinieren. Das heißt, dass herbizide Zusammensetzungen herbizid wirksame Verbindungen (A) und (B) oder deren agrochemisch verträglichen Salze [Komponente (A)] sowie (B) ein oder mehrere Herbizide [Komponente (B)] von der vorliegenden Erfindung umfasst sind, in welchen beliebige offenbarte, bevorzugte und

besonders bevorzugte Ausführungsformen wie oben aufgeführt miteinander kombiniert werden können.

Einige binäre Kombinationen enthaltend herbizid wirksame Verbindungen (A) und (B) oder deren agrochemisch verträglichen Salze haben sich zum Zeitpunkt der Anmeldung überraschenderweise als besonders vorteilhaft erwiesen.

Diese sind in nachstehender Tabelle 3 genannt.

Tabelle 3: Besonders bevorzugte binäre Zusammensetzungen

| Binäre Zusammensetzung | Herbizid (A) | Herbizid (B) |
|---|---|---|
| Z1 | A1 | B1 |
| Z2 | A1 | B24 |
| Z3 | A1 | B29 |
| Z4 | A1 | B30 |
| Z5 | A2 | B1 |
| Z6 | A2 | B24 |
| Z7 | A2 | B29 |
| Z8 | A2 | B30 |
| Z9 | A3 | B1 |
| Z10 | A3 | B24 |
| Z11 | A3 | B29 |
| Z12 | A3 | B30 |
| Z13 | A4 | B1 |
| Z14 | A4 | B24 |
| Z15 | A4 | B29 |
| Z16 | A4 | B30 |
| Z17 | A5 | B1 |
| Z18 | A5 | B24 |
| Z19 | A5 | B29 |
| Z20 | A5 | B30 |
| Z21 | A6 | B1 |
| Z22 | A6 | B24 |
| Z23 | A6 | B29 |
| Z24 | A6 | B30 |

Weiterhin können die erfindungsgemäßen Kombinationen zusammen mit anderen Wirkstoffen wie die erwähnten Wirkstoffe (Herbizide, Fungizide, Insektizide, Akarizide etc.) und/oder Pflanzenwachstumsregulatoren oder Hilfstoffe aus der Gruppe der im Pflanzenschutz üblichen Zusatzstoffe, wie Adjuvantien und Formulierungshilfsmittel, eingesetzt werden. Die Kombination der Pflanzenschutzmittelwirkstoffe, welche die Wirkstoffe (A) und (B) und gegebenenfalls weitere Wirkstoffe enthalten, werden hier kurz als "Herbizid-Kombination" bezeichnet. Deren Anwendungsformen wie Formulierungen oder Tankmischungen stellen herbizide Mittel (Zusammensetzungen) dar.

Gegenstand der Erfindung sind deshalb auch die herbiziden Mittel, welche die erfindungsgemäßen Wirkstoffkombinationen mit im Pflanzenschutz üblichen Zusatzstoffen, wie Adjuvantien und Formulierungshilfsmitteln, und gegebenenfalls weiteren Pflanzenschutzmittelwirkstoffen enthalten.

Gegenstand der Erfindung ist auch die Verwendung der bzw. das Anwendungsverfahren unter Verwendung der erfindungsgemäßen Wirkstoffkombinationen als Herbizide und Pflanzenwachstumsregulatoren, vorzugsweise als Herbizide und Pflanzenwachstumsregulatoren mit einem synergistisch wirksamen Gehalt an der jeweils enthaltenen Wirkstoffkombination.

Die Aufwandmengen der Herbizide (A) und (B) sind im Prinzip bekannt und liegen in der Regel im Bereich von 0,01 bis 4000 g a.i./ha, vorzugsweise im Bereich von 0,02 bis 2000 g a.i./ha, besonders bevorzugt im Bereich von 0,5 bis

1500 g a.i./ha und am stärksten bevorzugt im Bereich von 0,5 bis 800 g a.i./ha.

Die Mengenverhältnisse (A):(B) bezogen auf das Gewicht liegen in Abhängigkeit von den wirksamen Aufwandmengen in der Regel im Bereich von 1:100000 bis 2000:1, vorzugsweise 1:40000 bis 750:1, insbesondere im Bereich von 1: 15000 bis 500:1, noch weiter bevorzugt im Bereich von 1:300 bis 400:1 und am stärksten bevorzugt im Bereich 1:30 bis 30:1.

Die erfindungsgemäßen herbiziden Zusammensetzungen können auch mit weiteren Herbiziden und Pflanzenwachstumsregulatoren kombiniert werden, um beispielsweise das Wirkungsspektrum zu ergänzen. Als Kombinationspartner für die erfindungsgemäßen Verbindungen in Mischungsformulierungen oder im Tank-Mix sind beispielsweise bekannte Wirkstoffe, die auf einer Inhibition von beispielsweise Acetolactat-Synthase, Acetyl-CoA-Carboxylase, Cellulose-Synthase, Enolpyruvylshikimat-3-phosphat-Synthase, Glutamin-Synthetase, p-Hydroxyphenylpyruvat-Dioxygenase, Phytoendesaturase, Photosystem I, Photosystem II, Protoporphyrinogen-Oxidase beruhen, einsetzbar, wie sie z.B. aus Weed Research 26 (1986) 441-445 oder "The Pesticide Manual", 14th edition, The British Crop Protection Council and the Royal Soc. of Chemistry, 2006, das korrespondierende "e-Pesticide Manual Version 4 (2006)" und dort zitierter Literatur bekannt sind. Weitere Handelsnamen und "common names" sind im "Compendium of Pesticide Common Names" verzeichnet (abfragbar im Internet unter http://www.alanwood.net/pesticides).

Als bekannte Herbizide, die mit den erfindungsgemäßen Verbindungen kombiniert werden können, sind z.B. folgende Wirkstoffe zu nennen (Anmerkung: Die Verbindungen sind entweder mit dem "common name" nach der International Organization for Standardization (ISO) oder mit dem chemischen Namen, ggf. zusammen mit einer üblichen Codenummer bezeichnet) und umfassen stets sämtliche Anwendungsformen wie Säuren, Salze, Ester und Isomere wie Stereoisomere und optische Isomere. Dabei sind eine und zum Teil auch mehrere Anwendungsformen genannt:

Acetochlor, Acifluorfen, Acifluorfen-Methyl, Acifluorfen-Natrium, Aclonifen, Alachlor, Allidochlor, Alloxydim, Alloxydim-Natrium, Ametryn, Amicarbazone, Amidochlor, Amidosulfuron, 4-Amino-3-chlor-6-(4-chlor-2-fluor-3-methylphenyl)-5-fluorpyridin-2-carbon-säure, Aminocyclopyrachlor, Aminocyclopyrachlor-Kalium, Aminocyclopyrachlor-Methyl, Aminopyralid, Aminopyralid-Dimethylammonium, Aminopyralid-Tripromin, Amitrol, Ammoniumsulfamat, Anilofos, Asulam, Asulam-Kalium, Asulam-Natrium, Atrazin, Azafenidin, Azimsulfuron, Beflubutamid, (S)-(-)-Beflubutamid, Beflubutamid-M, Benazolin, Benazolin-Ethyl, Benazolin-Dimethylammonium, Benazolin-Kalium, Benfluralin, Benfuresat, Bensulfuron, Bensulfuron-Methyl, Bensulid, Bentazon, Bentazon-Natrium, Benzobicyclon, Benzofenap, Bicyclopyron, Bifenox, Bilanafos, Bilanafos-Natrium, Bipyrazon, Bispyribac, Bispyribac-Natrium, Bixlozon, Bromacil, Bromacil-Lithium, Bromacil-Natrium, Bromobutid, Bromofenoxim, Bromoxynil, Bromoxynil-Butyrat, -Kalium, -Heptanoat und -Octanoat, Busoxinon, Butachlor, Butafenacil, Butamifos, Butenachlor, Butralin, Butroxydim, Butylat, Cafenstrol, Cambendichlor, Carbetamid, Carfentrazon, Carfentrazon-Ethyl, Chloramben, Chloramben-Ammonium, Chloramben-Diolamin, Chlroamben-Methyl, Chloramben-Methylammonium, Chloramben-Natrium, Chlorbromuron, Chlorfenac, Chlorfenac-Ammonium, Chlorfenac-Natrium, Chlorfenprop, Chlorfenprop-Methyl, Chlorflurenol, Chlorflurenol-Methyl, Chloridazon, Chlorimuron, Chlorimuron-Ethyl, Chlorophthalim, Chlorotoluron, Chlorsulfuron, Chlorthal, Chlorthal-Dimethyl, Chlorthal-Monomethyl, Cinidon, Cinidon-Ethyl, Cinmethylin, , exo-(+)-Cinmethylin, i.e. (1R,2S,4S)-4-Isopropyl-1-methyl-2-[(2-methylbenzyl)oxy]-7-oxabicyclo[2.2.1]-heptan, exo-(-)-Cinmethylin, i.e. (1R,2S,4S)-4-Isopropyl-1-methyl-2-[(2-methylbenzyl)oxy]-7-oxabicyclo[2.2.1]heptan, Cinosulfuron, Clacyfos, Clethodim, Clodinafop, Clodinafop-Ethyl, Clodinafop-Propargyl, Clomazone, Clomeprop, Clopyralid, Clopyralid-Methyl, Clopyralid-Olamin, Clopyralid-Kalium, Clopyralid-Tripomin, Cloransulam, Cloransulam-Methyl, Cumyluron, Cyanamid, Cyanazin, Cycloat, Cyclopyranil, Cyclopyrimorat, Cyclosulfamuron, Cycloxydim, Cyhalofop, Cyhalofop-Butyl, Cyprazin, 2,4-D (einschließlich des -Theammonium, -Butotyl, -Butyl, -Cholin, -Diethylammonium, -Dimethylammonium, -Diolamin, -Doboxyl, - Dodecylammonium, -Etexyl, -Ethyl, -2-Ethylhexyl, -Heptylammonium, -Isobutyl, -Isooctyl, -Isopropyl, -Isopropylammonium, -Lithium, -Meptyl, -Methyl, -Kalium, -Tetradecylammonium, - Triethylammonium, -Triisopropanolammonium, -Tripromin und -Trolamine Salzes davon), 2,4-DB, 2,4-DB-Butyl, -Dimethylammonium, -Isooctyl, -Kalium und -Natrium, Daimuron (Dymron), Dalapon, Dalapon-Calcium, Dalapon-Magnesium, Dalapon-Natrium, Dazomet, Dazomet-Natrium, n-Decanol, 7-Deoxy-D-Sedoheptulose, Desmedipham, Detosyl-pyrazolate (DTP), Dicamba und seine Salze, z.B. Dicamba-Biproamin, Dicamba-N,N-Bis(3-aminopropyl)methylamin, Dicamba-butotyl, Dicamba-Cholin, Dicamba-Diglycolamin, Dicamba-Dimethylammonium, Dicamba-Diethanolaminemmonium, Dicamba-Diethylammonium, Dicamba-Isopropylammonium, Dicamba-Methyl, Dicamba-Monoethanolaminedicamba-Olamin, Dicamba-Kalium, Dicamba-Natrium, Dicamba-Triethanolamin, Dichlobenil, 2-(2,5-Dichlorobenzyl)-4,4-dimethyl-1,2-oxazolidin-3-on, Dichlorprop, Dichlorprop-Butotyl, Dichlroprop-Dimethylammonium, Dichhlorprop-Etexyl, Dichlorprop-Ethylammonium, Dichlorprop-Isoctyl, Dichlorprop-Methyl, Dichlorprop-Kalium, Dichlorprop-Natrium, Dichlorprop-P, Dichlorprop-P-Dimethylammonium, Dichlorprop-P-Etexyl, Dichlorprop-P-Kalium, Dichlorprop-Natrium, Diclofop, Diclofop-Methyl, Diclofop-P, Diclofop-P-Methyl, Diclosulam, Difenzoquat, Difenzoquat-Metilsulfat, Diflufenican, Diflufenzopyr, Diflufenzopyr-Natrium, Dimefuron, Dimepiperate, Dimesulfazet, Dimethachlor, Dimethametryn, Dimethenamid, Dimethenamid-P, Dimetrasulfuron, Dinitramine, Dinoterb, Dinoterb-Acetate, Diphenamid, Diquat, Diquat-Dibromid, Diquat-Dichloride, Dithiopyr, Diuron, DNOC, DNOC-Ammonium, DNOC-Kalium, DNOC-Natrium, Endothal, Endothal-Diammonium, Endothal-Dikalium, Endothal-Dinatrium, Epyrifenacil (S-3100), EPTC, Esprocarb, Ethalfluralin, Ethametsulfuron, Ethametsulfuron-Methyl, Ethiozin, Ethofumesate, Ethoxyfen, Ethoxyfen-Ethyl, Ethoxysulfuron, Etobenzanid, F-5231, i.e. N-[2-Chlor-4-fluor-5-[4-(3-fluorpropyl)-4,5-dihydro-5-oxo-1H-tetrazol-1-yl]-phenyl]-ethansulfonamid, F-7967, i.e. 3-[7-Chlor-5-fluor-2-(trifluormethyl)-1H-benzimidazol-4-yl]-1-methyl-6-(trifluormethyl)pyrimidin-2,4(1H,3H)-dion, Fenoxaprop, Fenoxaprop-P, Fenoxaprop-Ethyl, Fenoxaprop-P-Ethyl, Fenoxasulfone, Fenpyrazone, Fenquinotrione, Fentrazamid, Flamprop, Flamprop-Isoproyl, Flamprop-Methyl, Flamprop-M-Isopropyl, Flamprop-M-Methyl, Flazasulfuron, Florasulam, Florpyrauxifen, Florpyrauxifen-benzyl, Fluazifop, Fluazifop-Butyl, Fluazifop-Methyl, Fluazifop-P, Fluazifop-P-Butyl, Flucarbazone, Flucarbazonesodium, Flucetosulfuron, Fluchloralin, Flufenacet, Flufenpyr, Flufenpyr-Ethyl, Flumetsulam, Flumiclorac, Flumiclorac-Pentyl, Flumioxazin, Fluometuron, Flurenol, Flurenol-Butyl, - Dimethylammonium und -Methyl, Fluoroglycofen, Fluoroglycofen-Ethyl, Flupropanat, Flupropanat-Natrium, Flupyrsulfuron, Flupyrsulfuron-Methyl, Flupyrsulfuron-Methyl-Natrium, Fluridon, Flurochloridon, Fluroxypyr, Fluroxypyr-Butometyl, Fluroxypyr-Meptyl, Flurtamon, Fluthiacet, Fluthiacet-Methyl, Fomesafen, Fomesafen-Natrium, Foramsulfuron, Foramsulfuron-Natrium, Fosamine, Fosamine-Ammonium, Glufosinate, Glufosinate-Ammonium, Glufosinate-Natrium, L-Glufosinat-Ammonium, L-Glufosiant-Natrium, Glufosinat-P-Natrium, Glufosinate-P-Ammonium, Glyphosat, Glyphosat-Ammonium, -IsopropylAmmonium, -Diammonium, -Dimethylammonium, -Kalium, - Natrium, -Sesquinatrium und -Trimesium, H-9201, i.e. O-(2,4-Dimethyl-6-nitrophenyl)-O-ethyl-isopropylphosphoramidothioat, Halauxifen, Halauxifen-methyl, Halosafen, Halosulfuron, Halosulfuron-Methyl, Haloxyfop, Haloxyfop-P, Haloxyfop-Ethoxyethyl, Haloxyfop-P-Ethoxyethyl, Haloxyfop-Methyl, Haloxyfop-P-Methyl, Haloxifop-Natrium, Hexazinon, HNPC-A8169, i.e. Prop-2-yn-1-yl (2S)-2-{3-[(5-tert-butylpyridin-2-yl)oxy]phenoxy}propanoat, HW-02, i.e. 1-(Dimethoxyphosphoryl)-ethyl-(2,4-dichlorphenoxy)acetat, Hydantocidin, Imazamethabenz, Imazamethabenz-Methyl, Imazamox, Imazamox-Ammonium, Imazapic, Imazapic-Ammonium, Imazapyr, Imazapyr-Isopropylammonium, Imazaquin, Imazaquin-Ammonium, Imazaquin-Methyl, Imazethapyr, Imazethapyr-Ammonium, Imazosulfuron, Indanofan, Indaziflam, Iodosulfuron, Iodosulfuron-Methyl, Iodosulfuron-Methyl-Natrium, Ioxynil, Ioxynil-Lithium, -Octanoat, -Kalium und Natrium, Ipfencarbazon, Isoproturon, Isouron, Isoxaben, Isoxaflutole, Karbutilat, KUH-043, i.e. 3-({[5-(Difluormethyl)-1-methyl-3-(trifluormethyl)-1H-pyrazol-4-yl]methyl}sulfonyl)-5,5-dimethyl-4,5-dihydro-1,2-oxazol, Ketospiradox, Ketospiradox-Kalium, Lactofen, Lenacil, Linuron, MCPA, MCPA-Butotyl, -Butyl, -Dimethylammonium, -Diolamin, -2-Ethylhexyl, -Ethyl, -Isobutyl, Isoctyl, -Isopropyl, -Isopropylammonium, - Methyl, Olamin, -Kalium, -Natrium und -Trolamin, MCPB, MCPB-Methyl, -Ethyl und -Natrium, Mecoprop, Mecoprop-Butotyl, Mecoprop- dimethylammonium, Mecoprop-Diolamin, Mecoprop-Etexyl, Mecoprop-Ethadyl, Mecoprop-Isoctyl, Mecoprop-Methyl, Mecoprop-Kalium, Mecoprop-Natrium, und Mecoprop-Trolamin, Mecoprop-P, Mecoprop-P-Butotyl, -Dimethylammonium, -2-Ethylhexyl und - Kalium, Mefenacet, Mefluidid, Mefluidid-Diolamin, Mefluidid-Kalium, Mesosulfuron, Mesosulfuron-Methyl, Mesosulfuron-Natrium, Mesotrion, Methabenzthiazuron, Metam, Metamifop, Metamitron, Metazachlor, Metazosulfuron, Methabenzthiazuron, Methiopyrsulfuron, Methiozolin, Methyl isothiocyanat, Metobromuron, Metolachlor, S-Metolachlor, Metosulam, Metoxuron, Metribuzin, Metsulfuron, Metsulfuron-Methyl, Molinat, Monolinuron, Monosulfuron, Monosulfuron-Methyl, MT-5950, i.e. N-[3-Chlor-4-(1-methylethyl)-phenyl]-2-methylpentanamid, NGGC-011, Napropamid, NC-310, i.e. 4-(2,4-Dichlorbenzoyl)-1-methyl-5-benzyloxypyrazol, NC-656, i.e. 3-[(Isopropylsulfonyl)methyl]-N-(5-methyl-1,3,4-oxadiazol-2-yl)-5-(trifluoromethyl)[1,2,4]triazolo-[4,3-a]pyridin-8-carboxamid, Neburon, Nicosulfuron, Nonansäure (Pelargonsäure), Norflurazon, Ölsäure (Fettsäuren), Orbencarb, Orthosulfamuron, Oryzalin, Oxadiargyl, Oxadiazon, Oxasulfuron, Oxaziclomefone, Oxyfluorfen, Paraquat, Paraquat-dichlorid, Paraquat-Dimethylsulfat, Pebulat, Pendimethalin, Penoxsulam, Pentachlorphenol, Pentoxazon, Pethoxamid, Petroleumöl, Phenmedipham, Phenmedipham-Ethyl, Picloram, Picloram-dimethylammonium, Picloram-Etexyl, Picloram-Isoctyl, Picloram-Methyl, Picloram-Olamin, Picloram-Kalium, Picloram-Triethylammonium, Picloram-Tripromin, Picloram-Trolamin, Picolinafen, Pinoxaden, Piperophos, Pretilachlor, Primisulfuron, Primisulfuron-Methyl, Prodiamine, Profoxydim, Prometon, Prometryn, Propachlor, Propanil, Propaquizafop, Propazine, Propham, Propisochlor, Propoxycarbazone, Propoxycarbazone-Natrium, Propyrisulfuron, Propyzamid, Prosulfocarb, Prosulfuron, Pyraclonil, Pyraflufen, Pyraflufen-Ethyl, Pyrasulfotol, Pyrazolynat (Pyrazolat), Pyrazosulfuron, Pyrazosulfuron-Ethyl, Pyrazoxyfen, Pyribambenz, Pyribambenz-Isopropyl, Pyribambenz-Propyl, Pyribenzoxim, Pyributicarb, Pyridafol, Pyridat, Pyriftalid, Pyriminobac, Pyriminobac-Methyl, Pyrimisulfan, Pyrithiobac, Pyrithiobac-Natrium, Pyroxasulfon, Pyroxsulam, Quinclorac, Quinclorac-Dimethylammonium, Quinclorac-Methyl, Quinmerac, Quinoclamin, Quizalofop, Quizalofop-Ethyl, Quizalofop-P, Quizalofop-P-Ethyl, Quizalofop-P-Tefuryl, QYM201, i.e. 1-{2-Chloro-3-[(3-cyclopropyl-5-hydroxy-1-methyl-1H-pyrazol-4-yl)carbonyl]-6-(trifluoromethyl)phe-nyl}piperidin-2-on, Rimsulfuron, Saflufenacil, Sethoxydim, Siduron, Simazine, Simetryn, SL-261, Sulcotrione, Sulfentrazone, Sulfometuron, Sulfometuron-Methyl, Sulfosulfuron, , SYP-249, i.e. 1-Ethoxy-3-methyl-1-oxobut-3-en-2-yl-5-[2-chlor-4-(trifluormethyl)phenoxy]-2-nitrobenzoat, SYP-300, i.e. 1-[7-Fluor-3-oxo-4-(prop-2-in-1-yl)-3,4-dihydro-2H-1,4-benzoxazin-6-yl]-3-propyl-2-thioxoimidazolidin-4,5-dion, 2,3,6-TBA, TCA (Trichloressigsäure) und seine Salze, z.B. TCA-ammonium, TCA-Calcium, TCA-Ethyl, TCA-Magnesium, TCA-Natrium, Tebuthiuron, Tefuryltrione, Tembotrion, Tepraloxydim, Terbacil, Terbucarb, Terbumeton, Terbuthylazine, Terbutryn, Tetflupyrolimet, Thaxtomin, Thenylchlor, Thiazopyr, Thiencarbazone, Thiencarbazon-Methyl, Thifensulfuron, Thifensulfuron-Methyl, Thiobencarb, Tiafenacil, Tolpyralat, Topramezon, Tralkoxydim, Triafamon, Triallat, Triasulfuron, Triaziflam, Tribenuron, Tribenuron-Methyl, Triclopyr, Triclopyr-Butotyl, Triclopyr-Cholin, Triclopyr-Ethyl, Triclopyr-Triethylammonium, Trietazine, Trifloxysulfuron, Trifloxysulfuron-Natrium, Trifludimoxazin, Trifluralin, Triflusulfuron, Triflusulfuron-Methyl, Tritosulfuron, Harnstoffsulfat, Vernolat, XDE-848, ZJ-0862, i.e. 3,4-Dichlor-N-{2-[(4,6-dimethoxypyrimidin-2-yl)oxy]benzyl}anilin, 3-(2-Chloro-4-fluoro-5-(3-methyl-2,6-dioxo-4-trifluoromethyl-3,6-dihydropyrimidin-1-(2H)-yl)phenyl)-5-methyl-4,5-dihydroisoxazol-5-carbonsäureethylester, 3-Chloro-2-[3-(difluoromethyl)isoxazolyl-5-yl]phenyl-5-chloropyrimidin-2-yl-ether, 2-(3,4-Dimethoxyphenyl)-4-[(2-hydroxy-6-oxocyclohex-1-en-1-yl)carbonyl]-6-methylpyridazin-3(2*H*)-on, 2-({2-[(2-Methoxyethoxy)methyl]-6-methylpyridin-3-yl} carbonyl)cyclohexan-1,3 -dion, (5-Hydroxy-1-methyl-1H-pyrazol-4-yl)(3,3,4-trimethyl-1,1-dioxido-2,3-dihydro-1-benzothiophen-5-yl)methanon, 1-Methyl-4-[(3,3,4-trimethyl-1,1-dioxido-2,3-dihydro-1-benzothiophen-5-yl)carbonyl]-1H-pyrazol-5-yl-propan-1-sulfonat, 4-{2-Chloro-3-[(3,5-dimethyl-1H-pyrazol-1-yl)methyl]-4-(methylsulfonyl)benzoyl}-1-methyl-1H-pyrazol-5-yl-1,3-dimethyl-1H-pyrazole-4-carboxylat; Cyanomethyl-4-amino-3-chloro-5-fluoro-6-(7-fluoro-1H-indol-6-yl)pyridin-2-carboxylat, Prop-2-yn-1-yl-4-amino-3-chloro-5-fluoro-6-(7-fluoro-1H-indol-6-yl)pyridin-2-carboxylat, Methyl-4-amino-3-chloro-5-fluoro-6-(7-fluoro-1H-indol-6-yl)pyridin-2-carboxylat, 4-Amino-3-chlor-5-fluor-6-(7-fluor-1H-indol-6-yl)pyridin-2-carbonsäure, Benzyl-4-amino-3-chlor-5-fluor-6-(7-fluor-1H-indol-6-yl)pyridin-2-carboxylat, Ethyl-4-amin-3-chlor-5-fluor-6-(7-fluor-1H-indol-6-yl)pyridin-2-carboxylat, Methyl-4-amino-3-chlor-5-fluor-6-(7-fluor-1-isobutyryl-1H-indol-6-yl)pyridin-2-carboxylat, Methyl-6-(1-acetyl-7-fluor-1H-indol-6-yl)-4-amino-3-chloro-5-fluoropyridine-2-carboxylat, Methyl-4-amino-3-chlor-6-[1-(2,2-dimethylpropa-noyl)-7-fluor-1H-indol-6-yl]-5-fluoropyridin-2-carboxylat, Methyl-4-amino-3-chlor-5-fluor-6-[7-fluor-1-(methoxyacetyl)-1H-indol-6-yl]pyridin-2-carboxylat, Kalium 4-amino-3-chlor-5-fluor-6-(7-fluor-1H-indol-6-yl)pyridin-2-carboxylat, Natrium 4-amino-3-chlor-5-fluor-6-(7-fluor-1H-indol-6-yl)pyridin-2-carboxylat, Butyl-4-amino-3-chlor-5-fluor-6-(7-fluor-1H-indol-6-yl)pyridin-2-carboxylat, 4-Hydroxy-1-methyl-3-[4-(trifluormethyl)pyridin-2-yl]imidazolidin-2-on, 3-(5-tert-butyl-1,2-oxazol-3-yl)-4-hydroxy-1-methylimidazolidin-2-on

**Beispiele für Pflanzenwachstumsregulatoren als mögliche Mischungspartner sind:**

Abscisinsäure, Acibenzolar, Acibenzolar-S-methyl, 1-Aminocyclopro-1-yl-carbonsäure und Derivate davon, 5-Aminolävulinsäure, Ancymidol, 6-Benzylaminopurin, Brassinolid, Brassinolid-ethyl, Catechin, Chitooligosaccharide (CO; COs unterscheiden sich von LCOs dadurch, dass ihnen die anhängende Fettsäurekette fehlt, die charakteristisch für LCOs ist. COs, manchmal auch als N-Acetylchitooligosaccharide bezeichnet, bestehen ebenfalls aus GlcNAc-Resten, haben aber Seitenkettendekorationen, die sie von Chitinmolekülen [$(C_8H_{13}NO_5)_n$, CAS-Nr. 1398-61-4] und Chitosanmolekülen [$(C_5H_{11}NO_4)_n$, CAS-Nr. 9012-76-4]), Chitinverbindungen, Chlormequatchlorid, Cloprop, Cyclanilid, 3-(Cycloprop-1-enyl)propionsäure, Daminozid, Dazomet, Dazomet-Natrium, n-Decanol, Dikegulac, Dikegulac-Natrium, Endothal, Endothal-Dikalium, Dinatrium und Mono(N,N-dimethylalkylammonium), Ethephon, Flumetralin, Flurenol, Flurenol-Butyl, Flurenol-Methyl, Flurprimidol, Forchlorfenuron, Gibberellinsäure, Inabenfid, Indol-3-Essigsäure (IAA), 4-Indol-3-ylbuttersäure, Isoprothiolan, Probenazol, Jasmonsäure, Jasmonsäure oder Derivate davon (z. B. Jasmonsäuremethylester), Lipo-Chitooligosaccharide (LCO, manchmal auch als symbiotische Nodulations-(Nod-)Signale (oder Nod-Faktoren) oder als Myc-Faktoren bezeichnet), bestehen aus einem Oligosaccharid-Grundgerüst aus β I,4-verknüpften N-Acetyl-D-Glucosamin ("GlcNAc")-Resten mit einer N-verknüpften Fettacylkette, die am nicht reduzierenden Ende kondensiert ist. Wie in der Fachwelt bekannt, unterscheiden sich LCOs in der Anzahl der GlcNAc-Reste im Rückgrat, in der Länge und dem Sättigungsgrad der Fettacylkette und in den Substitutionen von reduzierenden und nicht reduzierenden Zuckerresten), Linolsäure oder Derivate davon, Linolensäure oder Derivate davon, Maleinsäurehydrazid, Mepiquatchlorid, Mepiquatpentaborat, 1-Methylcyclopropen, 3'-Methylabscisinsäure, 2-(1-Naphthyl)acetamid, 1-Naphthylessigsäure, 2-Naphthyloxyessigsäure, Nitrophenolat-Gemisch, 4-Oxo-4[(2-Phenylethyl)amino]buttersäure, Paclobutrazol, 4-Phenylbuttersäure, N-Phenylphthalaminsäure, Prohexadion, Prohexadion-Calcium, Prohydrojasmon, Salicylsäure, Salicylsäuremethylester, Strigolacton, Tecnazen, Thidiazuron, Triacontanol, Trinexapac, Trinexapac-ethyl, Tsitodef, Uniconazol, Uniconazol-P, 2-Fluor-N-(3-methoxyphenyl)-9H-purin-6-amin.

Wenn die jeweilige Bezeichnung (common name) mehrere Formen des Wirkstoffes umfasst, ist mit der Bezeichnung die kommerziell erhältliche Form bevorzugt definiert.

Jeder der genannten weiteren Wirkstoffe (= Wirkstoffe (C*), (C1*), (C2*) etc.) kann dann vorzugsweise mit einer der Zweierkombinationen gemäß der vorliegenden Erfinung, nach dem Schema (A)+(B)+(C*) oder auch nach dem Schema (A)+(B)+(C1*)+(C2*) etc. kombiniert werden.

Die Mengenangaben sind Aufwandmengen (g a.i./ha = Gramm Aktivsubstanz pro Hektar) und definieren somit auch die Mengenverhältnisse in einer Koformulierung, einem Pre-mix, einem Tank-mix oder einer sequentiellen Applikation der kombinierten Wirkstoffe.

Die Kombinationen können sowohl im Vorauflaufverfahren als auch Nachauflaufverfahren angewendet werden. Dies gilt sowohl für Vor- und Nachauflauf in Bezug auf die Schadpflanzen also auch bei der selektiven Bekämpfung der Schadpflanzen für den Vor- oder Nachauflauf der Kulturpflanzen. Es kommen dabei auch Mischformen in Frage, z. B. beim Nachauflauf der Kulturpflanzen die Bekämpfung der Schadpflanzen in deren Vor- oder Nachauflaufstadium.

Die erfindungsgemäßen Herbizid-Kombinationen können weitere Komponenten enthalten, z. B. andere Wirkstoffe gegen Schadorganismen wie Schadpflanzen, pflanzenschädliche Tiere oder pflanzenschädliche Pilze, insbesondere dabei Wirkstoffe aus der Gruppe Herbizide, Fungizide, Insektizide, Akarizide, Nematizide, Mitizide und verwandte Stoffe.

Die erfindungsgemäßen Wirkstoffkombinationen sind zur Bekämpfung eines breiten Unkrautspektrums im Nichtkulturland, auf Wegen, Gleisanlagen, Industrieflächen ("industrial weed control") oder in Plantagenkulturen wie gemäßigten, subtropischen und tropischen Klimaten oder Geographien geeignet. Beispiele für Plantagenkulturen sind Ölpalme, Nüsse (z. B. Mandeln, Haselnüsse, Walnüsse, Macademia), Kokosnuss, Beeren, Ölpalme, Gummibaum, Citrus (z. B. Orange, Zitrone, Mandarine), Bananen, Ananas, Baumwolle, Zuckerrohr, Tee, Kaffee, Kakao und Ähnliches. Ebenso sind sie für die Anwendung im Obstbau (z. B. Kernobst wie Apfel, Birne, Kirsche, Mango, Kiwi) und Weinbau geeignet. Die Mittel können auch zur Saatvorbereitung ("burn-down-" "no-till"- oder "zero-till"-Methode) oder zur Behandlung nach der Ernte ("chemical fallow") eingesetzt werden. Die Anwendungsmöglichkeiten der Wirkstoffkombinationen erstrecken sich auch zur Unkrautkontrolle in Baumkulturen, z. B. jungen Christbaumkulturen oder Eukalyptus-Anlagen, jeweils vor der Einpflanzung oder nach der Verpflanzung (auch mit Überkopfbehandlung, "over-top").

Auch können die Mittel in zur Bekämpfung von unerwünschtem Pflanzenwuchs in wirtschaftlich bedeutenden Kulturpflanzen wie Weizen (Hart- und Weichweizen), Mais, Soja, Zuckerrübe, Zuckerrohr, Baumwolle, Reis, Bohnen (wie beispielsweise Buschbohne und Pferdebohne), Flachs, Gerste, Hafer, Roggen, Triticale, Kartoffel und Hirse (Sorghum), Weideland und Grün-/Rasenflächen und Plantagenkulturen eingesetzt werden. Plantagenkulturen sind unteranderem Pomefruits (Apfel, Birne, Quitte), Ribes-Artige (Brombeere, Himbeere),Citrus, Prunus-Artige (Kirschen, Nektarinen, Mandeln), Nußfrüchte (Walnuß, Pecan, Haselnuß, Cashew, Macadamia), Mango, Kakao, Kaffee, Wein (Tafel-, Weintrauben), Palmen (wie Ölpalme, Dattelpalme,Kokospalme,,) Eucalyptus, Kaki, Persimon, Kautschuk, Ananans, Banane, Avocado, Litschi, Forstkulturen (Eucalypteae, Piniaceae, Piceae, Meliaceae, etc. )

Die erfindungsgemäßen herbiziden Wirkstoffkombinationen in den jeweiligen Anwendungsformen (= herbiziden Mittel) weisen Synergien hinsichtlich der Herbizidwirkung und Selektivität und günstige Wirkung bezüglich des Unkrautspektums auf. Sie weisen eine ausgezeichnete herbizide Wirksamkeit gegen ein breites Spektrum wirtschaftlich wichtiger monokotyler und dikotyler annueller Schadpflanzen auf. Auch schwer bekämpfbare perennierende Schadpflanzen, die aus Rhizomen, Wurzelstöcken oder anderen Dauerorganen austreiben, werden durch die Wirkstoffe gut erfaßt.

Zur Anwendung können die Wirkstoffkombinationen auf die Pflanzen (z.B. Schadpflanzen wie mono- oder dikotyle Unkräuter oder unerwünschte Kulturpflanzen), das Saatgut (z.B. Körner, Samen oder vegetative Vermehrungsorgane wie Knollen oder Sprossteile mit Knospen) oder die Fläche, auf der die Pflanzen wachsen (z.B. die Anbaufläche), ausgebracht werden.

Dabei können die Substanzen im Vorsaat- (ggf. auch durch Einarbeitung in den Boden), Vorauflauf- oder Nachauflaufverfahren ausgebracht werden. Bevorzugt ist die Anwendung im frühen Nachsaat-Vorauflaufverfahren oder im Nachauflaufverfahren von Plantagenkulturen gegen noch nicht aufgelaufene oder bereits aufgelaufene Schadpflanzen. Die Anwendung kann auch in Unkrautmanagment-Systemen (weed-management) mit geteilten mehrfachen Anwendungen (Sequenzanwendungen, "sequentials") integriert werden.

Im Einzelnen seien beispielhaft einige Vertreter der mono- und dikotylen Unkrautflora genannt, die durch die erfindungsgemäßen Wirkstoffkombinationen kontrolliert werden können, ohne dass durch die Nennung eine Beschränkung auf bestimmte Arten erfolgen soll.

Auf der Seite der monokotylen Unkrautarten werden z.B. Aegilops, Agropyron, Agrostis, Alopecurus, Apera, Avena, Brachicaria, Bromus, Cynodon, Dactyloctenium, Digitaria, Echinochloa, Eleocharis, Eleusine, Eragrostis, Eriochloa, Festuca, Fimbristylis, Imperata, Ischaemum, Heteranthera, Imperata, Ischaemum, Leptochloa, Lolium, Monochoria, Panicum, Paspalum, Phalaris, Phleum, Poa, Rottboellia, Sagittaria, Scirpus, Setaria, Sorghum, Sphenoclea und Cyperus-arten von der annuellen Gruppe erfasst.

Bei dikotylen Unkrautarten erstreckt sich das Wirkungsspektrum auf Arten wie z.B. Abutilon, Amaranthus, Ambrosia, Anoda, Anthemis, Aphanes, Artemisia, Atriplex, Bellis, Bidens, Capsella, Carduus, Cassia, Centaurea, Chenopodium, Cirsium, Convolvulus, Datura, Desmodium, Emex, Erodium, Erysimum, Euphorbia, Galeopsis, Galinsoga, Galium, Geranium, Hibiscus, Ipomoea, Kochia, Lamium, Lepidium, Lindernia, Matricaria, Mentha, Mercurialis, Mullugo, Myosotis, Papaver, Pharbitis, Plantago, Polygonum, Portulaca, Ranunculus, Raphanus, Rorippa, Rotala, Rumex, Salsola, Senecio, Sesbania, Sida, Sinapis, Solanum, Sonchus, Sphenoclea, Stellaria, Taraxacum, Thlaspi, Trifolium, Urtica, Veronica, Viola, Xanthium.

Werden die erfindungsgemäßen Wirkstoffkombinationen vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der Wirkstoffe auf die grünen Pflanzenteile im Nachauflaufverfahren tritt nach der Behandlung ein Wachstumsstop ein und die Schadpflanzen bleiben in dem zum Applikationszeitpunkt vorhandenen Wachstumsstadium stehen oder sterben nach einer gewissen Zeit ganz ab, so dass auf diese Weise eine für die Kulturpflanzen schädliche Unkrautkonkurrenz sehr früh und nachhaltig beseitigt wird.

Die erfindungsgemäßen herbiziden Mittel zeichnen sich durch eine schnell einsetzende und lang andauernde herbizide Wirkung aus. Die Regenfestigkeit der Wirkstoffe in den erfindungsgemäßen Kombinationen ist in der Regel günstig. Als besonderer Vorteil fällt ins Gewicht, dass die in den Kombinationen verwendeten und wirksamen Dosierungen

von Verbindungen (A) und (B) so gering eingestellt werden können, dass ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäße Kombination von Wirkstoffen wird eine erhebliche Reduzierung der nötigen Aufwandmenge der Wirkstoffe ermöglicht.

Mit dem kombinierten Einsatz der Herbizide (A) und (B) werden anwendungstechnische Eigenschaften erreicht, die über das hinausgehen, was aufgrund der bekannten Eigenschaften der Einzelherbizide für deren Kombination zu erwarten war. Beispielsweise übertreffen die herbiziden Wirkungen bei einer bestimmten Schadpflanzenspezies den Erwartungswert, wie er nach Standardverfahren, z. B. gemäß Colby oder anderen Extrapolationsverfahren, abgeschätzt werden kann.

Ein synergistischer Effekt liegt immer dann vor, wenn die Wirkung, hier die herbizide Wirkung der Wirkstoffkombination größer ist als die Summe der Wirkungen der einzeln applizierten Wirkstoffe. Die zu erwartende Wirkung für eine gegebene Kombination zweier Wirkstoffe kann nach S.R. Colby ("Calculating Synergistic and Antagonistic Responses of Herbicide Combination", Weeds 15 (1967), 20-22) berechnet werden (siehe unten).

Die synergistischen Effekte erlauben daher beispielsweise eine Reduktion der Aufwandmengen der Einzelwirkstoffe, eine höhere Wirkungsstärke bei gleicher Aufwandmenge, die Kontrolle bislang nicht erfasster Arten von Schadpflanzen (Lücken), eine erhöhte Residualwirkung, eine erhöhte Langzeitwirkung, eine erhöhte Wirkungsgeschwindigkeit, eine Ausdehnung des Anwendungszeitraums und/oder eine Reduzierung der Anzahl notwendiger Einzelanwendungen und - als Resultat für den Anwender - ökonomisch und ökologisch vorteilhaftere Unkrautbekämpfungssysteme.

Obgleich die erfindungsgemäßen Kombinationen eine ausgezeichnete herbizide Aktivität gegenüber mono- und dikotylen Unkräutern aufweisen, werden viele wirtschaftlich bedeutende Kulturpflanzen abhängig von der Struktur der jeweiligen erfindungsgemäßen Wirkstoffkombinationen und deren Aufwandmenge nur unwesentlich oder gar nicht geschädigt. Wirtschaftlich bedeutende Kulturen sind dabei z.B. dikotyle Kulturen der Gattungen Arachis, Beta, Brassica, Cucumis, Cucurbita, Helianthus, Daucus, Glycine, Gossypium, Ipomoea, Lactuca, Linum, Lycopersicon, Nicotiana, Phaseolus, Pisum, Solanum, Vicia, oder monokotyle Kulturen der Gattungen Allium, Ananas, Asparagus, Avena, Hordeum, Oryza, Panicum, Saccharum, Secale, Sorghum, Triticale, Triticum und Zea.

Darüberhinaus weisen die erfindungsgemäßen Mittel teilweise hervorragende wachstumsregulatorische Eigenschaften bei den Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich auch zur generellen Steuerung und Hemmung von unerwünschtem vegetativem Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die Mittel zur Bekämpfung von Schadpflanzen in bekannten Pflanzenkulturen oder noch zu entwickelnden, durch konventionelle Mutagenese veränderten oder gentechnisch veränderten, toleranten Kulturpflanzen eingesetzt werden. Die transgenen Pflanzen zeichnen sich in der Regel durch besondere vorteilhafte Eigenschaften aus, neben den Resistenzen gegenüber den erfindungsgemäßen Mitteln beispielsweise durch Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt. Weitere besondere Eigenschaften können in einer Toleranz oder Resistenz gegen abiotische Stressoren z. B. Hitze, Kälte, Trockenheit, Salz und ultraviolette Strahlung liegen.

Vorzugsweise können die erfindungsgemäßen Wirkstoffkombinationen als Herbizide in Nutzpflanzenkulturen eingesetzt werden, welche gegenüber den phytotoxischen Wirkungen der Herbizide resistent sind bzw. gentechnisch resistent gemacht worden sind.

Herkömmliche Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten. Alternativ können neue Pflanzen mit veränderten Eigenschaften mit Hilfe gentechnischer Verfahren erzeugt werden (siehe z. B. EP-A-0221044, EP-A-0131624). Beschrieben wurden beispielsweise in mehreren Fällen

- gentechnische Veränderungen von Kulturpflanzen zwecks Modifikation der in den Pflanzen synthetisierten Stärke (z. B. WO 92/11376, WO 92/14827,
  WO 91/19806),
- transgene Kulturpflanzen, welche Resistenzen gegen andere Herbizide aufweisen, beispielsweise gegen Sulfonylharnstoffe (EP-A-0257993, US-A-5013659),
- transgene Kulturpflanzen, mit der Fähigkeit

Bacillus thuringiensis-Toxine (Bt-Toxine) zu produzieren, welche die Pflanzen gegen bestimmte Schädlinge resistent machen (EP-A-0142924, EP-A-0193259).

- transgene Kulturpflanzen mit modifizierter Fettsäurezusammensetzung (WO 91/13972).
- gentechnisch veränderte Kulturpflanzen mit neuen Inhalts- oder Sekundärstoffen z. B. neuen Phytoalexinen, die eine erhöhte Krankheitsresistenz verursachen (EPA 309862, EPA0464461)
- gentechnisch veränderte Pflanzen mit reduzierter Photorespiration, die höhere Erträge und höhere Stresstoleranz aufweisen (EPA 0305398).
- Transgene Kulturpflanzen, die pharmazeutisch oder diagnostisch wichtige Proteine produzieren ("molecular pharming")
- transgene Kulturpflanzen, die sich durch höhere Erträge oder bessere Qualität auszeichnen
- transgene Kulturpflanzen die sich durch eine Kombinationen z. B. der o. g. neuen Eigenschaften auszeichnen ("gene stacking")

Zahlreiche molekularbiologische Techniken, mit denen neue transgene Pflanzen mit veränderten Eigenschaften hergestellt werden können, sind im Prinzip bekannt; siehe z. B. I. Potrykus und G. Spangenberg (eds.) Gene Transfer to Plants, Springer Lab Manual (1995), Springer Verlag Berlin, Heidelberg. oder Christou, "Trends in Plant Science" 1 (1996) 423-431).

Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe von Standardverfahren können z. B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden, siehe z. B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996.

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codiereden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z. B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106). Die Expression der Nukleinsäuremoleküle kann auch in den Organellen der Pflanzenzellen stattfinden.

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h. sowohl monokotyle als auch dikotyle Pflanzen. So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Vorzugsweise können die erfindungsgemäßen Wirkstoffkombinationen in transgenen Kulturen eingesetzt werden, welche gegen die eingesetzten Wirkstoffe tolerant sind bzw. tolerant gemacht worden sind.

Vorzugsweise können die erfindungsgemäßen Wirkstoffkombinationen auch in transgenen Kulturen eingesetzt werden, welche gegen Wuchsstoffe, wie z. B. Dicamba oder gegen Herbizide, die essentielle Pflanzenenzyme, z. B. Acetolactatsynthasen (ALS), EPSP Synthasen, Glutaminsynthasen (GS) oder Hydoxyphenylpyruvat Dioxygenasen (HPPD) hemmen, respektive gegen Herbizide aus der Gruppe der Sulfonylharnstoffe, der Glyphosate, Glufosinate oder Benzoylisoxazole und analogen Wirkstoffe, resistent sind.

Gegenstand der Erfindung ist deshalb auch ein Verfahren zur Bekämpfung von unerwünschtem Pflanzenwuchs, gegebenenfalls in Nutzpflanzenkulturen, vorzugsweise im Nichtkulturland oder in Plantagenkulturen, dadurch gekennzeichnet, dass man ein oder mehrere Herbizide des Typs (A) mit einem oder mehreren Herbiziden des Typs (B) auf die

Schadpflanzen, Pflanzenteile oder Pflanzensamen (Saatgut) davon oder die Anbaufläche appliziert.

Gegenstand der Erfindung ist auch die Verwendung der neuen Kombinationen aus Verbindungen (A)+(B) zur Bekämpfung von Schadpflanzen, gegebenenfalls in Nutzpflanzenkulturen, vorzugsweise in Nichtkulturland und Plantagenkulturen, aber auch zur Bekämpfung von Schadpflanzen vor der Aussaat der folgenden Nutzpflanze, wie insbesondere zur Saatvorbereitung ("burn-down Anwendung").

Die erfindungsgemäßen Wirkstoffkombinationen können sowohl als Mischformulierungen der zwei Komponenten, gegebenenfalls mit weiteren Wirkstoffen, Zusatzstoffen und/oder üblichen Formulierungshilfsmitteln vorliegen, die dann in üblicher Weise mit Wasser verdünnt zur Anwendung gebracht werden, oder als sogenannte Tankmischungen durch gemeinsame Verdünnung der getrennt formulierten oder partiell getrennt formulierten Komponenten mit Wasser hergestellt werden.

Die Verbindungen (A) und (B) oder deren Kombinationen können auf verschiedene Art formuliert werden, je nachdem welche biologischen und/oder chemisch-physikalischen Parameter vorgegeben sind. Als allgemeine Formulierungsmöglichkeiten kommen beispielsweise in Frage: Spritzpulver (WP), wasserlösliche Pulver (SP), emulgierbare Konzentrate (EC), wasserlösliche Konzentrate, wäßrige Lösungen (SL), Emulsionen (EW) wie Öl-in-Wasser- und Wasser-in-Öl-Emulsionen, versprühbare Lösungen oder Emulsionen, Dispersionen auf Öl- oder Wasserbasis, Öldispersionen (OD), Suspoemulsionen, Suspensionskonzentrate (SC), ölmischbare Lösungen, Kapselsuspensionen (CS), Stäubemittel (DP), Beizmittel, Granulate zur Boden- oder Streuapplikation, Granulate (GR) in Form von Mikro-, Sprüh-, Aufzugs- und Adsorptionsgranulaten, wasserdispergierbare Granulate (WG), wasserlösliche Granulate (SG), ULV-Formulierungen, Mikrokapseln oder Wachse.

Gegenstand der Erfindung sind deshalb auch herbizide und pflanzenwachstumsregulierende Mittel, welche die erfindungsgemäßen Wirkstoffkombinationen enthalten.

Die einzelnen Formulierungstypen sind im Prinzip bekannt und werden beispielsweise beschrieben in: Winnacker-Küchler, "Chemische Technologie", Band 7, C. Hanser Verlag München, 4. Aufl. 1986; van Valkenburg, "Pesticides Formulations", Marcel Dekker N.Y., 1973; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1963; McCutcheon's, "Detergents and Emulsifiers Annual", MC Publ. Corp., Ridegewood N.J.; Sisley and Wood, "Encyclopedia of Surface Active Egents", Chem. Publ. Co. Inc., N.Y. 1964; Schönfeldt, "Grenzflächenaktive Äthylenoxidaddukte", Wiss. Verlagsgesellschaft, Stuttgart 1976, Winnacker-Küchler, "Chemische Technologie", Band 7, C. Hanser Verlag München, 4. Aufl. 1986.

Auf der Basis dieser Formulierungen lassen sich auch Kombinationen mit anderen pestizid wirksamen Stoffen, wie anderen Herbiziden, Fungiziden, Insektiziden oder anderen Schädlingsbekämpfungsmitteln (z. B. Akarizide, Nematizide, Molluskizide, Rodentizide, Aphizide, Avizide, Larvizide, Ovizide, Bakterizide, Viruzide, etc.), sowie Safenern, Düngemitteln und/oder Wachstumsregulatoren herstellen, z.B. in Form einer Fertigformulierung oder als Tankmix.

Spritzpulver sind in Wasser gleichmäßig dispergierbare Präparate, die neben dem Wirkstoff außer einem Verdünnungs- oder Inertstoff noch Tenside ionischer und/oder nichtionischer Art (Netzmittel, Dispergiermittel), z.B. polyoxethylierte Alkylphenole, polyoxethylierte Fettalkohole, polyoxethylierte Fettamine, Fettalkoholpolyglykolethersulfate, Alkansulfonate, Alkylbenzolsulfonate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten. Zur Herstellung der Spritzpulver werden die herbiziden Wirkstoffe beispielsweise in üblichen Apparaturen wie Hammermühlen, Gebläsemühlen und Luftstrahlmühlen feingemahlen und gleichzeitig oder anschließend mit den Formulierungshilfsmitteln vermischt.

Emulgierbare Konzentrate werden durch Auflösen des Wirkstoffs in einem organischen Lösungsmittel, z.B. Butanol, Cyclohexanon, Dimethylformamid, Xylol oder auch höhersiedenden Aromaten oder Kohlenwasserstoffe oder Mischungen der organischen Lösungsmittel unter Zusatz von einem oder mehreren Tensiden ionischer und/oder nichtionischer Art (Emulgatoren) hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanester wie z.B. Sorbitanfettsäureester oder wie z. B. Polyoxyethylensorbitanfettsäureester.

Stäubemittel erhält man durch Vermahlen des Wirkstoffs mit fein verteilten festen Stoffen, z.B. Talkum, natürlichen Tonen, wie Kaolin, Bentonit und Pyrophyllit, oder Diatomeenerde.

Suspensionskonzentrate können auf Wasser- oder Ölbasis sein. Sie können beispielsweise durch Naß-Vermahlung mittels handelsüblicher Perlmühlen und gegebenenfalls Zusatz von Tensiden, wie sie z.B. oben bei den anderen Formulierungstypen bereits aufgeführt sind, hergestellt werden.

Emulsionen, z.B. Öl-in-Wasser-Emulsionen (EW), lassen sich beispielsweise mittels Rührern, Kolloidmühlen und/oder statischen Mischern unter Verwendung von wäßrigen organischen Lösungsmitteln und gegebenenfalls Tensiden, wie sie z.B. oben bei den anderen Formulierungstypen bereits aufgeführt sind, herstellen.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden.

Wasserdispergierbare Granulate werden in der Regel nach Verfahren wie Sprühtrocknung, Wirbelbett-Granulierung, Teller-Granulierung, Mischung mit Hochgeschwindigkeitsmischern und Extrusion ohne festes Inertmaterial hergestellt.

Die agrochemischen Zubereitungen enthalten in der Regel 0,1 bis 99 Gewichtsprozent, insbesondere 0,2 bis 95 Gew.-%, Wirkstoffe der Typen (A) und/oder (B), wobei je nach Formulierungsart folgende Konzentrationen üblich sind: In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration etwa 1 bis 90 Gew.-%, betragen, vorzugsweise 5 bis 80 Gewichtsprozent. Staubförmige Formulierungen enthalten meistens 5 bis 20 Gew.-% an Wirkstoff, versprühbare Lösungen enthalten etwa 0.05 bis 80, vorzugsweise 2 bis 50 Gewichtsprozent (Gew.-%) Wirkstoff.

Bei Granulaten wie dispergierbaren Granulaten hängt der Wirkstoffgehalt zum Teil davon ab, ob die wirksame Verbindung flüssig oder fest vorliegt und welche Granulierhilsmittel und Füllstoffe verwendet werden. In der Regel liegt der Gehalt bei den in Wasser dispergierbaren Granulaten zwischen 1 und 95 Gew.-%, vorzugsweise zwischen 10 und 80 Gew.-%.

Daneben enthalten die genannten Wirkstoffformulierungen gegebenenfalls die jeweils üblichen Haft-, Netz-, Dispergier-, Emulgier-, Penetrations-, Konservierungs-, Frostschutz- und Lösungsmittel, Füll-, Farb- und Trägerstoffe, Entschäumer, Verdunstungshemmer und Mittel, die den pH-Wert oder die Viskosität beeinflussen.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Die Wirkstoffe können auf die Pflanzen, Pflanzenteile, Pflanzensamen oder die Anbaufläche (Ackerboden) ausgebracht werden, vorzugsweise auf die grünen Pflanzen und Pflanzenteile und gegebenenfalls zusätzlich auf den Ackerboden.

Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame herbizide Formulierung der erfindungsgemäßen Kombination an Wirkstoffen (A) und (B) hat den Vorteil der leichteren Anwendbarkeit, weil die Mengen der Komponenten bereits im richtigen Verhältnis zueinander eingestellt sind. Außerdem können die Hilfsmittel in der Formulierung aufeinander optimal abgestimmt werden, während ein Tank-mix von unterschiedlichen Formulierungen unerwünschte Kombinationen von Hilfstoffen ergeben kann.

A. Formulierungsbeispiele allgemeiner Art

a) Ein Stäubemittel wird erhalten, indem man 10 Gewichsteile (= Gew.-Teile) eines Wirkstoffs (A) oder (B) oder eines Wirkstoffgemischs (A) + (B) (und gegebenenfalls weiterer Wirkstoffkomponenten) und/oder deren Salze und 90 Gew.-Teile Talkum als Inertstoff mischt und in einer Schlagmühle zerkleinert.

b) Ein in Wasser leicht dispergierbares, benetzbares Pulver wird erhalten, indem man 25 Gew.-Teile eines Wirkstoffs/Wirkstoffgemischs, 64 Gew.-Teile kaolinhaltigen Quarz als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gew.-Teile eines Wirkstoffs/Wirkstoffgemischs mit 6 Gew.-Teilen Alkylphenolpolyglykolether (®Triton X 207), 3 Gew.-Teilen Isotridecanolpolyglykolether (8 EO) und 71 Gew.-Teilen paraffinischem Mineralöl (Siedebereich z.B. ca. 255 bis 277 °C) mischt und in einer Reibkugelmühle auf eine Feinheit von unter 5 Mikron vermahlt.

d) Ein emulgierbares Konzentrat wird erhalten aus 15 Gew.-Teilen eines Wirkstoffs/Wirkstoffgemischs, 75 Gew.-Teilen Cyclohexanon als Lösemittel und 10 Gew.-Teilen oxethyliertem Nonylphenol als Emulgator.

e) Ein in Wasser dispergierbares Granulat wird erhalten indem man

75 Gew.-Teile eines Wirkstoffs/Wirkstoffgemischs,
10 Gew.-Teile ligninsulfonsaures Calcium,
5 Gew.-Teile Natriumlaurylsulfat,
3 Gew.-Teile Polyvinylalkohol und
7 Gew.-Teile Kaolin
mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man

25 Gew.-Teile eines Wirkstoffs/Wirkstoffgemischs,
5 Gew.-Teile 2,2'-dinaphthylmethan-6,6'-disulfonsaures Natrium,
2 Gew.-Teile oleoylmethyltaurinsaures Natrium,
1 Gew.-Teil Polyvinylalkohol,
17 Gew.-Teile Calciumcarbonat und
50 Gew.-Teile Wasser
auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

B. Biologische Beispiele

Bei der Anwendung der erfindungsgemäßen Kombinationen werden häufig herbizide Wirkungen an einer Schadpflanzenspezies beobachtet, die die formale Summe der Wirkungen der enthaltenen Herbizide bei alleiniger Applikation übertreffen. Alternativ kann in manchen Fällen beobachtet werden, dass eine geringere Aufwandmenge für die Herbizid-Kombination benötigt wird, um im Vergleich zu den Einzelpräparaten dieselbe Wirkung bei einer Schadpflanzenspezies zu erzielen. Derartige Wirkungssteigerungen bzw. Effektivitätssteigerungen oder Einsparungen an Aufwandmenge sind ein starker Hinweis auf synergistische Wirkung.

Wenn die beobachteten Wirkungswerte bereits die formale Summe der Werte zu den Versuchen mit Einzelapplikationen übertreffen, dann übertreffen sie den Erwartungswert nach Colby ebenfalls, der sich nach folgender Formel errechnet und ebenfalls als Hinweis auf Synergismus angesehen wird (vgl. S. R. Colby; in Weeds 15 (1967) S. 20 bis 22):

$$E^C = A+B - (A \cdot B/100)$$

Dabei bedeuten:

A = Wirkung des Wirkstoffs (A) in % bei einer Aufwandmenge von a g a.i./ha;
B = Wirkung des Wirkstoffs (B) in % bei einer Aufwandmenge von b g a.i./ha;
$E^C$ = Erwartungswert der Wirkung der Kombination (A)+(B) in % bei der kombinierten Aufwandmenge a+b g a.i./ha.

Die beobachteten Werte ($E^A$) der Versuche zeigen bei geeigneten niedrigen Dosierungen eine Wirkung der Kombinationen, die über den Erwartungswerten nach Colby liegen ( ).

1. Unkrautwirkung im Nachauflauf

Samen bzw. Rhizomstücke von mono- und dikotylen Unkräutern werden in Töpfen in sandigem Lehmboden ausgelegt, mit Erde abgedeckt und im Gewächshaus unter guten Wachstumsbedingungen (Temperatur, Luftfeuchtigkeit, Wasserversorgung) angezogen. Nach der Aussaat werden die Versuchspflanzen sobald sie das Dreiblattstadium erreicht haben mit den erfindungsgemäßen Mitteln behandelt. Die als Spritzpulver bzw. als Emulsionskonzentrate formulierten erfindungsgemäßen Mittel werden in verschiedenen Dosierungen mit einer Wasseraufwandmenge von umgerechnet 300 bis 800 l/ha auf die grünen Pflanzenteile gesprüht. Nach ca. 3 bis 4 Wochen Standzeit der Versuchspflanzen im Gewächshaus unter optimalen Wachstumsbedingungen wird die Wirkung der Präparate optisch im Vergleich zu unbehandelten Kontrollen bonitiert. Die erfindungsgemäßen Mittel weisen auch im Nachauflauf eine gute herbizide Wirksamkeit gegen ein breites Spektrum wirtschaftlich wichtiger Ungräser und Unkräuter auf.

Dabei werden häufig Wirkungen der erfindungsgemäßen Kombinationen beobachtet, die die formale Summe der Wirkungen bei Einzelapplikation der Herbizide übertreffen. Die beobachteten Werte der Versuche zeigen bei geeigneten niedrigen Dosierungen eine Wirkung der Kombinationen, die über den Erwartungswerten nach Colby liegen.

2. Herbizide Wirkung im Vor- und Nachauflauf (Feldversuche)

Entsprechend den Gewächshausversuchen des Abschnitts 1 wurden die Versuche auf Parzellen in Freiland durchgeführt. Die Bonitur erfolgte analog dem Versuch in Abschnitt 1.

3. Herbizide Wirkung und Kulturpflanzenverträglichkeit (Feldversuche)

Kulturpflanzen wurden im Freiland auf Parzellen unter natürlichen Freilandbedingungen herangezogen, wobei Samen oder Rhizomstücke von typischen Schadpflanzen ausgelegt worden waren bzw. die natürliche Verunkrautung genutzt wurde. Die Behandlung mit den erfindungsgemäßen Mitteln erfolgte nach dem Auflaufen der Schadpflanzen und der Kulturpflanzen in der Regel im 2 bis 4-Blattstadium; teilweise (wie angegeben) erfolgte die Applikation einzelner Wirkstoffe oder Wirkstoffkombinationen preemergent oder als Sequenzbehandlung teilweise preemergent und/oder postemergent.

Im Falle von Plantagenkulturen wurde in der Regel nur der Boden zwischen den einzelnen Kulturpflanzen mit den Wirkstoffen behandelt.

Nach der Anwendung, z. B. 2, 4, 6 und 8 Wochen nach Applikation wurde die Wirkung der Präparate optisch im Vergleich zu unbehandelten Kontrollen bonitiert. Die erfindungsgemäßen Mittel weisen auch im Feldversuch eine synergistische herbizide Wirksamkeit gegen ein breites Spektrum wirtschaftlich wichtiger Ungräser und Unkräuter auf. Der Vergleich zeigte, dass die erfindungsgemäßen Kombinationen meist mehr, teilweise erheblich mehr herbizide Wirkung aufweisen als die Summe der Wirkungen der Einzelherbizide und weist deshalb auf einen Synergismus hin. Außerdem lagen die Wirkungen in wesentlichen Abschnitten des Boniturzeitraums über den Erwartungswerten nach Colby und weisen deshalb ebenfalls auf einen Synergismus hin. Die Kulturpflanzen dagegen wurden infolge der Behandlungen mit den herbiziden Mitteln nicht oder nur unwesentlich geschädigt.

4. Spezielle Versuchsbeispiele

Folgenden Abkürzungen werden in der Beschreibung und den nachfolgenden Tabellen verwendet:
g a.i./ha = Gramm Aktivsubstanz (active ingredient) (= 100% Wirkstoff) pro Hektar;

Die Summe der Wirkungen der Einzelapplikationen ist unter $E^A$ angegeben;
Erwartungswerte nach Colby sind jeweils unter $E^C$ angegeben;

Die biologischen Ergebnisse der erfindungsgemäßen Zusammensetzungen sind in den Tabellen 4.1 - 4.2 zusammengefasst. Der Boniturzeitraum ist in Tagen nach der Applikation (DAT) angegeben.

Patentansprüche

Tabelle 4.1

| Wirkstoff | Aufwandmenge g a.i. / ha | Herbizide Wirkung [%] gegen ALOMYR 14 DAT |
|---|---|---|
| A3 | 2 | 60 |
| | 0,5 | 30 |
| B29 | 12 | 30 |
| A3 & B29 | 2+ 12<br>0,5 + 12 | 80 (E = 72) Δ = 8<br>80 (E = 51) Δ = 29 |

| Wirkstoff | Aufwandmenge g a.i. / ha | Herbizide Wirkung [%] gegen BRAPP 14 DAT |
|---|---|---|
| A3 | 0,5 | 0 |
| B29 | 12 | 88 |
| A3 & B29 | 0,5 + 12 | 98 (E = 88) Δ = 10 |

| Wirkstoff | Aufwandmenge g a.i. / ha | Herbizide Wirkung [%] gegen BROTE 14 DAT |
|---|---|---|
| A3 | 8 | 85 |
| | 0,5 | 0 |
| B29 | 12 | 60 |
| | 3 | 20 |
| A3 & B29 | 8+3<br>0,5 + 12 | 95 (E = 88) Δ = 7<br>70 (E = 60) Δ = 10 |

| Wirkstoff | Aufwandmenge g a.i. / ha | Herbizide Wirkung [%] gegen ECHCG 14 DAT |
|---|---|---|
| A3 | 0,5 | 0 |
| B29 | 3 | 80 |
| A3 & B29 | 0,5 + 3 | 85 (E = 80) Δ = 5 |

| Wirkstoff | Aufwandmenge g a.i. / ha | Herbizide Wirkung [%] gegen ELEIN 14 DAT |
|---|---|---|
| A3 | 0,5 | 0 |
| B29 | 3 | 30 |
| A3 & B29 | 0,5 + 3 | 80 (E = 30) Δ = 50 |

| Wirkstoff | Aufwandmenge g a.i. / ha | Herbizide Wirkung [%] gegen HORMU 14 DAT |
|---|---|---|
| A3 | 0,5 | 0 |
| B29 | 12 | 20 |
| | 3 | 10 |
| A3 & B29 | 0,5 + 12<br>0,5 + 3 | 80 (E = 20) Δ = 60<br>20 (E = 10) Δ = 10 |

| Wirkstoff | Aufwandmenge g a.i. / ha | Herbizide Wirkung [%] gegen LOLRI 14 DAT |
|---|---|---|
| A3 | 2 | 88 |
| B29 | 3 | 20 |
| A13 & B29 | 2 + 3 | 95 (E = 90) Δ = 5 |

Tabelle 4.2

| Wirkstoff | Aufwandmenge g a.i. / ha | Herbizide Wirkung [%] gegen ALOMYR 28 DAT |
|---|---|---|
| A3 | 2 | 0 |
| | 0,5 | 0 |
| B29 | 12 | 0 |
| | 3 | 0 |
| A3 & B29 | 2 + 12<br>2 + 3<br>0,5 + 3 | 20 (E = 0) Δ = 20<br>10 (E = 0) Δ = 10<br>60 (E = 0) Δ = 60 |

| Wirkstoff | Aufwandmenge g a.i. / ha | Herbizide Wirkung [%] gegen ALOMY 28 DAT |
|---|---|---|
| A3 | 8 | 88 |
| | 2 | 30 |
| | 0,5 | 10 |
| B29 | 12 | 30 |
| | 3 | 0 |
| A3 & B29 | 8 + 12<br>8+3<br>2 + 12<br>2 +3<br>0,5 + 12 | 100 (E = 92) ∆ = 8<br>100 (E = 88) ∆ = 12<br>100 (E = 51) ∆ = 49<br>85 (E = 30) ∆ = 55<br>50 (E = 37) ∆ = 13 |

| Wirkstoff | Aufwandmenge g a.i. / ha | Herbizide Wirkung [%] gegen AVEFA 28 DAT |
|---|---|---|
| A3 | 8 | 88 |
| | 2 | 70 |
| | 0,5 | 0 |
| B29 | 12 | 20 |
| | 3 | 10 |
| A3 & B29 | 8 + 12<br>8+3<br>2 + 12<br>2 +3<br>0,5 + 12 | 100 (E = 90) ∆ = 10<br>99 (E = 89) ∆ = 10<br>100 (E = 76) ∆ = 24<br>88 (E = 73) ∆ = 15<br>97 (E = 20) ∆ = 77 |

| Wirkstoff | Aufwandmenge g a.i. / ha | Herbizide Wirkung [%] gegen BRAPP 28 DAT |
|---|---|---|
| A3 | 2 | 10 |
| | 0,5 | 0 |
| B29 | 12 | 80 |
| | 3 | 50 |
| A3 & B29 | 2+ 12<br>2 + 3<br>0,5 + 3 | 100 (E = 82) ∆ = 18<br>100 (E = 55) ∆ = 45<br>100 (E = 80) ∆ = 20 |

| Wirkstoff | Aufwandmenge g a.i. / ha | Herbizide Wirkung [%] gegen BROTE 28 DAT |
|---|---|---|
| A3 | 8 | 70 |
| | 2 | 20 |
| | 0,5 | 0 |
| B29 | 12 | 0 |
| | 3 | 0 |
| A3 & B29 | 8 + 12<br>8 + 3<br>2+ 12<br>0,5 + 12 | 100 (E = 70) ∆ = 30<br>85 (E = 70) ∆ = 15<br>30 (E = 20) ∆ = 10<br>10 (E = 0) ∆ = 10 |

| Wirkstoff | Aufwandmenge g a.i. / ha | Herbizide Wirkung [%] gegen ECHCG 28 DAT |
|---|---|---|
| A3 | 2 | 80 |
| | 0,5 | 0 |
| B29 | 3 | 50 |
| A3 & B29 | 2 + 3<br>0,5 + 3 | 98 (E = 90) Δ = 8<br>80 (E = 50) Δ = 30 |

| Wirkstoff | Aufwandmenge g a.i. / ha | Herbizide Wirkung [%] gegen ELEIN 28 DAT |
|---|---|---|
| A3 | 8 | 85 |
| B29 | 3 | 20 |
| A13 & B29 | 8+3 | 100 (E = 88) Δ = 12 |

| Wirkstoff | Aufwandmenge g a.i. / ha | Herbizide Wirkung [%] gegen HORMU 28 DAT |
|---|---|---|
| A3 | 0,5 | 0 |
| B29 | 12 | 0 |
| A3 & B29 | 0,5 + 12 | 10 (E = 0) Δ = 10 |

| Wirkstoff | Aufwandmenge g a.i. / ha | Herbizide Wirkung [%] gegen LOLRI 28 DAT |
|---|---|---|
| A3 | 2 | 75 |
| B29 | 3 | 0 |
| A3 & B29 | 2 + 3 | 99 (E = 75) Δ = 24 |

| Wirkstoff | Aufwandmenge g a.i. / ha | Herbizide Wirkung [%] gegen SETVI 28 DAT |
|---|---|---|
| A3 | 0,5 | 0 |
| B29 | 12 | 20 |
| | 3 | 0 |
| A3 & B29 | 0,5 + 12<br>0,5 + 3 | 70 (E = 20) Δ = 50<br>20 (E = 0) Δ = 20 |

| Wirkstoff | Aufwandmenge g a.i. / ha | Herbizide Wirkung [%] gegen SORHA 28 DAT |
|---|---|---|
| A3 | 2 | 85 |
| | 0,5 | 0 |
| B29 | 12 | 30 |
| A3 & B29 | 2 + 12<br>0,5 + 12 | 100 (E =90) Δ = 10<br>80 (E = 30) Δ = 50 |

**Patentansprüche**

1. Zusammensetzungen enthaltend herbizid wirksame Verbindungen (A) und (B) wobei

(A) für eine oder mehrere Verbindungen der allgemeinen Formel (I) oder deren agrochemisch verträglichen Salze [Herbizide (A)] steht,

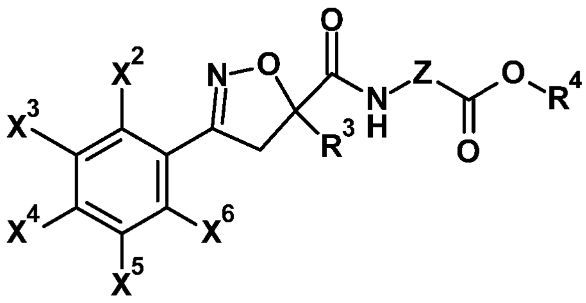

(I)

worin

$R^3$ $(C_1$-$C_3)$-Alkyl, $(C_1$-$C_3)$-Alkoxy oder $(C_2$-$C_3)$-Alkenyl bedeutet;
$R^4$ Wasserstoff oder $(C_1$-$C_6)$-Alkyl bedeutet;
Z für eine Gruppe Z-1 oder Z-2 steht, wobei Z-1 und Z-2 folgende Bedeutung haben:

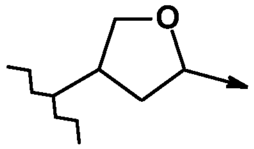

Z-1

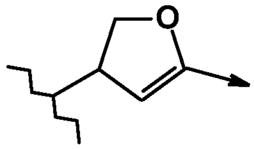

Z-2

worin der Pfeil jeweils für eine Bindung zur Gruppe C=O der Formel (I) steht;
$X^2$, $X^4$ und $X^6$ unabhängig voneinander Wasserstoff oder Fluor bedeuten;
$X^3$ und $X^5$ unabhängig voneinander Wasserstoff, Fluor oder Chlor, bedeuten;

und
(B) für eine oder mehrere Verbindungen der allgemeinen Formel (II) oder deren agrochemisch verträglichen Salze [Komponente (B)] steht,

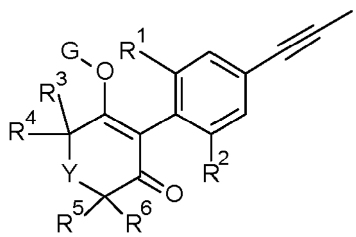

(II),

worin

$R^1$ für $(C_1$-$C_3)$-Alkoxy, $(C_1$-$C_2)$-Alkoxy-$(C_1$-$C_3)$-alkoxy, $(C_1$-$C_2)$-Fluoralkoxy, Ethyl, n-Propyl, n-Butyl, Cyclopropyl oder Ethinyl steht,
$R^2$ für Wasserstoff, Ethyl, n-Propyl, Cyclopropyl, Vinyl, Ethinyl, $(C_1$-$C_3)$-Alkoxy, $(C_1$-$C_3)$-Fluoroalkyl, $(C_1$-$C_2)$-Fluoralkoxy, $(C_1$-$C_2)$-Alkoxy-$(C_1$-$C_3)$-alkoxy- oder $C_1$-Fluoralkoxy-$(C_1$-$C_3)$-alkoxy-; unter der Maßgabe, dass $R^2$ für Wasserstoff, Ethyl, n-Propyl, Cyclopropyl, Vinyl oder Ethinyl steht, falls $R^1$ für Ethyl, n-Propyl, n-Butyl, Cyclopropyl oder Ethinyl steht,
$R^3$, $R^4$, $R^5$ und $R^6$ unabhängig voneinander für Wasserstoff, $(C_1$-$C_5)$-Alkyl, $(C_2$-$C_4)$-Alkenyl, $(C_2$-$C_4)$-Alkinyl, $(C_1$-$C_2)$-Fluoralkyl, $(C_1$-$C_3)$-Alkoxy-$(C_1$-$C_3)$-alkyl, $(C_1$-$C_3)$-Alkylthio-$(C_1$-$C_3)$-alkyl, $(C_1$-$C_3)$-Alkylsulfinyl-$(C_1$-$C_3)$-alkyl, $(C_1$-$C_3)$-Alkylsulfonyl-$(C_1$-$C_3)$-alkyl, $(C_3$-$C_4)$-Cycloalkyl stehen oder für einen unsubstituierten 4, 5 oder 6-gliedrigen monocyclischen Heterocyclylring stehen, der ein Ringheteroatom trägt, das aus der Gruppe Sauerstoff, Schwefel oder Stickstoff ausgewählt ist und der innerhalb der Heterocyclylgruppe mit einem Ringkohlenstoffatom angebunden ist (bevorzugt Tetrahydrofuranyl wie z.B. Tetrahydrofuran-3-yl, oder Tetrahydropyranyl wie z.B. Tetrahydropyran-4-yl), unter der Maßgabe, dass nicht mehr als einer der Reste aus der Gruppe $R^3$, $R^4$, $R^5$ and $R^6$ für Alkenyl, Alkinyl, Alkoxyalkyl, Alkylthioalkyl, Alkylsulfinylalkyl, Alkylsulfonylalkyl, Cycloalkyl oder Heterocyclyl steht,

oder $R^3$ und $R^4$ zusammen eine Gruppe $-(CH_2)_{n1}-$ oder $-(CH_2)_{n2}-X^1-(CH_2)_{n3}-$ bilden und $R^5$ und $R^6$ wie oben definiert sind,

oder $R^5$ und $R^6$ zusammen eine Gruppe $-(CH_2)_{n1}-$ oder $-(CH_2)_{n2}-X^1-(CH_2)_{n3}-$ bilden und $R^3$ und $R^4$ wie oben definiert sind,

wobei $X^1$ für O (Sauerstoff), S (Schwefel), S(=O), $S(=O)_2$, NH, $N((C_1-C_2)$-Alkyl), $N((C_1-C_2)$-Alkoxy), C(H)$((C_1-C_2)$-Alkyl), $C((C_1-C_2)\text{-Alkyl})_2$ oder C(H)$((C_1-C_2)$-Alkoxy) steht;

n1 für 2, 3, 4 oder 5 steht,

n2 und n3 unabhängig voneinander für 1, 2 oder 3 stehen unter der Voraussetzung, dass n2 + n3 gleich 2, 3 oder 4 ist,

oder $R^4$ und $R^5$ zusammen eine Gruppe $-(CH_2)_{n4}-$ oder $-(CH_2)_{n5}-C(R^{7a})(R^{7b})-(CH_2)_{n6}-$ oder - $C(R^{7c})=C(R^{7d})-$ bilden, worin $R^{7a}$ für $(C_1-C_2)$-Alkyl oder $(C_1-C_2)$-Alkoxy steht; und $R^{7b}$ für Wasserstoff oder $(C_1-C_2)$-Alkyl steht unter der Voraussetzung, dass $R^{7b}$ für Wasserstoff steht, wenn $R^{7a}$ für $(C_1-C_2)$-Alkoxy steht und worin n4 für 1, 2 oder 3 steht und n5 und n6 unabhängig voneinander für 0, 1 or 2 stehen unter der Maßgabe, dass n5 + n6 gleich 0, 1 oder 2 ist und worin $R^{7c}$ und $R^{7d}$ unabhängig voneinander für Wasserstoff oder $(C_1-C_2)$-Alkyl stehen,

Y für O (Sauerstoff), S (Schwefel), S(=O), $S(=O)_2$, $N((C_1-C_2)$-Alkyl), $N((C_1-C_2)$-Alkoxy), C(=O), eine Gruppe $CR^8R^9$ oder $-CR^{10}R^{11}CR^{12}R^{13}-$ steht,

$R^8$ und $R^9$ unabhängig voneinander für Wasserstoff, $(C_1-C_6)$-Alkyl, $(C_2-C_4)$-Alkenyl, $(C_2-C_4)$-Alkinyl, $(C_1-C_2)$-Fluoralkyl, $(C_1-C_3)$-Alkoxy-$(C_1-C_3)$-alkyl, $(C_1-C_3)$-Alkylthio-$(C_1-C_3)$-alkyl, $(C_1-C_3)$Alkylsulfinyl-$(C_1-C_3)$-alkyl, $(C_1-C_3)$-Alkylsulfonyl-$(C_1-C_3)$-alkyl, für $(C_3-C_6)$-Cycloalkyl oder für substituiertes $(C_3-C_6)$-Cycloalkyl, das unabhängig voneinander durch ein oder zwei $(C_1-C_3)$-Alkyl- oder $(C_1-C_2)$-Fluoralkylgruppen substituiert ist oder für $(C_4-C_6)$-Cycloalkyl, in dem eine $CH_2$-Gruppe gegebenenfalls durch O (Sauerstoff), S (Schwefel), S(=O), $S(=O)_2$, NH, $N((C_1-C_3)$-Alkyl), $N((C_1-C_2)$-Alkoxy), $N((C_1-C_2)$-Fluoralkyl), $N[C(=O)-(C_1-C_3)$-Alkyl], $N[C(=O)-(C_1-C_2)$-Fluoralkyl] substituiert ist oder für $(C_3-C_6)$-Cycloalkyl, das durch eine $(C_1-C_3)$-Alkoxygruppe substituiert und gegebenenfalls zusätzlich durch eine $(C_1-C_2)$-Alkylgruppe substituiert ist; oder für $(C_5-C_6)$-Cycloalkenyl oder $(C_5-C_6)$-Cycloalkenyl, das ein oder zwei $(C_1-C_3)$-Alkylsubstituenten trägt oder für $(C_3-C_6)$-Cycloalkyl-$(C_1-C_2)$-alkyl oder für substituiertes $(C_3-C_6)$-Cycloalkyl-$(C_1-C_2)$-alkyl, das unabhängig voneinander durch ein oder zwei $(C_1-C_3)$-Alkyl- oder $(C_1-C_2)$-Fluoralkylgruppen substituiert ist oder für $(C_4-C_6)$-Cycloalkyl-$(C_1-C_2)$-alkyl, in dem eine $CH_2$-Gruppe im Ring gegebenenfalls durch O (Sauerstoff), S (Schwefel), S(=O), $S(=O)_2$, NH, N((Ci-$C_2$)-Alkyl), $N((C_1-C_2)$-Alkoxy), $N((C_1-C_2)$-Fluoralkyl), $N[C(=O)-(C_1-C_3)$-Alkyl], $N[C(=O)-(C_1-C_2)$-Fluoralkyl] substituiert ist oder für $(C_3-C_6)$-Cycloalkyl-$(C_1-C_2)$-alkyl steht, das am Ring durch eine $(C_1-C_3)$-Alkoxygruppe substituiert und gegebenenfalls am Ring zusätzlich durch eine $(C_1-C_2)$-Alkylgruppe substituiert ist oder für Heteroaryl, Heteroaryl-$CH_2$-, wobei der Heteroarylring über ein Ringkohlenstoffatom angebunden ist und gegebenenfalls weiter substituiert ist durch 1, 2 oder 3 an Ringkohlenstoffatomen gebundene Substituenten aus der Gruppe Halogen, Cyano, Nitro, Hydroxy, $(C_1-C_3)$-Alkyl, $(C_1-C_3)$-Alkyl-C(=O)-, $(C_1-C_2)$-Fluoralkyl-C(=O)-, $(C_1-C_3)$-Alkoxy, $(C_1-C_2)$-Fluoralkoxy, $(C_2-C_3)$-Alkenyl, $(C_2-C_3)$-Alkinyl, $(C_1-C_2)$-Fluoralkyl mit der Maßgabe, dass ein Ringkohlenstoffatom nicht durch ein Halogen (außer Fluor), Alkoxy oder Fluoralkoxy substituiert ist, falls dieses Ringkohlenstoffatom direkt an einem Ringstickstoffatom des Heteroarylrings gebunden ist; und im Falle einer 5-gliedrigen Heteroarylgruppe, die mindestens ein Stickstoffatom im Ring trägt und welches nicht Bestandteil einer C=N-Doppelbindung ist, dieses Stickstoffatom gegebenenfalls durch einen Substituenten aus der Gruppe $(C_1-C_3)$-Alkyl, $(C_1-C_2)$-Fluoralkyl, $(C_1-C_3)$-Alkyl-C(=O)-, $(C_1-C_2)$-Fluoralkyl-C(=O)-, $(C_1-C_2)$-Alkyl-$S(=O)_2$- substituiert ist, stehen,

mit der Maßgabe, dass maximal einer der beiden Substituenten $R^8$ and $R^9$ ein gegebenenfalls substitutiertes Cycloalkyl; ein gegebenenfalls substituiertes Cycloalkyl, in welchem eine Ring-$(CH_2)$-Einheit ersetzt ist durch O (Sauerstoff), S (Schwefel), S(=O), $S(=O)_2$, NH, $N((C_1-C_3)$-Alkyl), $N((C_1-C_2)$-Fluoralkyl), N $[C(=O)-(C_1-C_3)$-Alkyl], $N[C(=O)-(C_1-C_2)$-Fluoralkyl] oder $N((C_1-C_2)$-Alkoxy); ein gegebenenfalls substituiertes Cycloalkenyl; ein gegebenenfalls substituiertes Cycloalkylalkyl; ein gegebenenfalls substituiertes Cycloalkylalkyl in welchem eine Ring-$(CH_2)$-Einheit ersetzt ist durch O (Sauerstoff), S (Schwefel), S(=O), $S(=O)_2$, NH, $N((C_1-C_3)$-Alkyl), $N((C_1-C_2)$-Fluoralkyl), $N[C(=O)-(C_1-C_3)$-Alkyl], $N[C(=O)-(C_1-C_2)$-Fluoralkyl] oder $N((C_1-C_2)$-Alkoxy); oder Heteroaryl oder Heteroaryl-$CH_2$- ist;

oder $R^8$ für Wasserstoff oder $(C_1-C_2)$-Alkyl steht, wenn $R^9$ für $(C_1-C_2)$-Alkoxy steht,

oder $R^8$ und $R^9$ gemeinsam für $-(CH_2)_{n7}-$ oder $-(CH_2)_{n8}-X^2-(CH_2)_{n9}-$ stehen, wobei $X^2$ für S (Schwefel), S(=O), $S(=O)_2$, $C(H)[(C_1-C_3)$-Alkyl], $C[(C_1-C_2)\text{-Alkyl}]_2$, $C(H)[(C_1-C_3)$-Alkoxy] steht und n7 für 2, 3, 4, 5, und 6 steht sowie n8 und n9 unabhängig voneinander für 0, 1, 2, 3 stehen unter der Maßgabe, dass n8 + n9 gleich 2, 3, 4, 5 ist,

$R^{10}$, $R^{11}$, $R^{12}$ und $R^{13}$ stehen unabhängig voneinander für Wasserstoff, $(C_1-C_4)$-Alkyl, unter der Maßgabe, dass nicht mehr als eine Gruppe $R^{10}$, $R^{11}$, $R^{12}$ und $R^{13}$ für $(C_3-C_4)$-Alkyl steht,

G für Wasserstoff, ein agronomisch akzeptables Metall, eine agronomisch akzeptable Sulfoniumgruppe, eine agronomisch akzeptable Ammoniumgruppe, eine Gruppe $C(X^3)$-$R^{14}$, $-C(X^4)$-$X^5$-$R^{15}$, $-C(X^6)$-$N(R^{16})$-$R^{17}$, $-SO_2$-$R^{18}$, $-P(X^7)(R^{19})$-$R^{20}$, $-CH_2$-$X^8$-$R^{21}$, ($C_1$-$C_6$)-Alkoxy-C(=O)-$CH_2$-, ($C_1$-$C_6$)-Alkoxy-C(=O)-CH=CH-, ($C_2$-$C_7$)-Alken-1-yl-$CH_2$-, ($C_2$-$C_7$)-Alken-1-yl-CH[($C_1$-$C_2$)-Alkyl]-, ($C_2$-$C_4$)-Fluoralken-1-yl-$CH_2$-, ($C_2$-$C_7$)-Alkin-1-yl-$CH_2$-, ($C_2$-$C_7$)-Alkin-1-yl-CH[($C_1$-$C_2$)-alkyl]-, Heteroaryl-$CH_2$-, Heteroaryl-CH [($C_1$-$C_2$)-alkyl]-, Phenyl-$CH_2$-, Phenyl-CH[($C_1$-$C_2$)-alkyl]-, Phenyl-C(O)-$CH_2$- steht, wobei die Phenyl- oder Heteroarylgruppe gegebenenfalls weiter unabhänig voneinander durch 1, 2 oder 3 Gruppen ausgewählt aus ($C_1$-$C_2$)-Alkyl, $C_1$-Fluoralkyl, ($C_1$-$C_2$)-Alkoxy, $C_1$-Fluoralkoxy, Fluor, Chlor, Brom, Cyano, Nitro substituiert ist,
$X^3$, $X^4$, $X^5$, $X^6$, $X^7$ und $X^8$ unabhängig voneinander für O (Sauerstoff) und S (Schwefel) stehen,
$R^{14}$ für Wasserstoff, ($C_1$-$C_{21}$)-Alkyl, ($C_2$-$C_{21}$)-Alkenyl, ($C_2$-$C_{18}$)-Alkinyl, ($C_1$-$C_{10}$)-Fluoralkyl, ($C_1$-$C_{10}$)-Cyanoalkyl, ($C_1$-$C_{10}$)-Nitroalkyl, ($C_1$-$C_{10}$)-Aminoalkyl, ($C_1$-$C_5$)-Alkylamino($C_1$-$C_5$)-alkyl, ($C_2$-$C_8$)-Dialkylamino($C_1$-$C_5$)-alkyl, ($C_3$-$C_7$)-Cycloalkyl-($C_1$-$C_5$)-alkyl, ($C_1$-$C_5$)-Alkoxy-($C_1$-$C_5$)-alkyl, ($C_3$-$C_5$)-Alkenyloxy-($C_1$-$C_5$)-alkyl, ($C_3$-$C_5$)-Alkinyloxy-($C_1$-$C_5$)-alkyl, ($C_1$-$C_5$)-Alkylthio-($C_1$-$C_5$)-alkyl, ($C_1$-$C_5$)-Alkylsulfinyl-($C_1$-$C_5$)-alkyl, ($C_1$-$C_5$)-Alkylsulfonyl-($C_1$-$C_5$)-alkyl, ($C_2$-$C_8$)-Alkylidenaminoxy($C_1$-$C_5$)-alkyl, ($C_1$-$C_5$)-Alkylcarbonyl-($C_1$-$C_5$)-alkyl, ($C_1$-$C_5$)-Alkoxycarbonyl($C_1$-$C_5$)-alkyl, Aminocarbonyl-($C_1$-$C_5$)-alkyl, ($C_1$-$C_5$)-Alkylaminocarbonyl-($C_1$-$C_5$)-alkyl, ($C_2$-$C_8$)-Dialkylaminocarbonyl-($C_1$-$C_5$)-alkyl, ($C_1$-$C_5$)-Alkylcarbonylamino-($C_1$-$C_5$)-alkyl, N-($C_1$-$C_5$)-Alkylcarbonyl-N-($C_1$-$C_5$)-alkylamino($C_1$-$C_5$)-alkyl, ($C_3$-$C_6$)-Trialkylsilyl-($C_1$-$C_5$)-alkyl, Phenyl-($C_1$-$C_5$)-alkyl, wobei die Phenylgruppe gegebenenfalls weiter unabhänig voneinander durch 1, 2 oder 3 Gruppen ausgewählt aus ($C_1$-$C_3$)-Alkyl, ($C_1$-$C_3$)-Fluoralkyl, ($C_1$-$C_2$)-Alkoxy, ($C_1$-$C_3$)-Fluoralkoxy, ($C_1$-$C_3$)-Alkylthio, ($C_1$-$C_3$)-Alkylsulfinyl, ($C_1$-$C_3$)-Alkylsulfonyl, Fluor, Chlor, Brom, Cyano, Nitro substituiert ist, Heteroaryl-($C_1$-$C_5$)-alkyl, wobei die Heteroarylgruppe gegebenenfalls weiter unabhänig voneinander durch 1, 2 oder 3 Gruppen ausgewählt aus ($C_1$-$C_3$)-Alkyl, ($C_1$-$C_3$)-Fluoralkyl, ($C_1$-$C_2$)-Alkoxy, ($C_1$-$C_3$)-Fluoralkoxy, ($C_1$-$C_3$)-Alkylthio, ($C_1$-$C_3$)-Alkylsulfinyl, ($C_1$-$C_3$)-Alkylsulfonyl, Fluor, Chlor, Brom, Cyano, Nitro substituiert ist, ($C_2$-$C_5$)-Fluoralkenyl, ($C_3$-$C_8$)-Cycloalkyl; Phenyl oder Phenyl, das unabhänig voneinander durch 1, 2 oder 3 Gruppen ausgewählt aus ($C_1$-$C_3$)-Alkyl, ($C_1$-$C_3$)-Fluoralkyl, ($C_1$-$C_2$)-Alkoxy, ($C_1$-$C_3$)-Fluoralkoxy, Fluor, Chlor, Brom, Cyano, Nitro substituiert ist, Heteroaryl oder , das unabhänig voneinander durch 1, 2 oder 3 Gruppen ausgewählt aus ($C_1$-$C_3$)-Alkyl, ($C_1$-$C_3$)-Fluoralkyl, ($C_1$-$C_2$)-Alkoxy, ($C_1$-$C_3$)-Fluoralkoxy, Fluor, Chlor, Brom, Cyano, Nitro substituiert ist, steht,
$R^{15}$ für ($C_1$-$C_{18}$)-Alkyl, ($C_3$-$C_{18}$)-Alkenyl, ($C_3$-$C_{18}$)-Alkinyl, ($C_2$-$C_{10}$)-Fluoralkyl, ($C_1$-$C_{10}$)-Cyanoalkyl, ($C_1$-$C_{10}$)-Nitroalkyl, ($C_2$-$C_{10}$)-Aminoalkyl, ($C_1$-$C_5$)-Alkylamino($C_1$-$C_5$)-alkyl, ($C_2$-$C_8$)-Dialkylamino($C_1$-$C_5$)-alkyl, ($C_3$-$C_7$)-Cycloalkyl-($C_1$-$C_5$)-alkyl, ($C_1$-$C_5$)-Alkoxy-($C_1$-$C_5$)-alkyl, ($C_3$-$C_5$)-Alkenyloxy-($C_1$-$C_5$)-alkyl, ($C_3$-$C_5$)-Alkinyloxy-($C_1$-$C_5$)-alkyl, ($C_1$-$C_5$)-Alkylthio-($C_1$-$C_5$)-alkyl, ($C_1$-$C_5$)-Alkylsulfinyl-($C_1$-$C_5$)-alkyl, ($C_1$-$C_5$)-Alkylsulfonyl-($C_1$-$C_5$)-alkyl, ($C_2$-$C_8$)-Alkylidenaminoxy($C_1$-$C_5$)-alkyl, ($C_1$-$C_5$)-Alkylcarbonyl-($C_1$-$C_5$)-alkyl, ($C_1$-$C_5$)-Alkoxycarbonyl($C_1$-$C_5$)-alkyl, Aminocarbonyl-($C_1$-$C_5$)-alkyl, ($C_1$-$C_5$)-Alkylaminocarbonyl-($C_1$-$C_5$)-alkyl, ($C_2$-$C_8$)-Dialkylaminocarbonyl-($C_1$-$C_5$)-alkyl, ($C_1$-$C_5$)-Alkylcarbonylamino-($C_1$-$C_5$)-alkyl, N-($C_1$-$C_5$)-Alkylcarbonyl-N-($C_1$-$C_5$)-alkylamino($C_1$-$C_5$)-alkyl, ($C_3$-$C_6$)-Trialkylsilyl-($C_1$-$C_5$)-alkyl, Phenyl-($C_1$-$C_5$)-alkyl, wobei die Phenylgruppe gegebenenfalls weiter unabhänig voneinander durch 1, 2 oder 3 Gruppen ausgewählt aus ($C_1$-$C_3$)-Alkyl, ($C_1$-$C_3$)-Fluoralkyl, ($C_1$-$C_2$)-Alkoxy, ($C_1$-$C_3$)-Fluoralkoxy, ($C_1$-$C_3$)-Alkylthio, ($C_1$-$C_3$)-Alkylsulfinyl, ($C_1$-$C_3$)-Alkylsulfonyl, Fluor, Chlor, Brom, Cyano, Nitro substituiert ist, Heteroaryl-($C_1$-$C_5$)-alkyl, wobei die Heteroarylgruppe gegebenenfalls weiter unabhänig voneinander durch 1, 2 oder 3 Gruppen ausgewählt aus ($C_1$-$C_3$)-Alkyl, ($C_1$-$C_3$)-Fluoralkyl, ($C_1$-$C_2$)-Alkoxy, ($C_1$-$C_3$)-Fluoralkoxy, ($C_1$-$C_3$)-Alkylthio, ($C_1$-$C_3$)-Alkylsulfinyl, ($C_1$-$C_3$)-Alkylsulfonyl, Fluor, Chlor, Brom, Cyano, Nitro substituiert ist, ($C_2$-$C_5$)-Fluoralkenyl, ($C_3$-$C_8$)-Cycloalkyl; Phenyl oder Phenyl, das unabhänig voneinander durch 1, 2 oder 3 Gruppen ausgewählt aus ($C_1$-$C_3$)-Alkyl, ($C_1$-$C_3$)-Fluoralkyl, ($C_1$-$C_2$)-Alkoxy, ($C_1$-$C_3$)-Fluoralkoxy, Fluor, Chlor, Brom, Cyano, Nitro substituiert ist, Heteroaryl oder Heteroaryl, das unabhänig voneinander durch 1, 2 oder 3 Gruppen ausgewählt aus ($C_1$-$C_3$)-Alkyl, ($C_1$-$C_3$)-Fluoralkyl, ($C_1$-$C_2$)-Alkoxy, ($C_1$-$C_3$)-Fluoralkoxy, Fluor, Chlor, Brom, Cyano, Nitro substituiert ist, steht,
$R^{16}$ und $R^{17}$ unabhängig voneinander für Wasserstoff, ($C_1$-$C_{10}$)-Alkyl, ($C_2$-$C_{10}$)-Alkenyl, ($C_2$-$C_{10}$)-Alkinyl, ($C_2$-$C_{10}$)-Fluoralkyl, ($C_1$-$C_{10}$)-Cyanoalkyl, ($C_1$-$C_{10}$)-Nitroalkyl, ($C_1$-$C_{10}$)-Aminoalkyl, ($C_1$-$C_5$)-Alkylamino($C_1$-$C_5$)-alkyl, ($C_2$-$C_8$)-Dialkylamino($C_1$-$C_5$)-alkyl, ($C_3$-$C_7$)-Cycloalkyl-($C_1$-$C_5$)-alkyl, ($C_1$-$C_5$)-Alkoxy-($C_1$-$C_5$)-alkyl, ($C_3$-$C_5$)-Alkenyloxy-($C_1$-$C_5$)-alkyl, ($C_3$-$C_5$)-Alkinyloxy-($C_1$-$C_5$)-alkyl, ($C_1$-$C_5$)-Alkylthio-($C_1$-$C_5$)-alkyl, ($C_1$-$C_5$)-Alkylsulfinyl-($C_1$-$C_5$)-alkyl, ($C_1$-$C_5$)-Alkylsulfonyl-($C_1$-$C_5$)-alkyl, ($C_2$-$C_8$)-Alkylidenaminoxy($C_1$-$C_5$)-alkyl, ($C_1$-$C_5$)-Alkylcarbonyl-($C_1$-$C_5$)-alkyl, ($C_1$-$C_5$)-Alkoxycarbonyl($C_1$-$C_5$)-alkyl, Aminocarbonyl-($C_1$-$C_5$)-alkyl, ($C_1$-$C_5$)-Alkylaminocarbonyl-($C_1$-$C_5$)-alkyl, ($C_2$-$C_8$)-Dialkylaminocarbonyl-($C_1$-$C_5$)-alkyl, ($C_1$-$C_5$)-Alkylcarbonylamino-($C_1$-$C_5$)-alkyl, N-($C_1$-$C_5$)-Alkylcarbonyl-N-($C_1$-$C_5$)-alkylamino($C_1$-$C_5$)-alkyl, ($C_3$-$C_6$)-Trialkylsilyl-($C_1$-$C_5$)-alkyl, Phenyl-($C_1$-$C_5$)-alkyl, wobei die Phenylgruppe gegebenenfalls weiter unabhänig voneinander durch 1, 2 oder 3 Gruppen ausgewählt aus ($C_1$-$C_3$)-Alkyl, ($C_1$-$C_3$)-Fluoralkyl, ($C_1$-$C_2$)-Alkoxy, ($C_1$-$C_3$)-Fluoralkoxy, ($C_1$-$C_3$)-Alkylthio, ($C_1$-$C_3$)-Alkylsulfinyl,

$(C_1-C_3)$-Alkylsulfonyl, Fluor, Chlor, Brom, Cyano, Nitro substituiert ist, Heteroaryl-$(C_1-C_5)$-alkyl, wobei die Heteroarylgruppe gegebenenfalls weiter unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, $(C_1-C_3)$-Alkylthio, $(C_1-C_3)$-Alkylsulfinyl, $(C_1-C_3)$-Alkylsulfonyl, Fluor, Chlor, Brom, Cyano, Nitro substituiert ist, $(C_2-C_5)$-Fluoralkenyl, $(C_3-C_8)$-Cycloalkyl; Phenyl oder Phenyl, das unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, Fluor, Chlor, Brom, Cyano, Nitro substituiert ist, Heteroaryl oder Heteroaryl, das unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, Fluor, Chlor, Brom, Cyano, Nitro substituiert ist, Heteroarylamino oder Heteroarylamino, bei dem die Heteroarylgruppe unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, Fluor, Chlor, Brom, Cyano, Nitro substituiert ist, Diheteroarylamino oder Diheteroarylamino, bei dem die jeweilige Heteroarylgruppe unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, Fluor, Chlor, Brom, Cyano, Nitro substituiert ist, Phenylamino or Phenylamino, bei dem die jeweilige Phenylgruppe unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, Fluor, Chlor, Brom, Cyano, Nitro substituiert ist, Diphenylamino oder Diphenylamino, bei dem die jeweilige Phenylgruppe unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, Fluor, Chlor, Brom, Cyano, Nitro substituiert ist, $(C_3$- $C_7)$-Cycloalkylamino, Di-[$(C_3-C_7)$-Cycloalkyl]amino, $(C_3-C_7)$-Cycloalkoxy stehen; oder $R^{16}$ und $R^{17}$, zusammen mit dem Stickstoffatom, an das sie gebunden sind, einen unsubstituierten 4- bis 7-gliedrigen Ring bilden, der gegebenenfalls ein Heteroatom aus der Gruppe O (Sauerstoff) und S (Schwefel) umfasst,

$R^{18}$ für $(C_1-C_{10})$-Alkyl, $(C_2-C_{10})$-Alkenyl, $(C_2-C_{10})$-Alkinyl, $(C_1-C_{10})$-Fluoralkyl, $(C_1-C_{10})$-Cyanoalkyl, $(C_1-C_{10})$-Nitroalkyl, $(C_1-C_{10})$-Aminoalkyl, $(C_1-C_5)$-Alkylamino$(C_1-C_5)$-alkyl, $(C_2-C_8)$-Dialkylamino$(C_1-C_5)$-alkyl, $(C_3-C_7)$-Cycloalkyl-$(C_1-C_5)$-alkyl, $(C_1-C_5)$-Alkoxy-$(C_1-C_5)$-alkyl, $(C_3-C_5)$-Alkenyloxy-$(C_1-C_5)$-alkyl, $(C_3-C_5)$-Alkinyloxy-$(C_1-C_5)$-alkyl, $(C_1-C_5)$-Alkylthio-$(C_1-C_5)$-alkyl, $(C_1-C_5)$-Alkylsulfinyl-$(C_1-C_5)$-alkyl, $(C_1-C_5)$-Alkylsulfonyl-$(C_1-C_5)$-alkyl, $(C_2-C_8)$-Alkylidenaminoxy$(C_1-C_5)$-alkyl, $(C_1-C_5)$-Alkylcarbonyl-$(C_1-C_5)$-alkyl, $(C_1-C_5)$-Alkoxycarbonyl$(C_1-C_5)$-alkyl, Aminocarbonyl-$(C_1-C_5)$-alkyl, $(C_1-C_5)$-Alkylaminocarbonyl-$(C_1-C_5)$-alkyl, $(C_2-C_8)$-Dialkylaminocarbonyl-$(C_1-C_5)$-alkyl, $(C_1-C_5)$-Alkylcarbonylamino-$(C_1-C_5)$-alkyl, N-$(C_1-C_5)$-Alkylcarbonyl-N-$(C_1-C_5)$-alkylamino$(C_1-C_5)$-alkyl, $(C_3-C_6)$-Trialkylsilyl-$(C_1-C_5)$-alkyl, Phenyl-$(C_1-C_5)$-alkyl, wobei die Phenylgruppe gegebenenfalls weiter unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, $(C_1-C_3)$-Alkylthio, $(C_1-C_3)$-Alkylsulfinyl, $(C_1-C_3)$-Alkylsulfonyl, Fluor, Chlor, Brom, Cyano, Nitro substituiert ist, Heteroaryl-$(C_1-C_5)$-alkyl, wobei die Heteroarylgruppe gegebenenfalls weiter unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, $(C_1-C_3)$-Alkylthio, $(C_1-C_3)$-Alkylsulfinyl, $(C_1-C_3)$-Alkylsulfonyl, Fluor, Chlor, Brom, Cyano, Nitro substituiert ist, $(C_2-C_5)$-Fluoralkenyl, $(C_3-C_8)$-Cycloalkyl; Phenyl oder Phenyl, das unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, Fluor, Chlor, Brom, Cyano, Nitro substituiert ist, Heteroaryl oder Heteroaryl, das unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, Fluor, Chlor, Brom, Cyano, Nitro substituiert ist, Heteroarylamino oder Heteroarylamino, bei dem die Heteroarylgruppe unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, Fluor, Chlor, Brom, Cyano, Nitro substituiert ist, Diheteroarylamino oder Diheteroarylamino, bei dem die jeweilige Heteroarylgruppe unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, Fluor, Chlor, Brom, Cyano, Nitro substituiert ist, Phenylamino or Phenylamino, bei dem die jeweilige Phenylgruppe unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, Fluor, Chlor, Brom, Cyano, Nitro substituiert ist, Diphenylamino oder Diphenylamino, bei dem die jeweilige Phenylgruppe unabhänig voneinander durch 1, 2 oder 3 Gruppen ausgewählt aus $(C_1-C_3)$-Alkyl, $(C_1-C_3)$-Fluoralkyl, $(C_1-C_2)$-Alkoxy, $(C_1-C_3)$-Fluoralkoxy, Fluor, Chlor, Brom, Cyano, Nitro substituiert ist, $(C_3-C_7)$-Cycloalkylamino, Di-[$(C_3-C_7)$-Cycloalkyl]amino, $(C_3-C_7)$-Cycloalkoxy, $(C_1-C_{10})$-Alkoxy, $(C_1-C_{10})$-Fluoralkoxy, $(C_3-C_7)$-Alkylamino, Di-[$(C_3-C_7)$-Alkyl]amino steht;

$R^{19}$ und $R^{20}$ unabhängig voneinander für (Ci-Cio)-Alkyl, $(C_2-C_{10})$-Alkenyl, $(C_2-C_{10})$-Alkinyl, $(C_1-C_{10})$-Fluoralkyl, $(C_1-C_{10})$-Cyanoalkyl, $(C_1-C_{10})$-Nitroalkyl, $(C_1-C_{10})$-Aminoalkyl, $(C_1-C_5)$-Alkylamino$(C_1-C_5)$-alkyl, $(C_2-C_8)$-Dialkylamino$(C_1-C_5)$-alkyl, $(C_3-C_7)$-Cycloalkyl-$(C_1-C_5)$-alkyl, $(C_1-C_5)$-Alkoxy-$(C_1-C_5)$-alkyl, $(C_3-C_5)$-Alkenyloxy-$(C_1-C_5)$-alkyl, $(C_3-C_5)$-Alkinyloxy-$(C_1-C_5)$-alkyl, $(C_1-C_5)$-Alkylthio-$(C_1-C_5)$-alkyl, $(C_1-C_5)$-Alkylsulfinyl-$(C_1-C_5)$-alkyl, $(C_1-C_5)$-Alkylsulfonyl-$(C_1-C_5)$-alkyl, $(C_2-C_8)$-Alkylidenamino-

xy($C_1$-$C_5$)-alkyl, ($C_1$-$C_5$)-Alkylcarbonyl-($C_1$-$C_5$)-alkyl, ($C_1$-$C_5$)-Alkoxycarbonyl($C_1$-$C_5$)-alkyl, Aminocarbonyl-($C_1$-$C_5$)-alkyl, ($C_1$-$C_5$)-Alkylaminocarbonyl-($C_1$-$C_5$)-alkyl, ($C_2$-$C_8$)-Dialkylaminocarbonyl-($C_1$-$C_5$)-alkyl, ($C_1$-$C_5$)-Alkylcarbonylamino-($C_1$-$C_5$)-alkyl, N-($C_1$-$C_5$)-Alkylcarbonyl-N-($C_1$-$C_5$)-alkylamino($C_1$-$C_5$)-alkyl, ($C_3$-$C_6$)-Trialkylsilyl-($C_1$-$C_5$)-alkyl, Phenyl-($C_1$-$C_5$)-alkyl, wobei die Phenylgruppe gegebenenfalls weiter unabhänig voneinander durch 1, 2 oder 3 Gruppen ausgewählt aus ($C_1$-$C_3$)-Alkyl, ($C_1$-$C_3$)-Fluoralkyl, ($C_1$-$C_2$)-Alkoxy, ($C_1$-$C_3$)-Fluoralkoxy, ($C_1$-$C_3$)-Alkylthio, ($C_1$-$C_3$)-Alkylsulfinyl, ($C_1$-$C_3$)-Alkylsulfonyl, Fluor, Chlor, Brom, Cyano, Nitro substituiert ist, Heteroaryl-($C_1$-$C_5$)-alkyl, wobei die Heteroarylgruppe gegebenenfalls weiter unabhänig voneinander durch 1, 2 oder 3 Gruppen ausgewählt aus ($C_1$-$C_3$)-Alkyl, ($C_1$-$C_3$)-Fluoralkyl, ($C_1$-$C_2$)-Alkoxy, ($C_1$-$C_3$)-Fluoralkoxy, ($C_1$-$C_3$)-Alkylthio, ($C_1$-$C_3$)-Alkylsulfinyl, ($C_1$-$C_3$)-Alkylsulfonyl, Fluor, Chlor, Brom, Cyano, Nitro substituiert ist, ($C_2$-$C_5$)-Fluoralkenyl, ($C_3$-$C_8$)-Cycloalkyl; Phenyl oder Phenyl, das unabhänig voneinander durch 1, 2 oder 3 Gruppen ausgewählt aus ($C_1$-$C_3$)-Alkyl, ($C_1$-$C_3$)-Fluoralkyl, ($C_1$-$C_2$)-Alkoxy, ($C_1$-$C_3$)-Fluoralkoxy, Fluor, Chlor, Brom, Cyano, Nitro substituiert ist, Heteroaryl oder Heteroaryl, das unabhänig voneinander durch 1, 2 oder 3 Gruppen ausgewählt aus ($C_1$-$C_3$)-Alkyl, ($C_1$-$C_3$)-Fluoralkyl, ($C_1$-$C_2$)-Alkoxy, ($C_1$-$C_3$)-Fluoralkoxy, Fluor, Chlor, Brom, Cyano, Nitro substituiert ist, Heteroarylamino oder Heteroarylamino, bei dem die Heteroarylgruppe unabhänig voneinander durch 1, 2 oder 3 Gruppen ausgewählt aus ($C_1$-$C_3$)-Alkyl, ($C_1$-$C_3$)-Fluoralkyl, ($C_1$-$C_2$)-Alkoxy, ($C_1$-$C_3$)-Fluoralkoxy, Fluor, Chlor, Brom, Cyano, Nitro substituiert ist, Diheteroarylamino oder Diheteroarylamino, bei dem die jeweilige Heteroarylgruppe unabhänig voneinander durch 1, 2 oder 3 Gruppen ausgewählt aus ($C_1$-$C_3$)-Alkyl, ($C_1$-$C_3$)-Fluoralkyl, ($C_1$-$C_2$)-Alkoxy, ($C_1$-$C_3$)-Fluoralkoxy, Fluor, Chlor, Brom, Cyano, Nitro substituiert ist, Phenylamino or Phenylamino, bei dem die jeweilige Phenylgruppe unabhänig voneinander durch 1, 2 oder 3 Gruppen ausgewählt aus ($C_1$-$C_3$)-Alkyl, ($C_1$-$C_3$)-Fluoralkyl, ($C_1$-$C_2$)-Alkoxy, ($C_1$-$C_3$)-Fluoralkoxy, Fluor, Chlor, Brom, Cyano, Nitro substituiert ist, Diphenylamino oder Diphenylamino, bei dem die jeweilige Phenylgruppe unabhänig voneinander durch 1, 2 oder 3 Gruppen ausgewählt aus ($C_1$-$C_3$)-Alkyl, ($C_1$-$C_3$)-Fluoralkyl, ($C_1$-$C_2$)-Alkoxy, ($C_1$-$C_3$)-Fluoralkoxy, Fluor, Chlor, Brom, Cyano, Nitro substituiert ist, benzyloxy und phenyloxy, wobei die jeweilige Phenylgruppe gegebenenfalls weiter unabhänig voneinander durch 1, 2 oder 3 Gruppen ausgewählt aus ($C_1$-$C_3$)-Alkyl, ($C_1$-$C_3$)-Fluoralkyl, ($C_1$-$C_2$)-Alkoxy, ($C_1$-$C_3$)-Fluoralkoxy, Fluor, Chlor, Brom, Cyano, Nitro substituiert ist, stehen und

$R^{21}$ für ($C_1$-$C_{10}$)-Alkyl, ($C_3$-$C_{10}$)-Alkenyl, ($C_3$-$C_{10}$)-Alkinyl, ($C_1$-$C_{10}$)-Fluoralkyl, ($C_1$-$C_{10}$)-Cyanoalkyl, ($C_1$-$C_{10}$)-Nitroalkyl, ($C_2$-$C_{10}$)-Aminoalkyl, ($C_1$-$C_5$)-Alkylamino($C_1$-$C_5$)-alkyl, ($C_2$-$C_8$)-Dialkylamino($C_1$-$C_5$)-alkyl, ($C_3$-$C_7$)-Cycloalkyl-($C_1$-$C_5$)-alkyl, ($C_1$-$C_5$)-Alkoxy-($C_1$-$C_5$)-alkyl, ($C_3$-$C_5$)-Alkenyloxy-($C_1$-$C_5$)-alkyl, ($C_3$-$C_5$)-Alkinyloxy-($C_1$-$C_5$)-alkyl, ($C_1$-$C_5$)-Alkylthio-($C_1$-$C_5$)-alkyl, ($C_1$-$C_5$)-Alkylsulfinyl-($C_1$-$C_5$)-alkyl, ($C_1$-$C_5$)-Alkylsulfonyl-($C_1$-$C_5$)-alkyl, ($C_2$-$C_8$)-Alkylidenaminoxy($C_1$-$C_5$)-alkyl, ($C_1$-$C_5$)-Alkylcarbonyl-($C_1$-$C_5$)-alkyl, ($C_1$-$C_5$)-Alkoxycarbonyl($C_1$-$C_5$)-alkyl, Aminocarbonyl-($C_1$-$C_5$)-alkyl, ($C_1$-$C_5$)-Alkylaminocarbonyl-($C_1$-$C_5$)-alkyl, ($C_2$-$C_8$)-Dialkylaminocarbonyl-($C_1$-$C_5$)-alkyl, ($C_1$-$C_5$)-Alkylcarbonylamino-($C_1$-$C_5$)-alkyl, N-($C_1$-$C_5$)-Alkylcarbonyl-N-($C_1$-$C_5$)-alkylamino($C_1$-$C_5$)-alkyl, ($C_3$-$C_6$)-Trialkylsilyl-($C_1$-$C_5$)-alkyl, Phenyl-($C_1$-$C_5$)-alkyl, wobei die Phenylgruppe gegebenenfalls weiter unabhänig voneinander durch 1, 2 oder 3 Gruppen ausgewählt aus ($C_1$-$C_3$)-Alkyl, ($C_1$-$C_3$)-Fluoralkyl, ($C_1$-$C_2$)-Alkoxy, ($C_1$-$C_3$)-Fluoralkoxy, ($C_1$-$C_3$)-Alkylthio, ($C_1$-$C_3$)-Alkylsulfinyl, ($C_1$-$C_3$)-Alkylsulfonyl, Fluor, Chlor, Brom, Cyano, Nitro substituiert ist, Heteroaryl-($C_1$-$C_5$)-alkyl, wobei die Heteroarylgruppe gegebenenfalls weiter unabhänig voneinander durch 1, 2 oder 3 Gruppen ausgewählt aus ($C_1$-$C_3$)-Alkyl, ($C_1$-$C_3$)-Fluoralkyl, ($C_1$-$C_2$)-Alkoxy, ($C_1$-$C_3$)-Fluoralkoxy, ($C_1$-$C_3$)-Alkylthio, ($C_1$-$C_3$)-Alkylsulfinyl, ($C_1$-$C_3$)-Alkylsulfonyl, Fluor, Chlor, Brom, Cyano, Nitro substituiert ist, Phenoxy-($C_1$-$C_5$)-alkyl, wobei die Phenylgruppe gegebenenfalls weiter unabhänig voneinander durch 1, 2 oder 3 Gruppen ausgewählt aus ($C_1$-$C_3$)-Alkyl, ($C_1$-$C_3$)-Fluoralkyl, ($C_1$-$C_2$)-Alkoxy, ($C_1$-$C_3$)-Fluoralkoxy, ($C_1$-$C_3$)-Alkylthio, ($C_1$-$C_3$)-Alkylsulfinyl, ($C_1$-$C_3$)-Alkylsulfonyl, Fluor, Chlor, Brom, Cyano, Nitro substituiert ist, Heteroaryloxy-($C_1$-$C_5$)-alkyl, wobei die Heteroarylgruppe gegebenenfalls weiter unabhänig voneinander durch 1, 2 oder 3 Gruppen ausgewählt aus ($C_1$-$C_3$)-Alkyl, ($C_1$-$C_3$)-Fluoralkyl, ($C_1$-$C_2$)-Alkoxy, ($C_1$-$C_3$)-Fluoralkoxy, ($C_1$-$C_3$)-Alkylthio, ($C_1$-$C_3$)-Alkylsulfinyl, ($C_1$-$C_3$)-Alkylsulfonyl, Fluor, Chlor, Brom, Cyano, Nitro substituiert ist, Phenyl oder Phenyl, das unabhänig voneinander durch 1, 2 oder 3 Gruppen ausgewählt aus ($C_1$-$C_3$)-Alkyl, ($C_1$-$C_3$)-Fluoralkyl, ($C_1$-$C_2$)-Alkoxy, ($C_1$-$C_3$)-Fluoralkoxy, Fluor, Chlor, Brom, Cyano, Nitro substituiert ist, Heteroaryl oder Heteroaryl, das unabhänig voneinander durch 1, 2 oder 3 Gruppen ausgewählt aus ($C_1$-$C_3$)-Alkyl, ($C_1$-$C_3$)-Fluoralkyl, ($C_1$-$C_2$)-Alkoxy, ($C_1$-$C_3$)-Fluoralkoxy, Fluor, Chlor, Brom, Cyano, Nitro substituiert ist, Phenyl-C(=O), wobei die Phenylgruppe gegebenenfalls weiter unabhänig voneinander durch 1, 2 oder 3 Gruppen ausgewählt aus ($C_1$-$C_3$)-Alkyl, ($C_1$-$C_3$)-Fluoralkyl, ($C_1$-$C_2$)-Alkoxy, ($C_1$-$C_3$)-Fluoralkoxy, Fluor, Chlor, Brom, Cyano, Nitro substituiert ist, steht.

**2.** Herbizide Zusammensetzung gemäß Anspruch 1, wobei die Komponente (A) der allgemeinen Formel (I) wie folgt definiert ist:

$R^3$ bedeutet Methyl, Vinyl oder Methoxy;
$R^4$ bedeutet Wasserstoff, Methyl, Ethyl oder Isopropyl;
Z bedeutet Z-1 oder Z-2, wobei Z-1 und Z-2 folgende Bedeutung haben:

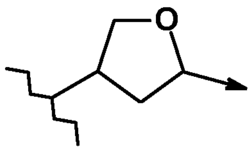
Z-1

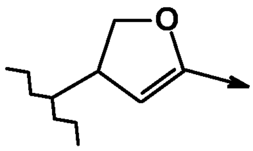
Z-2

worin der Pfeil jeweils für eine Bindung zur Gruppe C=O der Formel (I) steht;
$X^2$, $X^4$ und $X^6$ bedeuten Wasserstoff;
$X^3$ und $X^5$ bedeuten unabhängig voneinander Wasserstoff, Fluor oder Chlor.

**3.** Herbizide Zusammensetzung gemäß Anspruch 1, wobei die Komponente (A) der allgemeinen Formel (I) eine der Verbindungen A1 bis A6 ist:

A1
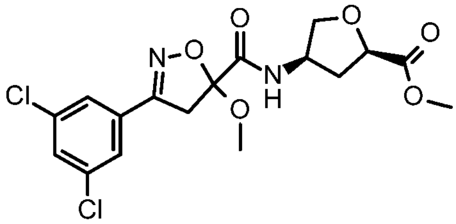
rel-(2R,4R)

A2
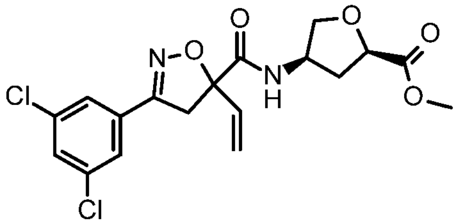
rel-(2R,4R)

A3
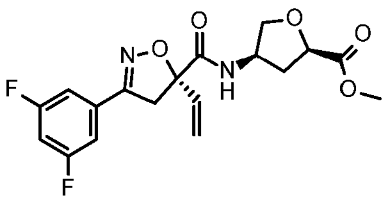
rel-(2R,4R)

A4
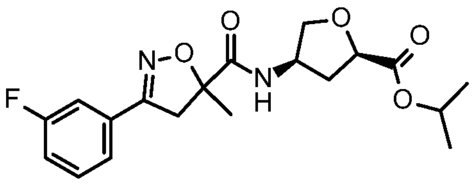
rel-(2R,4R)

A5 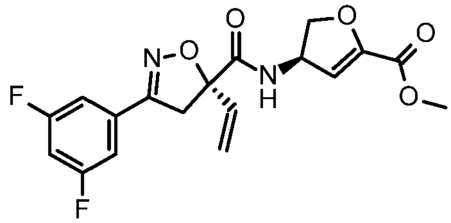

A6 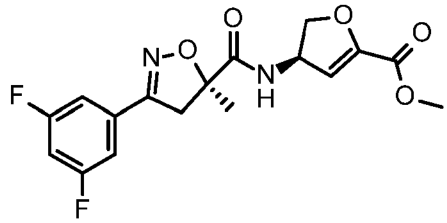

4. Herbizide Zusammensetzung gemäß Anspruch 1,2 oder 3, wobei die Komponente (B) ) für eine oder mehrere Verbindungen der allgemeinen Formel (II) oder deren agrochemisch verträglichen Salze [Komponente (B)], ausgewählt aus B1, B24, B29 oder B30 steht.

5. Herbizide Zusammensetzung gemäß einem der Ansprüche 1 bis 4, wobei die Wirkstoffkomponenten (A) und (B) in einem Gewichtsverhältnis von 1:300 bis 400:1 enthalten sind.

6. Herbizide Zusammensetzung gemäß einem der Ansprüche 1 bis 4, wobei die Wirkstoffkomponenten (A) und (B) in einem Gewichtsverhältnis von 1:30 bis 30:1 enthalten sind.

7. Herbizide Zusammensetzung gemäß einem der Ansprüche 1 bis 6, wobei ein oder mehrere weitere Komponenten aus der Gruppe enthaltend Pflanzenschutzmittelwirkstoffe anderer Art enthalten sind.

8. Herbizides Mittel gemäß einem der Ansprüche 1 bis 7, enthaltend ein oder mehrere im Pflanzenschutz übliche Zusatzstoffe.

9. Verfahren zur Bekämpfung von Schadpflanzen oder zur Wachstumsregulierung von Pflanzen, wobei die Wirkstoffkomponenten der herbiziden Zusammensetzung gemäß einem der Ansprüche 1 bis 8 auf die Pflanzen, Pflanzenteile, Pflanzensamen oder die Anbaufläche appliziert werden.

10. Verfahren gemäß Anspruch 9, wobei die Wirkstoffkomponenten der herbiziden Zusammensetzung gemeinsam oder getrennt im Vorauflauf, Nachauflauf oder im Vor- und Nachauflauf auf die Pflanzen, Pflanzenteile, Pflanzensamen oder die Anbaufläche appliziert werden.

11. Verfahren gemäß Anspruch 10, wobei die Herbizidkomponente (A) in einer Aufwandmenge von 0,5 bis 800 g a.i./ha appliziert wird.

12. Verfahren gemäß Anspruch 10, wobei die Herbizidkomponente (B) in einer Aufwandmenge von 0,5 bis 800 g a.i./ha appliziert wird.

13. Verfahren nach einem der Ansprüche 9 bis 12, worin die Pflanzenkulturen gentechnisch verändert oder durch Mutationsselektion erhalten wurden.

14. Verwendung der herbiziden Zusammensetzung gemäß einem der Ansprüche 1 bis 7 zur Bekämpfung von Schadpflanzen oder zur Wachstumsregulierung von Pflanzen.

15. Verwendung nach Anspruch 14 zur Bekämpfung von herbizid-resistenten Schadpflanzen.

Europäisches Patentamt
European Patent Office
Office européen des brevets

# EUROPÄISCHER RECHERCHENBERICHT

Nummer der Anmeldung
EP 24 22 2110

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2021/185806 A1 (BAYER AG [DE]) 23. September 2021 (2021-09-23) * das ganze Dokument * * Tabelle 3 * | 1-15 | INV. A01N43/80 A01N47/06 A01P13/00 |
| A | SCUTT JAMES NICHOLAS ET AL: "Metproxybicyclone, a Novel Carbocyclic Aryl-dione Acetyl-CoA Carboxylase-Inhibiting Herbicide for the Management of Sensitive and Resistant Grass Weeds", JOURNAL OF AGRICULTURAL AND FOOD CHEMISTRY, Bd. 72, Nr. 39, 2. Oktober 2024 (2024-10-02), Seiten 21380-21392, XP093243526, US ISSN: 0021-8561, DOI: 10.1021/acs.jafc.4c02729 Gefunden im Internet: URL:https://pubs.acs.org/doi/pdf/10.1021/acs.jafc.4c02729> * das ganze Dokument * | 1-15 | |
| X | WO 2020/114932 A1 (BAYER AG [DE]) 11. Juni 2020 (2020-06-11) * Anspruch 1 * | 1-15 | RECHERCHIERTE SACHGEBIETE (IPC) A01N A01P |
| X | WO 2024/041925 A1 (BAYER AG [DE]) 29. Februar 2024 (2024-02-29) * Anspruch 1 * | 1-15 | |

Der vorliegende Recherchenbericht wurde für alle Patentansprüche erstellt

1

| Recherchenort | Abschlußdatum der Recherche | Prüfer |
|---|---|---|
| München | 25. April 2025 | Antoni, Frauke |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 24 22 2110

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-04-2025

| Im Recherchenbericht angeführtes Patentdokument | Datum der Veröffentlichung | Mitglied(er) der Patentfamilie | Datum der Veröffentlichung |
|---|---|---|---|
| WO 2021185806 A1 | 23-09-2021 | AU 2021236873 A1 | 22-09-2022 |
| | | BR 112022017311 A2 | 11-10-2022 |
| | | CA 3175744 A1 | 23-09-2021 |
| | | CL 2022002507 A1 | 31-03-2023 |
| | | CN 115279753 A | 01-11-2022 |
| | | CO 2022013590 A2 | 11-10-2022 |
| | | EC SP22073468 A | 31-10-2022 |
| | | EP 4121427 A1 | 25-01-2023 |
| | | IL 296212 A | 01-11-2022 |
| | | JP 2023518767 A | 08-05-2023 |
| | | KR 20220155358 A | 22-11-2022 |
| | | PH 12022552488 A1 | 12-02-2024 |
| | | TW 202202494 A | 16-01-2022 |
| | | US 2023104990 A1 | 06-04-2023 |
| | | WO 2021185806 A1 | 23-09-2021 |
| WO 2020114932 A1 | 11-06-2020 | AR 117260 A1 | 21-07-2021 |
| | | AU 2019392518 A1 | 24-06-2021 |
| | | BR 112021010094 A2 | 24-08-2021 |
| | | CA 3122156 A1 | 11-06-2020 |
| | | CL 2021001469 A1 | 19-11-2021 |
| | | CN 113347882 A | 03-09-2021 |
| | | DK 3890488 T3 | 03-04-2023 |
| | | EA 202191563 A1 | 28-10-2021 |
| | | EP 3890488 A1 | 13-10-2021 |
| | | ES 2941285 T3 | 19-05-2023 |
| | | FI 3890488 T3 | 30-03-2023 |
| | | HR P20230284 T1 | 12-05-2023 |
| | | HU E061391 T2 | 28-06-2023 |
| | | JP 2022511487 A | 31-01-2022 |
| | | KR 20210102295 A | 19-08-2021 |
| | | LT 3890488 T | 11-04-2023 |
| | | PH 12021551340 A1 | 13-12-2021 |
| | | PL 3890488 T3 | 02-05-2023 |
| | | PT 3890488 T | 11-04-2023 |
| | | SI 3890488 T1 | 31-05-2023 |
| | | UA 129190 C2 | 05-02-2025 |
| | | US 2023032505 A1 | 02-02-2023 |
| | | WO 2020114932 A1 | 11-06-2020 |
| | | ZA 202104713 B | 18-12-2024 |
| WO 2024041925 A1 | 29-02-2024 | AR 130313 A1 | 27-11-2024 |
| | | AU 2023328695 A1 | 13-03-2025 |
| | | CN 119744119 A | 01-04-2025 |
| | | IL 318973 A | 01-04-2025 |
| | | WO 2024041925 A1 | 29-02-2024 |

EPO FORM P0461

Für nähere Einzelheiten zu diesem Anhang : siehe Amtsblatt des Europäischen Patentamts, Nr.12/82

## ANHANG ZUM EUROPÄISCHEN RECHERCHENBERICHT ÜBER DIE EUROPÄISCHE PATENTANMELDUNG NR.

EP 24 22 2110

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-04-2025

| Im Recherchenbericht angeführtes Patentdokument | Datum der Veröffentlichung | Mitglied(er) der Patentfamilie | Datum der Veröffentlichung |
|---|---|---|---|
| ------------------------------------------------------------------ | | | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2012130798 A
- WO 2018228985 A1
- WO 2019145245 A1
- WO 2015197468 A
- EP 0221044 A
- EP 0131624 A
- WO 9211376 A
- WO 9214827 A
- WO 9119806 A
- EP 0257993 A
- US 5013659 A
- EP 0142924 A
- EP 0193259 A
- WO 9113972 A


### In der Beschreibung aufgeführte Nicht-Patentliteratur


- *Weed Research*, 1986, vol. 26, 441-445
- The Pesticide Manual. The British Crop Protection Council and the Royal Soc. of Chemistry, 2006
- *CHEMICAL ABSTRACTS*, 1398-61-4
- *CHEMICAL ABSTRACTS*, 9012-76-4
- **S.R. COLBY**. Calculating Synergistic and Antagonistic Responses of Herbicide Combination. *Weeds*, 1967, vol. 15, 20-22
- Gene Transfer to Plants. Springer Lab Manual, 1995
- **CHRISTOU**. *Trends in Plant Science*, 1996, vol. 1, 423-431
- **B. SAMBROOK et al.** Molecular Cloning, A Laboratory Manual. Cold Spring Harbor Laboratory Press, 1989
- **WINNACKER**. Gene und Klone. VCH, 1996
- **BRAUN et al.** *EMBO J.*, 1992, vol. 11, 3219-3227
- **WOLTER et al.** *Proc. Natl. Acad. Sci. USA*, 1988, vol. 85, 846-850
- **SONNEWALD et al.** *Plant J.*, 1991, vol. 1, 95-106
- **WINNACKER-KÜCHLER**. Chemische Technologie. C. Hanser Verlag, 1986, vol. 7
- **VAN VALKENBURG**. Pesticides Formulations. Marcel Dekker, 1973
- **K. MARTENS**. Spray Drying Handbook. G. Goodwin Ltd., 1979
- **WATKINS**. Handbook of Insecticide Dust Diluents and Carriers. Darland Books
- **H.V. OLPHEN**. Introduction to Clay Colloid Chemistry. J. Wiley & Sons
- **MARSDEN**. Solvents Guide. Interscience, 1963
- **MCCUTCHEON'S**. Detergents and Emulsifiers Annual. MC Publ. Corp
- **SISLEY** ; **WOOD**. Encyclopedia of Surface Active Egents. Chem. Publ. Co. Inc., 1964
- **SCHÖNFELDT**. Grenzflächenaktive Äthylenoxidaddukte. Wiss. Verlagsgesellschaft, 1976
- **S. R. COLBY**. *Weeds*, 1967, vol. 15, 20-22